(19) Europäisches Patentamt
European Patent Office
Office européen des brevets

(11) **EP 4 131 461 A1**

(12) **EUROPEAN PATENT APPLICATION**
published in accordance with Art. 153(4) EPC

(43) Date of publication:
**08.02.2023 Bulletin 2023/06**

(21) Application number: **21775779.8**

(22) Date of filing: **25.03.2021**

(51) International Patent Classification (IPC):
***H01M 4/13*** *(2010.01)* ***H01M 4/139*** *(2010.01)*
***H01M 4/62*** *(1974.07)* ***H01M 10/052*** *(2010.01)*
***H01M 10/0562*** *(2010.01)* ***H01M 10/0585*** *(2010.01)*
***H01B 1/06*** *(1968.09)* ***H01B 1/10*** *(1968.09)*

(52) Cooperative Patent Classification (CPC):
**H01B 1/06; H01B 1/10; H01M 4/13; H01M 4/139; H01M 4/62; H01M 10/052; H01M 10/0562; H01M 10/0585;** Y02E 60/10; Y02P 70/50

(86) International application number:
**PCT/JP2021/012541**

(87) International publication number:
**WO 2021/193826 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2020 JP 2020059085**
**09.10.2020 JP 2020171567**

(71) Applicant: **FUJIFILM Corporation**
**Tokyo 106-8620 (JP)**

(72) Inventors:
- **KUSHIDA, Yo**
  **Ashigarakami-gun, Kanagawa 258-8577 (JP)**
- **YASUDA, Koji**
  **Ashigarakami-gun, Kanagawa 258-8577 (JP)**
- **MOCHIZUKI, Hiroaki**
  **Ashigarakami-gun, Kanagawa 258-8577 (JP)**

(74) Representative: **HGF**
**HGF Limited**
**1 City Walk**
**Leeds LS11 9DX (GB)**

# (54) INORGANIC-SOLID-ELECTROLYTE-CONTAINING COMPOSITION, ALL-SOLID-STATE SECONDARY BATTERY SHEET, ALL-SOLID-STATE SECONDARY BATTERY, AND METHOD FOR MANUFACTURING ALL-SOLID-STATE SECONDARY BATTERY SHEET AND ALL SOLID-STATE SECONDARY BATTERY

(57) There is provided an inorganic solid electrolyte-containing composition containing an inorganic solid electrolyte and a polymer binder, in which the polymer binder contains a specific polymer, and the weight-average molecular weight and content of the polymer binder satisfy relationships represented by specific expressions. There are also provided a sheet for an all-solid state secondary battery and an all-solid state secondary battery, in which this inorganic solid electrolyte-containing composition is used, and manufacturing methods for a sheet for an all-solid state secondary battery, and an all-solid state secondary battery.

FIG. 1

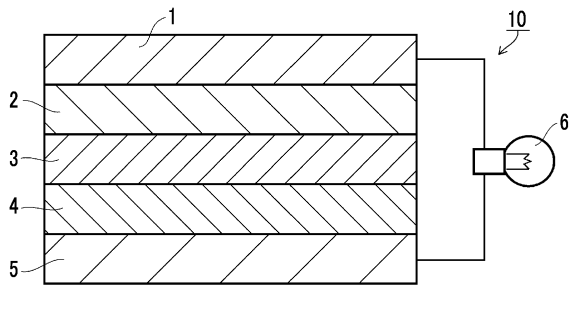


EP 4 131 461 A1

## Description

## BACKGROUND OF THE INVENTION

1. Field of the Invention

The present invention relates to an inorganic solid electrolyte-containing composition, a sheet for an all-solid state secondary battery, and an all-solid state secondary battery, and manufacturing methods for a sheet for an all-solid state secondary battery and an all-solid state secondary battery.

2. Description of the Related Art

In an all-solid state secondary battery, all of a negative electrode, an electrolyte, and a positive electrode consist of solid, and the all-solid state secondary battery can greatly improve safety and reliability, which are said to be problems to be solved in a battery in which an organic electrolytic solution is used. It is also said to be capable of extending the battery life. Furthermore, all-solid state secondary batteries can be provided with a structure in which the electrodes and the electrolyte are directly disposed in series. As a result, it becomes possible to increase the energy density to be high as compared with a secondary battery in which an organic electrolytic solution is used, and thus the application to electric vehicles, large-sized storage batteries, and the like is anticipated.

In such an all-solid state secondary battery, examples of the substance that forms constitutional layers (a solid electrolyte layer, a negative electrode active material layer, a positive electrode active material layer, and the like) include an inorganic solid electrolyte and an active material. In recent years, this inorganic solid electrolyte, particularly an oxide-based inorganic solid electrolyte or a sulfide-based inorganic solid electrolyte is expected as an electrolyte material having a high ion conductivity comparable to that of the organic electrolytic solution.

As the material that forms a constitutional layer (a constitutional layer forming material) of an all-solid state secondary battery, a material containing the above-described inorganic solid electrolyte and the like has been proposed. For example, JP2019-67523A discloses a solid electrolyte composition containing an inorganic solid electrolyte (A) having an ion conductivity of a metal belonging to Group 1 or Group 2 of the periodic table, an organic compound (B), and a dispersion medium (E), in which the organic compound (B) has a nonionic monovalent halogen atom other than a fluorine atom, and the organic compound (B) has a melting point of 25°C or higher. Further, WO2017/018456A discloses a solid electrolyte composition containing at least one dendritic polymer selected from the group consisting of a dendron, a dendrimer, and a hyper-branched polymer, and an inorganic solid electrolyte having an ion conductivity of a metal belonging to Group 1 or Group 2 of the periodic table, in which the dendritic polymer has a specific functional group.

## SUMMARY OF THE INVENTION

In the manufacture of an all-solid state secondary battery, in the manufacturing process, the occurrence of cracking and breakage due to poor adhesion between layers and concentration of stress are generally inevitable in a case where layers containing solid particle materials (an inorganic solid electrolyte, an active material, a conductive auxiliary agent, and the like) are laminated and pressed. In the method of suppressing this occurrence and improving the yield of the all-solid state secondary battery, it is required that a layer containing a solid particle material has excellent surface smoothness (the coating surface of a constitutional layer forming material should be flat and thus have good surface properties).

Further, in recent years, research and development for weight reduction or the like of an electric vehicle which is being put into practical use, are rapidly progressing, and the demand for battery performance is further increasing in an all-solid state secondary battery as a next-generation battery. As one of the required performances, it is required that the all-solid state secondary battery achieves a high ion conductivity not only at room temperature but also at low temperatures, in order to reduce the weight of an electric vehicle by eliminating the need to install a temperature control module and the like for an all-solid state secondary battery. However, JP2019-67523A and WO2017/018456A do not describe these points.

An object of the present invention is to provide an inorganic solid electrolyte-containing composition capable of realizing a sheet for an all-solid state secondary battery, which includes a constitutional layer having excellent surface smoothness (hereinafter, also referred to as surface properties) and excellent ion conductivity in a temperature range from low temperature to normal temperature (for example, 0°C to 25°C), as well as an all-solid state secondary battery having excellent ion conductivity in a temperature range from low temperature to normal temperature, into which a constitutional layer having excellent surface smoothness is incorporated. In addition, another object of the present invention is to provide a sheet for an all-solid state secondary battery and an all-solid state secondary battery, and manufacturing methods for a sheet for an all-solid state secondary battery and an all-solid state secondary battery, in

which the above inorganic solid electrolyte-containing composition is used.

As a result of various studies focusing on the relationship between the inorganic solid electrolyte and the like and the binder, the inventors of the present invention found that in a case where in an inorganic solid electrolyte-containing composition, a polymer binder including a polymer binder (at least one of polyester, a (meth)acrylic polymer, or a vinyl polymer) having a specific weight-average molecular weight (Mw) is contained by 0.01% to 0.8% by mass of the content in the total solid content contained in the composition, and the product of Mw and the content of this polymer binder is set to be equal to or smaller than a specific value, it is possible to realize a constitutional layer having excellent surface smoothness and excellent ion conductivity in a temperature range from low temperature to normal temperature. The present invention has been completed through further studies based on these findings.

That is, the above problems have been solved by the following means.

<1> An inorganic solid electrolyte-containing composition comprising:

an inorganic solid electrolyte (A) having an ion conductivity of a metal belonging to Group 1 or Group 2 in the periodic table; and
a polymer binder (B),
in which the polymer binder (B) contains at least one of polyester, a vinyl polymer, or a (meth)acrylic polymer, and a weight-average molecular weight and a content of the polymer binder (B) satisfy all relationships represented by the following Expressions (1) to (3),

$$\text{Expression (1) } 0.01 \leq \alpha \leq 0.8$$

$$\text{Expression (2) } \mathrm{Mw} \geq 2{,}000$$

$$\text{Expression (3) } \mathrm{Mw} \times \alpha \leq 9.3 \times 10^4$$

in the expressions, $\alpha$ represents a proportion (% by mass) of the content of the polymer binder (B) in 100% by mass of a total solid content contained in the inorganic solid electrolyte-containing composition, and Mw represents a weight-average molecular weight of the polymer binder (B).

<2> The inorganic solid electrolyte-containing composition according to <1>, in which the polymer binder (B) contains at least one of a vinyl polymer or a (meth)acrylic polymer.
<3> The inorganic solid electrolyte-containing composition according to <1> or <2>, in which a polymer that forms the polymer binder (B) contains a constitutional component having a hydrocarbon group having 14 or more carbon atoms in a side chain.
<4> The inorganic solid electrolyte-containing composition according to any one of <1> to <3>, in which the vinyl polymer and the (meth)acrylic polymer have a residue of at least one polymerization initiator of a chain transfer agent containing a sulfur atom or an organic peroxide polymerization initiator, at a main chain terminal of the polymer.
<5> The inorganic solid electrolyte-containing composition according to any one of <1> to <4>, in which the vinyl polymer and the (meth)acrylic polymer have a structure represented by Formula (S3) at a main chain terminal of the polymer,

$$\mathrm{LL}\left(\!-\mathrm{L}^6-\mathrm{L}^7-*\right)_n \quad \text{Formula (S3)}$$

in the formula, n is an integer of 3 to 6,

LL represents an n-valent branched group,
$L^6$ represents a divalent linking group,
$L^7$ represents an oxygen atom or a sulfur atom, and.
* represents a bonding site to a polymer main chain.

<6> The inorganic solid electrolyte-containing composition according to any one of <1> to <5>, in which the inorganic solid electrolyte (A) is a sulfide-based inorganic solid electrolyte.

<7> The inorganic solid electrolyte-containing composition according to any one of <1> to <6>, further comprising an active material (E).
<8> A sheet for an all-solid state secondary battery, comprising a layer formed of the inorganic solid electrolyte-containing composition according to any one of <1> to <7>.
<9> An all-solid state secondary battery comprising:

a positive electrode active material layer;
a negative electrode active material layer; and
a solid electrolyte layer that is interposed between the positive electrode active material layer and the negative electrode active material layer,
in which at least one layer of the positive electrode active material layer, the negative electrode active material layer, or the solid electrolyte layer is a layer formed of the inorganic solid electrolyte-containing composition according to any one of <1> to <7>.

<10> A manufacturing method for a sheet for an all-solid state secondary battery, the manufacturing method comprising carrying out coating with the inorganic solid electrolyte-containing composition according to any one of <1> to <7>.
<11> A manufacturing method for an all-solid state secondary battery, the manufacturing method comprising manufacturing an all-solid state secondary battery through the manufacturing method according to <10>.

In a case of using the inorganic solid electrolyte-containing composition of the present invention as a constitutional layer forming material of an all-solid state secondary battery, it is possible to realize a constitutional layer having excellent surface smoothness and excellent ion conductivity in a temperature range from low temperature to normal temperature. Further, the sheet for an all-solid state secondary battery of the present invention includes a constitutional layer formed of the above-described inorganic solid electrolyte-containing composition, which has excellent surface smoothness and excellent ion conductivity in a temperature range from low temperature to normal temperature. Further, the all-solid state secondary battery of the present invention has a constitutional layer formed of the above-described inorganic solid electrolyte-containing composition, which has excellent surface smoothness, and it has excellent ion conductivity in a temperature range from low temperature to normal temperature. Further, according to the manufacturing method of the present invention, it is possible to provide a sheet for an all-solid state secondary battery and an all-solid state secondary battery, in which the above inorganic solid electrolyte-containing composition is used.
The above-described and other characteristics and advantages of the present invention will be further clarified by the following description with appropriate reference to the accompanying drawing.

## BRIEF DESCRIPTION OF THE DRAWINGS

Fig. 1 is a vertical cross-sectional view schematically illustrating an all-solid state secondary battery according to a preferred embodiment of the present invention.
Fig. 2 is a vertical cross-sectional view schematically illustrating a coin-type all-solid state secondary battery prepared in Examples.
Fig. 3 is a graph in which a content of a polymer binder (B) in a total solid content contained in a part of an inorganic solid electrolyte-containing composition prepared in each of Examples and Comparative Examples (a part of each of the inorganic solid electrolyte-containing composition shown in Tables 2-1 and 2-4) is on the lateral axis and Mw of the polymer binder (B) is on the vertical axis.
Fig. 4 is a view illustrating layer thickness measurement points in a surface smoothness test in Examples.

## DESCRIPTION OF THE PREFERRED EMBODIMENTS

In the present invention, numerical ranges indicated using "to" include numerical values before and after the "to" as the lower limit value and the upper limit value.
In the present invention, the expression of a compound (for example, in a case where a compound is represented by an expression in which "compound" is attached to the end) refers to not only the compound itself but also a salt or an ion thereof. In addition, this expression also refers to a derivative obtained by modifying a part of the compound, for example, by introducing a substituent into the compound within a range where the effects of the present invention are not impaired.
In the present invention, (meth)acryl means one or both of acryl and methacryl. The same applies to (meth)acrylate.

In the present invention, a substituent, a linking group, or the like (hereinafter, referred to as a substituent or the like), which is not specified regarding whether to be substituted or unsubstituted, may have an appropriate substituent. Accordingly, even in a case where a YYY group is simply described in the present invention, this YYY group includes not only an aspect having a substituent but also an aspect not having a substituent. The same shall be applied to a compound that is not specified in the present specification regarding whether to be substituted or unsubstituted. Examples of the preferred examples of the substituent include a substituent Z described below.

In the present invention, in a case where a plurality of substituents or the like represented by a specific reference numeral are present or a plurality of substituents or the like are simultaneously or alternatively defined, the respective substituents or the like may be the same or different from each other. In addition, unless specified otherwise, in a case where a plurality of substituents or the like are adjacent to each other, the substituents may be linked or fused to each other to form a ring.

In the present invention, the polymer means a polymer; however, it is synonymous with a so-called polymeric compound. The polymer binder means a binder constituted of a polymer and includes a polymer itself and a binder formed by containing a polymer.

[Inorganic solid electrolyte-containing composition]

An inorganic solid electrolyte-containing composition according to the embodiment of the present invention contains an inorganic solid electrolyte (A) having an ion conductivity of a metal belonging to Group 1 or Group 2 in the periodic table, and a polymer binder (B),

in which the polymer binder (B) contains at least one of polyester, a vinyl polymer, or a (meth)acrylic polymer, and a weight-average molecular weight and a content of the polymer binder (B) satisfy all relationships represented by the following Expressions (1) to (3),

$$\text{Expression (1)}\ 0.01 \leq \alpha \leq 0.8$$

$$\text{Expression (2)}\ Mw \geq 2{,}000$$

$$\text{Expression (3)}\ Mw \times \alpha \leq 9.3 \times 10^4$$

in the expressions, $\alpha$ represents a proportion (% by mass) of the content of the polymer binder (B) in 100% by mass of a total solid content contained in the inorganic solid electrolyte-containing composition, and Mw represents a weight-average molecular weight of the polymer binder (B).

In a case where the polymer binder (B) contains two or three of polyester, a vinyl polymer, and a (meth)acrylic polymer, the "weight-average molecular weight of the polymer binder (B)" is a weight-average molecular weight obtained by mixing all contained polymers and subjecting them to GPC described later.

"Content of polymer binder (B)" is the total of the polyester, the vinyl polymer, and the (meth)acrylic polymer.

In the present invention, in a case where the inorganic solid electrolyte-containing composition contains a polymer binder other than the polymer binder (B), it suffices that the polymer binder (B) satisfies Expressions (1) to (3).

In a case where the inorganic solid electrolyte-containing composition according to the embodiment of the present invention is used as a constitutional layer forming material, it is possible to realize a sheet for an all-solid state secondary battery, having a constitutional layer excellent in surface smoothness, as well as an all-solid state secondary battery having low resistance in a temperature range from low temperature to normal temperature.

Although the details of the reason for the above are not yet clear, they are conceived to be as follows.

The inorganic solid electrolyte-containing composition according to the embodiment of the present invention contains a polymer binder formed of at least one of polyester, a vinyl polymer, and a (meth)acrylic polymer in a small content $\alpha$ specified in Expression (1). Therefore, it is conceived that the amount of the insulating component in the inorganic solid electrolyte-containing composition is reduced, and in a case of forming a constitutional layer, the entire surface of the solid particles is difficult to be covered and good interfacial contact can be secured while maintaining the strong adhesiveness between the solid particles by the polymer binder. The above-described good interfacial contact is not impaired even in a state where the molecular motion of the polymer is reduced in a low temperature environment, and high ion conductivity in a normal temperature environment can be maintained even in a low temperature environment.

In addition to this, in a case of Mw of 2,000 or more, the entanglement between molecules increases, and thus the strong adhesiveness of the solid particles can be maintained. Further, in a case where the inorganic solid electrolyte-containing composition according to the embodiment of the present invention contains a dispersion medium, the spread of the molecular chain of the polymer in the dispersion medium becomes large, and the dispersibility is improved.

As described above, in a case of, after defining Mw and the content $\alpha$, further setting Mw and $\alpha$ in a specific relationship, in particular, setting Mw $\times$ $\alpha$ to $9.3 \times 10^4$ or less as a parameter corresponding to the volume of the polymer binder, it is possible to make the polymer binder uniformly present on the surface of the constitutional layer (reduce the unevenness in volume) while maintaining the above-described good interfacial contact in a case where forming a constitutional layer, and it is possible to improve the surface smoothness of the constitutional layer.

In terms of the surface smoothness of the sheet for an all-solid state secondary battery and the ion conductivity of the all-solid state secondary battery, $\alpha$ is preferably 0.6% by mass or less, more preferably 0.5% by mass or less, still more preferably 0.3% by mass or less, and particularly preferably 0.2% by mass or less. In addition, $\alpha$ is preferably 0.05% by mass or more, more preferably 0.1 or more, and still more preferably 0.15 or more.

In terms of the surface smoothness of the sheet for an all-solid state secondary battery and the ion conductivity of the all-solid state secondary battery, Mw is preferably $8.0 \times 10^6$ or less, more preferably $8.0 \times 10^5$ or less, and still more preferably $2.6. \times 10^5$ or less. In addition, Mw is preferably 2,200 or more.

Expression (3) can be derived as follows.

From Mw of the polymer binder contained in inorganic solid electrolyte-containing compositions K-12, K-13, Kc12, and Kc14 prepared in Examples below, as well as the content thereof in the composition the point A that bisects the line segment connecting K-13 and Kc 14 and the point B that bisects the line segment connecting K-12 and Kc12 are determined, with $\alpha$ on the lateral axis and Mw on the vertical axis. The sufficient surface smoothness and the ion conductivity in the low temperature range can be obtained by using the polymer binders corresponding to the points A and B. An approximate curve that shows an inverse proportional relationship is created for points A and B according to the least squares method, from which Expression (3) can be derived. The above-described effect of the present invention is exhibited in a case where the polymer binder (B) satisfies the relationships represented by Expressions (1) to (3), which is hardly affected by the kind of solid particles, and thus it is possible to similarly apply Expression (3) to a composition for an electrode as well.

The lower limit value of Mw $\times$ $\alpha$ defined by Expression (3) is determined by Mw defined by Formula (2) and $\alpha$ defined by Expression (1), and it is sufficient to be 20 or more and is appropriately set.

Expression (3) is preferably Expression (3a).

$$\text{Expression (3a)} \quad \mathrm{Mw} \times \alpha^{-0.63} \leq 9.0 \times 10^4$$

Expression (3a) is a curve that passes through the points corresponding to K-12 and K-13 in Fig. 3, and it is derived from Mw and $\alpha$ of the polymer binder contained in K-12 and K-13 by an exponential approximation according to the least squares method.

Expression (3) is also preferably Expression (3b).

$$\text{Expression (3b)} \quad \mathrm{Mw} \leq -4.4 \times 10^5 \times \alpha + 3.4 \times 10^5$$

Expression (3b) can be derived as follows.

From Mw and $\alpha$ of the polymer binder contained in inorganic solid electrolyte-containing compositions K-12, K-13, and K-15 prepared in Examples below, By carrying out a linear approximation according to the least squares method, Expression (3b) can be derived (see Fig. 3).

The inorganic solid electrolyte-containing composition according to the embodiment of the present invention is preferably used a material (a constitutional layer forming material) for forming a solid electrolyte layer or an active material layer, where the material is for a sheet for an all-solid state secondary battery (including an electrode sheet for an all-solid state secondary battery) or an all-solid state secondary battery.

The inorganic solid electrolyte-containing composition according to the embodiment of the present invention is preferably a non-aqueous composition. In the present invention, the non-aqueous composition includes not only an aspect including no moisture but also an aspect where the moisture content (also referred to as the "water content") is preferably 500 ppm or less. In the non-aqueous composition, the moisture content is more preferably 200 ppm or less, still more preferably 100 ppm or less, and particularly preferably 50 ppm or less. In a case where the inorganic solid electrolyte-containing composition is a non-aqueous composition, it is possible to suppress the deterioration of the inorganic solid electrolyte. The water content refers to the water amount (the mass proportion to the inorganic solid electrolyte-containing composition) in the inorganic solid electrolyte-containing composition, and specifically, it is a value

determined by filtration through a 0.02 μm membrane filter and then by Karl Fischer titration.

The inorganic solid electrolyte-containing composition according to the aspect of the present invention includes an aspect including not only an inorganic solid electrolyte but also an active material, as well as a conductive auxiliary agent or the like (the composition in this aspect may be referred to as the "composition for an electrode").

Hereinafter, components that are contained and components that can be contained in the inorganic solid electrolyte-containing composition according to the embodiment of the present invention will be described.

<Inorganic solid electrolyte>

The inorganic solid electrolyte-containing composition according to the embodiment of the present invention contains an inorganic solid electrolyte.

In the present invention, the inorganic solid electrolyte is an inorganic solid electrolyte, and the solid electrolyte refers to a solid-form electrolyte capable of migrating ions therein. The inorganic solid electrolyte is clearly distinguished from the organic solid electrolyte (the polymeric electrolyte such as polyethylene oxide (PEO) or the organic electrolyte salt such as lithium bis(trifluoromethanesulfonyl)imide (LiTFSI)) since the inorganic solid electrolyte does not include any organic substance as a principal ion-conductive material. In addition, the inorganic solid electrolyte is solid in a steady state and thus, typically, is not dissociated or liberated into cations and anions. Due to this fact, the inorganic solid electrolyte is also clearly distinguished from inorganic electrolyte salts of which cations and anions are dissociated or liberated in electrolytic solutions or polymers ($LiPF_6$, $LiBF_4$, lithium bis(fluorosulfonyl)imide (LiFSI), LiCl, and the like). The inorganic solid electrolyte is not particularly limited as long as it has an ion conductivity of a metal belonging to Group 1 or Group 2 in the periodic table and generally does not have electron conductivity. In a case where the all-solid state secondary battery according to the embodiment of the present invention is a lithium ion battery, the inorganic solid electrolyte preferably has an lithium ion conductivity.

As the inorganic solid electrolyte, a solid electrolyte material that is typically used for an all-solid state secondary battery can be appropriately selected and used. Examples of the inorganic solid electrolyte include (i) a sulfide-based inorganic solid electrolyte, (ii) an oxide-based inorganic solid electrolyte, (iii) a halide-based inorganic solid electrolyte, and (iv) a hydride-based inorganic solid electrolyte. The sulfide-based inorganic solid electrolytes are preferably used from the viewpoint that it is possible to form a more favorable interface between the active material and the inorganic solid electrolyte.

(i) Sulfide-based inorganic solid electrolyte

The sulfide-based inorganic solid electrolyte is preferably an electrolyte that contains a sulfur atom, has an ion conductivity of a metal belonging to Group 1 or Group 2 in the periodic table, and has electron-insulating properties. The sulfide-based inorganic solid electrolytes are preferably inorganic solid electrolytes which, as elements, contain at least Li, S, and P and have an lithium ion conductivity, but the sulfide-based inorganic solid electrolytes may also include elements other than Li, S, and P depending on the purposes or cases.

Examples of the sulfide-based inorganic solid electrolyte include a lithium ion-conductive inorganic solid electrolyte satisfying the composition represented by Formula (S1).

$$L_{a1}M_{b1}P_{c1}S_{d1}A_{e1} \qquad \text{Formula (S1)}$$

In the formula, L represents an element selected from Li, Na, or K and is preferably Li. M represents an element selected from B, Zn, Sn, Si, Cu, Ga, Sb, Al, or Ge. A represents an element selected from I, Br, Cl, or F. a1 to e1 represent the compositional ratios between the respective elements, and a1:b1:c1:d1:e1 satisfies 1 to 12:0 to 5:1:2 to 12:0 to 10. a1 is preferably 1 to 9 and more preferably 1.5 to 7.5. b1 is preferably 0 to 3 and more preferably 0 to 1. d1 is preferably 2.5 to 10 and more preferably 3.0 to 8.5. e1 is preferably 0 to 5 and more preferably 0 to 3.

The compositional ratios between the respective elements can be controlled by adjusting the amounts of raw material compounds blended to manufacture the sulfide-based inorganic solid electrolyte as described below.

The sulfide-based inorganic solid electrolytes may be non-crystalline (glass) or crystallized (made into glass ceramic) or may be only partially crystallized. For example, it is possible to use Li-P-S-based glass containing Li, P, and S or Li-P-S-based glass ceramic containing Li, P, and S.

The sulfide-based inorganic solid electrolytes can be manufactured by a reaction of at least two or more raw materials of, for example, lithium sulfide ($Li_2S$), phosphorus sulfide (for example, diphosphorus pentasulfide ($P_2S_5$)), a phosphorus single body, a sulfur single body, sodium sulfide, hydrogen sulfide, lithium halides (for example, LiI, LiBr, and LiCl), or sulfides of an element represented by M (for example, $SiS_2$, SnS, and $GeS_2$).

The ratio of $Li_2S$ to $P_2S_5$ in Li-P-S-based glass and Li-P-S-based glass ceramic is preferably 60:40 to 90:10 and more preferably 68:32 to 78:22 in terms of the molar ratio, $Li_2S$:$P_2S_5$. In a case where the ratio between $Li_2S$ and

$P_2S_5$ is set in the above-described range, it is possible to increase an lithium ion conductivity. Specifically, the lithium ion conductivity can be preferably set to $1 \times 10^{-4}$ S/cm or more and more preferably set to $1 \times 10^{-3}$ S/cm or more. The upper limit is not particularly limited but realistically $1 \times 10^{-1}$ S/cm or less.

As specific examples of the sulfide-based inorganic solid electrolytes, combination examples of raw materials will be described below. Examples thereof include $Li_2S$-$P_2S_5$, $Li_2S$-$P_2S_5$-LiCl, $Li_2S$-$P_2S_5$-$H_2S$, $Li_2S$-$P_2S_5$-$H_2S$-LiCl, $Li_2S$-LiI-$P_2S_5$, $Li_2S$-LiI-$Li_2O$-$P_2S_5$, $Li_2S$-LiBr-$P_2S_5$, $Li_2S$-$Li_2O$-$P_2S_5$, $Li_2S$-$Li_3PO_4$-$P_2S_5$, $Li_2S$-$P_2S_5$-$P_2O_5$, $Li_2S$-$P_2S_5$-$SiS_2$, $Li_2S$-$P_2S_5$-$SiS_2$-LiCl, $Li_2S$-$P_2S_5$-SnS, $Li_2S$-$P_2S_5$-$Al_2S_3$, $Li_2S$-$GeS_2$, $Li_2S$-$GeS_2$-ZnS, $Li_2S$-$Ga_2S_3$, $Li_2S$-$GeS_2$-$Ga_2S_3$, $Li_2S$-$GeS_2$-$P_2S_5$, $Li_2S$-$Ge_s2$-$Sb_2S_5$, $Li_2S$-$GeS_2$-$Al_2S_3$, $Li_2S$-$SiS_2$, $Li_2S$-$Al_2S_3$, $Li_2S$-$SiS_2$-$Al_2S_3$, $Li_2S$-$SiS_2$-$P_2S_5$, $Li_2S$-$Si_s2$-$P_2S_5$-LiI, $Li_2S$-$SiS_2$-LiI, $Li_2S$-$SiS_2$-$Li_4SiO_4$, $Li_2S$-$SiS_2$-$Li_3PO_4$, and $Li_{10}GeP_2S_{12}$. The mixing ratio between the individual raw materials does not matter. Examples of the method of synthesizing a sulfide-based inorganic solid electrolyte material using the above-described raw material compositions include an amorphization method. Examples of the amorphization method include a mechanical milling method, a solution method, and a melting quenching method. This because treatments at a normal temperature become possible, and it is possible to simplify manufacturing processes.

(ii) Oxide-based inorganic solid electrolytes

The oxide-based inorganic solid electrolyte is preferably an electrolyte that contains an oxygen atom, has an ion conductivity of a metal belonging to Group 1 or Group 2 in the periodic table, and has electron-insulating properties.

The ion conductivity of the oxide-based inorganic solid electrolyte is preferably $1 \times 10^{-6}$ S/cm or more, more preferably $5 \times 10^{-6}$ S/cm or more, and particularly preferably $1 \times 10^{-5}$ S/cm or more. The upper limit is not particularly limited; however, it is practically $1 \times 10^{-1}$ S/cm or less.

Specific examples of the compound include $Li_{xa}La_{ya}TiO_3$ (LLT) [xa satisfies $0.3 \leq xa \leq 0.7$, and ya satisfies $0.3 \leq ya \leq 0.7$]; $Li_{xb}La_{yb}Zr_{zb}M^{bb}_{mb}O_{nb}$ ($M^{bb}$ is one or more elements selected from Al, Mg, Ca, Sr, V, Nb, Ta, Ti, Ge, In, and Sn, xb satisfies $5 \leq xb \leq 10$, yb satisfies $1 \leq yb \leq 4$, zb satisfies $1 \leq zb \leq 4$, mb satisfies $0 \leq mb \leq 2$, and nb satisfies $5 \leq nb \leq 20$); $Li_{xc}B_{yc}M^{cc}_{zc}O_{nc}$ ($M^{cc}$ is one or more elements selected from C, S, Al, Si, Ga, Ge, In, and Sn, xc satisfies $0 < xc \leq 5$, yc satisfies $0 < yc \leq 1$, zc satisfies $0 < zc \leq 1$, and nc satisfies $0 < nc \leq 6$); $Li_{xd}(Al, Ga)_{yd}(Ti, Ge)_{zd}Si_{ad}P_{md}O_{nd}$ (xd satisfies $1 \leq xd \leq 3$, yd satisfies $0 \leq yd \leq 1$, zd satisfies $0 \leq zd \leq 2$, ad satisfies $0 \leq ad \leq 1$, md satisfies $1 \leq md \leq 7$, and nd satisfies $3 \leq nd \leq 13$.); $Li_{(3-2xe)}M^{ee}_{xe}D^{ee}O$ (xe represents a numerical number of 0 or more and 0.1 or less, and $M^{ee}$ represents a divalent metal atom, $D^{ee}$ represents a halogen atom or a combination of two or more halogen atoms); $Li_{xf}Si_{yf}O_{zf}$ (xf satisfies $1 \leq xf \leq 5$, yf satisfies $0 < yf \leq 3$, zf satisfies $1 \leq zf \leq 10$); $Li_{xg}S_{yg}O_{zg}$ (xg satisfies $1 \leq xg \leq 3$, yg satisfies $0 < yg \leq 2$, zg satisfies $1 \leq zg \leq 10$); $Li_3BO_3$; $Li_3BO_3$-$Li_2SO_4$,; $Li_2O$-$B_2O_3$-$P_2O_5$,; $Li_2O$-$SiO_2$,; $Li_6BaLa_2Ta_2O_{12}$; $Li_3PO_{(4-3/2w)}N_w$ (w satisfies w<1); $Li_{3.5}Zn_{0.25}GeO_4$ having a lithium super ionic conductor (LISICON)-type crystal structure; $La_{0.55}Li_{0.35}TiO_3$ having a perovskite-type crystal structure; $LiTi_2P_3O_{12}$ having a natrium super ionic conductor (NASICON)-type crystal structure; $Li_{1+xh+yh}(Al, Ga)_{xh}(Ti, Ge)_{2-xh}Si_{yh}P_{3-yh}O_{12}$ (xh satisfies $0 \leq xh \leq 1$, and yh satisfies $0 \leq yh \leq 1$); and $Li_7La_3Zr_2O_{12}$ (LLZ) having a garnet-type crystal structure.

In addition, a phosphorus compound containing Li, P, or O is also desirable. Examples thereof include lithium phosphate ($Li_3PO_4$); LiPON in which a part of oxygen atoms in lithium phosphate are substituted with a nitrogen atom; and $LiPOD^1$ ($D^1$ is preferably one or more elements selected from Ti, V, Cr, Mn, Fe, Co, Ni, Cu, Zr, Nb, Mo, Ru, Ag, Ta, W, Pt, and Au).

Further, It is also possible to preferably use $LiA^1ON$ ($A^1$ is one or more elements selected from Si, B, Ge, Al, C, and Ga).

(iii) Halide-based inorganic solid electrolyte

The halide-based inorganic solid electrolyte is preferably a compound that contains a halogen atom, has an ion conductivity of a metal belonging to Group 1 or Group 2 in the periodic table, and has electron-insulating properties.

The halide-based inorganic solid electrolyte is not particularly limited; however, examples thereof include LiCl, LiBr, LiI, and compounds such as $Li_3YBr_6$ or $Li_3YCl_6$ described in ADVANCED MATERIALS, 2018, 30, 1803075. In particular, $Li_3YBr_6$ or $Li_3YCl_6$ is preferable.

(iv) Hydride-based inorganic solid electrolyte

The hydride-based inorganic solid electrolyte is preferably a compound that contains a hydrogen atom, has an ion conductivity of a metal belonging to Group 1 or Group 2 in the periodic table, and has electron-insulating properties.

The hydride-based inorganic solid electrolyte is not particularly limited; however, examples thereof include $LiBH_4$, $Li_4(BH_4)_3I$, and $3LiBH_4$-LiCl.

The inorganic solid electrolyte is preferably particulate. In this case, the particle diameter (the volume average particle diameter) of the inorganic solid electrolyte is not particularly limited; however, it is preferably 0.01 $\mu$m or more

and more preferably 0.1 μm or more. The upper limit is preferably 100 μm or less and more preferably 50 μm or less.

The particle diameter of the inorganic solid electrolyte is measured according to the following procedure. Using water (heptane in a case where the inorganic solid electrolyte is unstable in water), the inorganic solid electrolyte particles are diluted in a 20 mL sample bottle to prepare 1% by mass of a dispersion liquid. The diluted dispersion liquid sample is irradiated with 1 kHz ultrasonic waves for 10 minutes and is then immediately used for testing. Data collection is carried out 50 times using this dispersion liquid sample, a laser diffraction/scattering-type particle size distribution analyzer LA-920 (product name, manufactured by Horiba Ltd.), and a quartz cell for measurement at a temperature of 25°C to obtain the volume average particle diameter. Other detailed conditions and the like can be found in JIS Z8828: 2013 "particle diameter Analysis-Dynamic Light Scattering" as necessary. Five samples per level are produced, and the average values therefrom are employed.

One kind of inorganic solid electrolyte may be contained, or two or more kinds thereof may be contained.

In a case of forming a solid electrolyte layer, the mass (mg) (mass per unit area) of the inorganic solid electrolyte per unit area ($cm^2$) of the solid electrolyte layer is not particularly limited. It can be appropriately determined according to the designed battery capacity and can be set to, for example, 1 to 100 $mg/cm^2$.

However, in a case where the inorganic solid electrolyte-containing composition contains an active material described later, the mass per unit area of the inorganic solid electrolyte is preferably such that the total amount of the active material and the inorganic solid electrolyte is in the above range.

The content of the inorganic solid electrolyte in the inorganic solid electrolyte-containing composition is not particularly limited. However, in terms of the binding property as well as in terms of dispersibility, it is preferably 50% by mass or more, more preferably 70% by mass or more, and still more preferably 90% by mass or more, in the solid content of 100% by mass. From the same viewpoint, the upper limit thereof is preferably 99.9% by mass or less, more preferably 99.5% by mass or less, and particularly preferably 99% by mass or less.

However, in a case where the inorganic solid electrolyte-containing composition contains an active material described below, regarding the content of the inorganic solid electrolyte in the inorganic solid electrolyte-containing composition, the total content of the active material and the inorganic solid electrolyte is preferably in the above-described range.

In the present invention, the solid content (solid component) refers to components that neither volatilize nor evaporate and disappear in a case where the inorganic solid electrolyte-containing composition is subjected to drying treatment at 150°C for 6 hours in a nitrogen atmosphere at a pressure of 1 mmHg. Typically, the solid content refers to a component other than a dispersion medium described below.

<Polymer binder (B)>

The polymer that forms the polymer binder (B) contained in the inorganic solid electrolyte-containing composition according to the embodiment of the present invention contains at least one of polyester, a vinyl polymer, or (meth)acrylic polymer.

In the present invention, it is preferably a vinyl polymer or a (meth)acrylic polymer in terms of the surface smoothness of the sheet for an all-solid state secondary battery and the ion conductivity of an all-solid state secondary battery. Further, it is preferable that the vinyl polymer or the (meth)acrylic polymer has a branched structure (a structure having a polymer chain in a branched shape through a polymerization initiator residue).

Hereinafter, polyester, the vinyl polymer, and the (meth)acrylic polymer will be described.

(Polyester)

In the present invention, general polyester (preferably having an Mw of 2,000 or more) that is used in the technical field to which the present invention belongs can be used.

The polyester that is used in the present invention preferably has a repeating unit formed by combining a constitutional component represented by Formula (1) and a constitutional component represented by Formula (2).

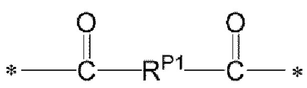
Formula (1)

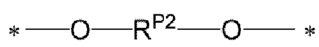
Formula (2)

In the formula, "*" represents a bonding site between a constitutional component represented by Formula (1) and a constitutional component represented by Formula (2), or a bonding site in polyester.

$R^{P1}$ and $R^{P2}$ each independently represent a molecular chain having a (weight-average) molecular weight of

20 to 200,000. The molecular weight of the molecular chain cannot be uniquely determined because it depends on the kind thereof and the like, and is, for example, preferably 30 or higher, more preferably 50 or higher, still more preferably 100 or higher, and still more preferably 150 or higher. The upper limit thereof is preferably 100,000 or less and more preferably 10,000 or less. The molecular weight of the molecular chain is measured for a raw material compound before being incorporated into the main chain of the polymer.

The molecular chain which can be adopted as $R^{P1}$ and $R^{P2}$ is not particularly limited and is preferably a hydrocarbon chain, a polyalkylene oxide chain, a polycarbonate chain, or a polyester chain, more preferably a hydrocarbon chain or a polyalkylene oxide chain, still more preferably a hydrocarbon chain, a polyethylene oxide chain, or a polypropylene oxide chain, and even still more preferably a hydrocarbon chain.

The hydrocarbon chain which can be adopted as $R^{P1}$ and $R^{P2}$ means a chain of hydrocarbon including a carbon atom and a hydrogen atom, and more specifically means a structure in which at least two atoms (for example, hydrogen atoms) or a group (for example, a methyl group) is desorbed from the compound including a carbon atom and a hydrogen atom. However, the present invention, it also includes a chain having a group containing an oxygen atom, a sulfur atom, or a nitrogen atom in the chain. A terminal group that may be present in a terminal of the hydrocarbon chain is not included in the hydrocarbon chain. This hydrocarbon chain may include a carbon-carbon unsaturated bond or may include a ring structure of an aliphatic ring and/or an aromatic ring. That is, the hydrocarbon chain may be a hydrocarbon chain including a hydrocarbon selected from an aliphatic hydrocarbon or an aromatic hydrocarbon.

It suffices that such a hydrocarbon chain satisfies the above molecular weight, and the hydrocarbon chain includes a double hydrocarbon chain including a chain consisting of a hydrocarbon group having a low molecular weight and a hydrocarbon chain (also referred to as the "hydrocarbon-based polymer chain") consisting of a hydrocarbon-based polymer.

The hydrocarbon chain having a low molecular weight is a chain consisting of a typical (non-polymerizable) hydrocarbon group, and examples of the hydrocarbon group include an aliphatic or aromatic hydrocarbon group. Specifically, an alkylene group (having preferably 1 to 12 carbon atoms, more preferably 1 to 6 carbon atoms, and still more preferably 1 to 3 carbon atoms), an arylene group (having preferably 6 to 22 carbon atoms, more preferably 6 to 14 carbon atoms, and still more preferably 6 to 10 carbon atoms), or a group consisting of a combination of the above-described groups is preferable. As the hydrocarbon group that forms the hydrocarbon chain having a low molecular weight which can be adopted as $R^{P2}$, an alkylene group is more preferable, an alkylene group having 2 to 6 carbon atoms is still more preferable, and an alkylene group having 2 or 3 carbon atoms is still more preferable. This hydrocarbon chain may have a polymerized chain (for example, a (meth)acrylic polymer) as a substituent.

Examples of the aromatic hydrocarbon group include a hydrocarbon group contained in each of the exemplary constitutional components described below, and an arylene group (for example, a group obtained by removing one or more hydrogen atoms from the aryl group mentioned in the substituent Z described later; specifically, a phenylene group, a tolylene group, or a xylylene group) is preferable.

The hydrocarbon-based polymer chain is not particularly limited as long as it is a polymer chain formed by polymerizing (at least two) polymerizable hydrocarbons and a chain consisting of a hydrocarbon-based polymer having a larger number of carbon atoms than the above-described hydrocarbon chain having a low molecular weight; however, it is preferably a chain consisting of a hydrocarbon-based polymer consisting of 30 or more carbon atoms and more preferably 50 or more carbon atoms. The upper limit of the number of carbon atoms that constitute the hydrocarbon-based polymer is not particularly limited and may be, for example, 3,000. The hydrocarbon-based polymer chain is preferably a chain consisting of a hydrocarbon-based polymer formed of an aliphatic hydrocarbon in which the main chain satisfies the above-described number of carbon atoms and more preferably a chain consisting of a polymer (preferably an elastomer) formed of an aliphatic saturated hydrocarbon or an unsaturated aliphatic hydrocarbon. Examples of the polymer include a diene polymer having double bonds in the main chain and a non-diene polymer not having double bonds in the main chain. Examples of the diene polymer include a styrene-butadiene copolymer, a styrene-ethylene-butadiene copolymer, a copolymer (preferably butyl rubber (IIR)) of isobutylene and isoprene, a butadiene polymer, an isoprene polymer, and an ethylene-propylene-diene copolymer. Examples of the non-diene polymer include an olefin polymer such as an ethylene-propylene copolymer or a styrene-ethylene-butylene copolymer and a hydrogen reduced form of the above-described diene polymer.

The hydrocarbon to be a hydrocarbon chain preferably has a terminal reactive group (a hydroxy group, a carboxy group, or an acid anhydride group) at the terminal thereof and more preferably has a hydroxy group, and it undergoes polycondensation to form a polymer main chain as $R^{P1}$ or $R^{P2}$ of each of the above formulae.

As the hydrocarbon-based polymer having a terminal reactive group, for example as product names, NISSO-PB series (manufactured by NIPPON SODA Co., Ltd.), Krasol series (manufactured by TOMOE Engineering Co., Ltd.), PolyVEST-HT series (manufactured by Evonik Industries AG), Poly-bd series (manufactured by Idemitsu Kosan Co., Ltd.), Poly-ip series (manufactured by Idemitsu Kosan Co., Ltd.), EPOL (manufactured by Idemitsu Kosan Co., Ltd.), and POLYTAII, series (manufactured by Mitsubishi Chemical Corporation) are suitably used.

Examples of the polyalkylene oxide chain (the polyalkyleneoxy chain) include a chain consisting of a conventionally known polyalkyleneoxy group. The number of carbon atoms in the alkyleneoxy group of the polyalkyleneoxy chain is preferably 1 to 10, more preferably 1 to 6, and still more preferably 2 or 3 (a polyethyleneoxy chain or a polypropyleneoxy chain). The polyalkyleneoxy chain may be a chain consisting of one alkyleneoxy group or may be a chain consisting of two or more alkyleneoxy groups (for example, a chain consisting of an ethyleneoxy group and a propyleneoxy group).

Examples of the polycarbonate chain or the polyester chain include a chain consisting of a conventionally known polycarbonate or polyester.

It is preferable that the polyalkyleneoxy chain, the polycarbonate chain, or the polyester chain includes an alkyl group (having preferably 1 to 12 carbon atoms and more preferably 1 to 6 carbon atoms) at a terminal.

The terminal of the polyalkyleneoxy chain, the polycarbonate chain, or the polyester chain, which can be adopted as $R^{P1}$ and $R^{P2}$, can be appropriately changed to a typical chemical structure that can be incorporated into the constitutional component represented by each of the formulae as $R^{P1}$ and $R^{P2}$. For example, a polyalkyleneoxy chain from which the terminal oxygen atom has been removed is incorporated as $R^{P1}$ or $R^{P2}$ of the above constitutional component.

In the alkyl group in the molecular chain or at a terminal thereof, an ether group (-O-), a thioether group (-S-), a carbonyl group (>C=O), or an imino group (>$NR^N$: $R^N$ represents a hydrogen atom, an alkyl group having 1 to 6 carbon atoms, or an aryl group having 6 to 10 carbon atoms) may be present.

In each of the formulae, $R^{P1}$ and $R^{P2}$ represent a divalent molecular chain but may represent a trivalent or higher molecular chain in which at least one hydrogen atom is substituted with -NH-CO-, -CO-, -O-, -NH-, or -N<.

Among the above molecular chains, $R^{P1}$ is preferably a hydrocarbon chain, more preferably a hydrocarbon chain having a low molecular weight, still more preferably a hydrocarbon chain consisting of an aliphatic or aromatic hydrocarbon group, and particularly preferably a hydrocarbon chain consisting of an aliphatic hydrocarbon group.

Among the above molecular chains, $R^{P2}$ is preferably a hydrocarbon-based polymer chain.

The raw material compound (a carboxylic acid, an acid chloride thereof, or the like) from which the constitutional components represented by Formula (1) are derived is not particularly limited, and examples of the raw material include the carboxylic acid or the compound of the acid chloride, and the specific examples thereof (for example, adipic acid or an esterified product thereof), which are described in paragraph [0074] of WO2018/020827A.

Specific examples of the constitutional component represented by Formula (2) are shown below and in Examples. The raw material compound (the diol compound) from which the constitutional component represented by Formula (2) is derived is not particularly limited. Examples thereof include the respective compounds and the specific examples thereof, which are described in WO2018/020827A, and further include dihydroxyoxamide. In the present invention, the constitutional component represented by Formula (2) and the raw material compound derived from the constitutional component are not limited to those described in the following specific examples, Examples, and the above documents.

In the following specific examples, in a case where the constitutional component has a repeating structure, the repetition number is an integer of 1 or more and is appropriately set within a range that satisfies the molecular weight or the number of carbon atoms of the molecular chain.

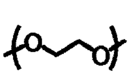 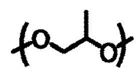 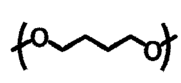 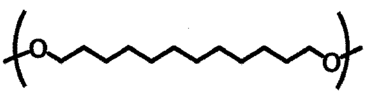 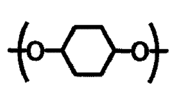

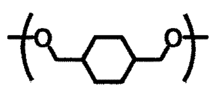 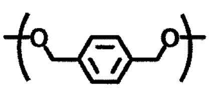 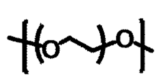 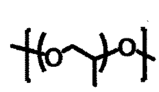 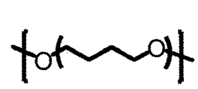

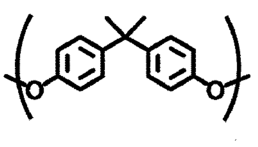 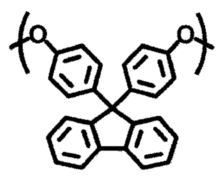 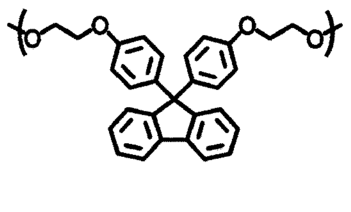 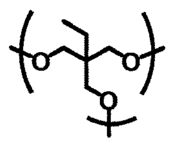

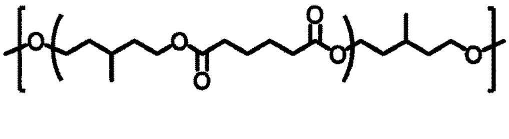 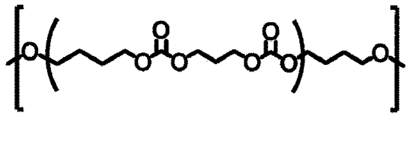

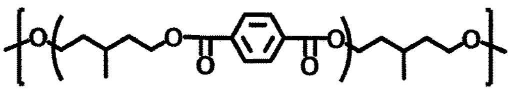

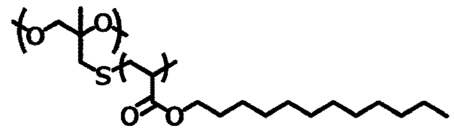

The polyester that is used in the present invention may have constitutional components other than the constitutional components represented by the above formulae, respectively. Such a constitutional component is not particularly limited as long as it can be subjected to polycondensation with a raw material compound from which the constitutional component represented by each of the above formulae is derived.

In the polyester that is used in the present invention, the (total) content of the constitutional component represented by Formula (1) or Formula (2) is not particularly limited; however, it is preferably 5% to 100% by mole, more preferably 5% to 80% by mole, and still more preferably 10% to 60% by mole.

In the polyester that is used in the present invention, the content of the constitutional component other than the constitutional component represented by each of the above formulae is not particularly limited; however, it is preferably less than 50% by mass.

It is noted that in a case where the polyester that is used in the present invention has a plurality of constitutional components represented by the respective formulae, the above-described content of each of the constitutional components is the total content.

The polyester (each constitutional component and raw material compound) that is used in the present invention may have a substituent. The substituent is not particularly limited; however, examples thereof preferably include a group selected from the following substituent Z.

The polyester that is used in the present invention can be synthesized by selecting a raw material compound and subjecting it to polycondensation or the like according to a known method. As the synthesis method, for example, WO2018/151118A can be referenced.

- Substituent Z -

The examples are an alkyl group (preferably an alkyl group having 1 to 20 carbon atoms, for example, methyl, ethyl, isopropyl, t-butyl, pentyl, heptyl, 1-ethylpentyl, benzyl, 2-ethoxyethyl, and 1-carboxymethyl), an alkenyl group (preferably an alkenyl group having 2 to 20 carbon atoms, such as vinyl, allyl, andoleyl), an alkynyl group (preferably an alkynyl group having 2 to 20 carbon atoms, for example, ethynyl, butadynyl, and phenylethynyl), a cycloalkyl group (preferably a cycloalkyl group having 3 to 20 carbon atoms, such as cyclopropyl, cyclopentyl, cyclohexyl, and 4-methylcyclohexyl; in the present specification, the alkyl group generally has a meaning including a cycloalkyl group therein when being referred to, however, it will be described separately here), an aryl group (preferably an aryl group having 6 to 26 carbon atoms, such as phenyl, 1-naphthyl, 4-methoxyphenyl, 2-chlorophenyl, and 3-methylphenyl), an aralkyl group (preferably an aralkyl group having 7 to 23 carbon atoms, for example, benzyl or phenethyl), and a heterocyclic group (preferably a heterocyclic group having 2 to 20 carbon atoms and more preferably a 5- or 6-membered heterocyclic group having at least one oxygen atom, one sulfur atom, or one nitrogen atom. The heterocyclic group includes an aromatic heterocyclic group and an aliphatic heterocyclic group. Examples thereof include a tetrahydropyran ring group, a tetrahydrofuran ring group, a 2-pyridyl group, a 4-pyridyl group, a 2-imidazolyl group, a 2-benzimidazolyl group, a 2-thiazolyl group, a 2-oxazolyl group, or a pyrrolidone group); an alkoxy group (preferably an alkoxy group having 1 to 20 carbon atoms, for example, a methoxy group, an ethoxy group, an isopropyloxy group, or a benzyloxy group); an aryloxy group (preferably an aryloxy group having 6 to 26 carbon atoms, for example, a phenoxy group, a 1-naphthyloxy group, a 3-methylphenoxy group, or a 4-methoxyphenoxy group; in the present specification, the aryloxy group has a meaning including an aryloyloxy group therein when being referred to); a heterocyclic oxy group (a group in which an -O- group is bonded to the above-described heterocyclic group), an alkoxycarbonyl group (preferably an alkoxycarbonyl group having 2 to 20 carbon atoms, for example, an ethoxycarbonyl group, a 2-ethylhexyloxycarbonyl group, or a dodecyloxycarbonyl group); an aryloxycarbonyl group (preferably an aryloxycarbonyl group having 6 to 26 carbon atoms, for example, a phenoxycarbonyl group, a 1-naphthyloxycarbonyl group, a 3-methylphenoxycarbonyl group, or a 4-methoxyphenoxycarbonyl group); an amino group (preferably an amino group having 0 to 20 carbon atoms, an alkylamino group, or an arylamino group, for example, an amino ($-NH_2$) group, an N,N-dimethylamino group, an N,N-diethylamino group, an N-ethylamino group, or an anilino group); a sulfamoyl group (preferably a sulfamoyl group having 0 to 20 carbon atoms, for example, an N,N-dimethylsulfamoyl group or an N-phenylsufamoyl group); an acyl group (an alkylcarbonyl group, an alkenylcarbonyl group, an alkynylcarbonyl group, an arylcarbonyl group, or a heterocyclic carbonyl group, preferably an acyl group having 1 to 20 carbon atoms, for example, an acetyl group, a propionyl group, a butyryl group, an octanoyl group, a hexadecanoyl group, an acryloyl group, a methacryloyl group, a crotonoyl group, a benzoyl group, a naphthoyl group, or a nicotinoyl group); an acyloxy group (an alkylcarbonyloxy group, an alkenylcarbonyloxy group, an alkynylcarbonyloxy group, an arylcarbonyloxy group, or a heterocyclic carbonyloxy group, preferably an acyloxy group having 1 to 20 carbon atoms, for example, an acetyloxy group, a propionyloxy group, a butyryloxy group, an octanoyloxy group, a hexadecanoyloxy group, an acryloyloxy group, a methacryloyloxy group, a crotonoyloxy group, a benzoyloxy group, a naphthoyloxy group, or a nicotinoyloxy group); an aryloyloxy group (preferably an aryloyloxy group having 7 to 23 carbon atoms, for example, a benzoyloxy group);a carbamoyl group (preferably a carbamoyl group having 1 to 20 carbon atoms, for example, an N,N-dimethylcarbamoyl group or an N-phenylcarbamoyl group); an acylamino group (preferably an acylamino group having 1 to 20 carbon atoms, for example, an acetylamino group or a benzoylamino group); an alkylthio group (preferably an alkylthio group having 1 to 20 carbon atoms, for example, a methylthio group, an ethylthio group, an isopropylthio group, or a benzylthio group); an arylthio group (preferably an arylthio group having 6 to 26 carbon atoms, for example, a phenylthio group, a 1-naphthylthio group, a 3-methylphenylthio group, or a 4-methoxyphenylthio group); a heterocyclic thio group (a group in which an -S- group is bonded to the above-described heterocyclic group), an alkylsulfonyl group (preferably an alkylsulfonyl group having 1 to 20 carbon atoms, for example, a methylsulfonyl group or an ethylsulfonyl group), an arylsulfonyl group (preferably an arylsulfonyl group having 6 to 22 carbon atoms, for example, a benzenesulfonyl group), an alkylsilyl group (preferably an alkylsilyl group having 1 to 20 carbon atoms, for example, a monomethylsilyl group, a dimethylsilyl group, a trimethylsilyl group, or a triethylsilyl group); an arylsilyl group (preferably an arylsilyl group having 6 to 42 carbon atoms, for example, a triphenylsilyl group), an alkoxysilyl group (preferably an alkoxysilyl group having 1 to 20 carbon atoms, for example, a monomethoxysilyl group, a dimethoxysilyl group, a trimethoxysilyl group, or a triethoxysilyl group), an aryloxysilyl group (preferably an aryloxy group having 6 to 42 carbon atoms, for example, a triphenyloxysilyl group), a phosphoryl group (preferably a phosphate group having 0 to 20 carbon atoms, for example, $-OP(=O)(R^P)_2$), a phosphonyl group (preferably a phosphonyl group having 0 to 20 carbon atoms, for example, $-P(=O)(R^P)_2$), a phosphinyl group (preferably a phosphinyl group having 0 to 20 carbon atoms, for example, $-P(R^P)_2$), a sulfo group (a sulfonate group), a carboxy group, a hydroxy group, a sulfanyl group, a cyano group, and a halogen atom (for example, a fluorine atom, a chlorine atom, a bromine atom, or an iodine atom). $R^P$ represents a hydrogen atom or a substituent (preferably a group selected from the substituent Z).

In addition, each group exemplified in the substituent Z may be further substituted with the substituent Z.

The alkyl group, the alkylene group, the alkenyl group, the alkenylene group, the alkynyl group, the alkynylene group, and/or the like may be cyclic or chained, may be linear or branched.

(Vinyl polymer)

In the present specification, the term "vinyl polymer" means a polymer (preferably having an Mw of 2,000 or more) obtained by subjecting a vinyl monomer (a monomer having a vinyl group "$CH_2$=CH-") to chain polymerization. However, a polymer having a content of a constitutional component of 50% by mole or more, the constitutional component being derived from a (meth)acrylic compound (M1) described later, shall be classified as the (meth)acrylic polymer.

Examples of the vinyl monomer include a vinyl monomer (not including a (meth)acrylic compound) among "other polymerizable compounds (M2)" described later, and a compound in which $R^1$ of the compound represented by Formula (b-1) represents a hydrogen atom and a carbon atom to which $R^1$ is not bonded represents an unsubstituted carbon atom ($CH_2$ =) (however, $L^1$ does not adopt an ester bond, that is, the above compound does not include a (meth)acrylic compound) is preferable.

In the present invention, the vinyl polymer is preferably a vinyl polymer in which the content of the constitutional component derived from styrene is preferably 50% by mole or more (preferably 60% by mole or more and more preferably 70% by mole or more) in all the constitutional components.

Specific examples of the vinyl polymer include polystyrene, a styrene-butadiene copolymer, a styrene-based thermoplastic elastomer, and a hydrogen-added (hydrogenated) polymer thereof. The styrene-based thermoplastic elastomer or the hydride thereof is not particularly limited. However, examples thereof include a styrene-ethylene-butylene-styrene block copolymer (SEBS), a styrene-isoprene-styrene block copolymer (SIS), a hydrogenated SIS, a styrene-butadiene-styrene block copolymer (SBS), a hydrogenated SBS, a styrene-ethylene-ethylene-propylene-styrene block copolymer (SEEPS), a styrene-ethylene-propylene-styrene block copolymer (SEPS), a styrene-butadiene rubber (SBR), and a hydrogenated a styrene-butadiene rubber (HSBR). In addition, specific examples of the vinyl polymer also include polyvinyl alcohol, polyvinyl acetal, polyvinyl acetate, and a copolymer containing these.

In addition to the constitutional component derived from the vinyl monomer, the vinyl polymer that is used in the present invention may have, for example, a constitutional component (a copolymerization component) derived from the (meth)acrylic compound (M1) that forms a (meth)acrylic polymer described later. The content of the copolymerization component is not particularly limited as long as it is less than 50% by mole in the polymer; however, it is preferably 0 to 30% by mole.

((Meth)acrylic polymer)

In the present invention, a general (meth)acrylic polymer (preferably having an Mw of 2,000 or more) that is used in the technical field to which the present invention belongs can be used.

The (meth)acrylic polymer is preferably a polymer obtained by copolymerizing at least one (meta)acrylic compound (M1) (monomer) selected from a (meth)acrylic acid compound, a (meth)acrylic acid ester compound, a (meth)acrylamide compound, or a (meth)acrylonitrile compound. Further, a (meth)acrylic polymer consisting of a copolymer of the (meth)acrylic compound (M1) and the other polymerizable compound (M2) is also preferable. The other polymerizable compound (M2) (monomer) is not particularly limited, and examples thereof include vinyl compounds such as a styrene compound, a vinyl naphthalene compound, a vinyl carbazole compound, an allyl compound, a vinyl ether compound, a vinyl ester compound, a dialkyl itaconate compound, and an unsaturated carboxylic acid anhydride. Examples of the vinyl compound include the "vinyl monomer" disclosed in JP2015-88486A.

The molecular weights of the (meth)acrylic compound (M1) and the other polymerizable compound (M2) are preferably 50 to 300.

The (meth)acrylic compound (M1) and the other polymerizable compound (M2) may have a substituent other than the residue of the polymerization initiator. Preferred examples the substituent include a group selected from the substituent Z described above.

The content of the other polymerizable compound (M2) in the (meth)acrylic polymer is not particularly limited; however, it can be, for example, less than 50% by mole.

The (meth)acrylic compound (M1) and the other polymerizable compound (M2), from which the constitutional component of the (meth)acrylic polymer is derived, are preferably a compound represented by Formula (b-1).

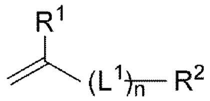

(b−1)

In the formula, $R^1$ represents a hydrogen atom, a hydroxy group, a cyano group, a halogen atom, an alkyl group (preferably having 1 to 24 carbon atoms, more preferably 1 to 12 carbon atoms, and particularly preferably 1 to 6 carbon atoms), an alkenyl group (preferably having 2 to 24 carbon atoms, more preferably 2 to 12 carbon atoms, and particularly preferably 2 to 6 carbon atoms), an alkynyl group (preferably having 2 to 24 carbon atoms, more preferably 2 to 12 carbon atoms, and particularly preferably 2 to 6 carbon atoms), or an aryl group (preferably having 6 to 22 carbon atoms and more preferably 6 to 14 carbon atoms). Among the above, a hydrogen atom or an alkyl group is preferable, and a hydrogen atom or a methyl group is more preferable.

$R^2$ represents a hydrogen atom or a substituent. The substituent that can be adopted as $R^2$ is not particularly limited. However, examples thereof include an alkyl group (preferably a linear chain although it may be a branched chain), an alkenyl group (preferably having 2 to 12 carbon atoms, more preferably 2 to 6 carbon atoms, and particularly preferably 2 or 3 carbon atoms), an aryl group (preferably having 6 to 22 carbon atoms and more preferably 6 to 14 carbon atoms), an aralkyl group (preferably having 7 to 23 carbon atoms and more preferably 7 to 15 carbon atoms), a cyano group, and a hydroxy group.

It is also preferable that the alkyl group has 1 to 3 carbon atoms.

$L^1$ is a linking group and is not particularly limited. However, examples thereof include an alkylene group having 1 to 50 carbon atoms (preferably 1 to 3 carbon atoms), an alkenylene group having 2 to 6 carbon atoms (preferably 2 or 3 carbon atoms), an arylene group having 6 to 24 carbon atoms (preferably 6 to 10 carbon atoms), an oxygen atom, a sulfur atom, an imino group ($-NR^N-$: here, $R^N$ is as described above), a carbonyl group, and a phosphate linking group (-O-P(OH)(O)-O-), a phosphonate linking group (-P(OH)(O)-O-), and a group involved in the combination thereof, and a -CO-O- group or a $-CO-N(R^N)-$ group ($R^N$ is as described above) is preferable. The above linking group may have any substituent. The number of atoms that constitute the linking group and the number of linking atoms are as described later. Examples of any substituent include a substituent Z described above, and examples thereof include an alkyl group and a halogen atom.

n is 0 or 1 and preferably 1.

- $(L^1)_n-R^2$ preferably has a hydrocarbon group having 14 or more carbon atoms (for example, an alkyl group, an alkenyl group, an alkynyl group, or an aryl group, preferably an alkyl group, an alkenyl group, or an alkynyl group, and more preferably an alkyl group), more preferably a hydrocarbon group having 14 or more and 50 or fewer carbon atoms, still more preferably a hydrocarbon group having 14 or more and 40 or fewer carbon atoms, and even still

more preferably a hydrocarbon group having 14 or more and 30 or fewer carbon atoms. In the present invention, it is particularly preferable that $R^2$ is the above-described "hydrocarbon group having 14 or more carbon atoms".

The alkyl group, the alkenyl group, and the alkynyl group may be chain-like, branched, or cyclic.

The (meth)acrylic compound (M1) is also preferably a compound represented by Formula (b-2) or (b-3), and more preferably a compound represented by Formula (b-2).

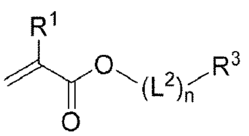

(b−2)

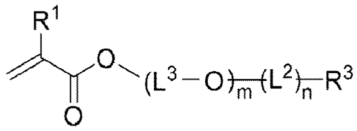

(b−3)

$R^1$ and n are synonymous with Formula (b-1).

$R^3$ is synonymous with $R^2$.

$L^2$ is a linking group and is synonymous with the above $L^1$.

$L^3$ is a linking group and is synonymous with the above $L^1$; however, it is preferably an alkylene group having 1 to 6 carbon atoms (preferably 1 to 3).

m is an integer of 1 to 200, and it is preferably an integer of 1 to 100 and more preferably an integer of 1 to 50.

In Formulae (b-1) to (b-3), the carbon atom which forms a polymerizable group and to which $R^1$ is not bonded is represented as an unsubstituted carbon atom ($CH_2$=); however, it may have a substituent. The substituent is not particularly limited; however, examples thereof include the above group that can be adopted as $R^1$.

Further, in Formulae (b-1) to (b-3), the group which may adopt a substituent such as an alkyl group, an aryl group, an alkylene group, or an arylene group may have a substituent within a range in which the effects of the present invention are not impaired. Examples of the substituent include a group selected from the above-described substituent Z.

The content of the component in the (meth)acrylic polymer (in a case where the (meth)acrylic polymer has a plurality of (meth)acrylic polymer chains, all the (meth)acrylic polymer chains) is not particularly limited, and it is appropriately selected in consideration of the substituent and the like contained in the constitutional component and can be set in the following range, for example.

The content of the constitutional component derived from the (meth)acrylic compound (M1), in the (meth)acrylic polymer, is not particularly limited, and it is preferably 50% to 99% by mole, more preferably 60% to 99% by mole, and particularly preferably 70% to 99% by mole in a case where the total molar quantity of the constitutional component derived from the monomer to be used for polymer synthesis (a monomer for polymer formation) and the polymerization initiator residue described later is set to 100%.

The content of the constitutional component derived from the (meth)acrylic compound (M1) having a hydrocarbon group having 14 or more carbon atoms, in the (meth)acrylic polymer, is not particularly limited, and it is preferably 50% to 99% by mole, more preferably 60% to 99% by mole, and particularly preferably 70% to 99% by mole, in a case where the total molar quantity of the constitutional component derived from the monomer (a monomer for polymer formation) and the polymerization initiator residue described later is set to 100%.

The content of the constitutional component derived from the vinyl compound (M2), in the (meth)acrylic polymer is, for example, preferably 0% by mole or more and less than 50% by mole, more preferably 0% by mole or more and less than 40% by mole, and particularly preferably 0% by mole or more and less than 30% by mole, in a case where the total molar quantity of the constitutional component derived from a monomer for polymer formation, and the polymerization initiator residue described later is set to 100%.

It is noted that the (meth)acrylic polymer may have a carboxy group in at least one of the main chain or the side chain. The content of the component having a carboxy group in the (meth)acrylic polymer is preferably small, and it is preferably 2.0% by mole or less, more preferably 1.0% by mole or less, and still more preferably less than 0.4% by mole, in a case where the total molar quantity of the constitutional component derived from a monomer for polymer formation, and the polymerization initiator residue described later is set to 100%.

The (meth)acrylic polymer chain is also preferably a (meth)acrylic polymer chain represented by the following general formulae.

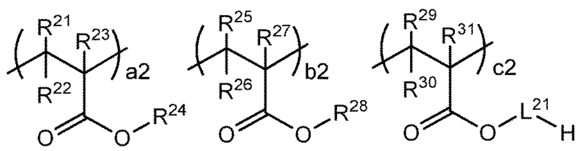

In the formulae, a2 to c2 represent a numerical value in terms of % by mole. a2 is 35% to 100% by mole, b2 is 0% to 65% by mole, and c2 is 0% to 20% by mole. The following is satisfied; a2 + b2 + c2 = 100% by mole.

$R^{21}$ to $R^{23}$ represent a hydrogen atom or a methyl group. $R^{24}$ represents an alkyl group. The alkyl group may be linear, branched, or cyclic, and the number of carbon atoms is preferably 1 to 30, more preferably 3 to 25, and particularly preferably 14 to 20.

$R^{25}$ to $R^{27}$ represent a hydrogen atom or a methyl group. $R^{28}$ represents an alkyl group. The alkyl group may be linear, branched, or cyclic, and the number of carbon atoms is preferably 1 to 10 and more preferably 1 to 5. $R^{28}$ preferably has a substituent, where this substituent is preferably a hydroxy group.

$R^{29}$ and $R^{31}$ represent a hydrogen atom or a methyl group. $R^{30}$ represents a hydrogen atom or a carboxy group. $L^{21}$ represents a single bond or a linking group, where this linking group is synonymous with $L^1$, and the same applies to the preferred range thereof.

In terms of the surface smoothness of the sheet for an all-solid state secondary battery and the ion conductivity of the all-solid state secondary battery, the polymer that forms the polymer binder (B) preferably contains a constitutional component having a hydrocarbon group having 14 or more carbon atoms in the side chain.

The hydrocarbon group preferably has 50 or fewer carbon atoms, more preferably 40 or fewer carbon atoms, and still more preferably 30 or fewer carbon atoms.

Examples of the hydrocarbon group include an alkyl group, an alkenyl group, and an alkynyl group, where an alkyl group is preferable. Here, the alkyl group, the alkenyl group, and the alkynyl group may have a linear, branched, or cyclic form, where a linear form is preferable.

The content of the component having a hydrocarbon group having 14 or more carbon atoms in the side chain, in the vinyl polymer (in the case where the vinyl polymer has a plurality of vinyl polymer chains, all the vinyl polymer chains) is not particularly limited, and it is preferably 5% to 50% by mole, more preferably 10% to 45% by mole, and particularly preferably 15% to 40% by mole in a case where the total molar quantity of the constitutional component derived from the monomer (a monomer for polymer formation) and the polymerization initiator residue described later is set to 100%.

The content of the component having a hydrocarbon group having 14 or more carbon atoms in the side chain, in the polyester (in a case where the polyester has a plurality of polyester chains, all the polyester chains) is not particularly limited. Although it can be 100% by mole, it is preferably 10% to 95% by mole, more preferably 20% to 90% by mole, and particularly preferably 30% to 80% by mole, in a case where the total molar quantity of the constitutional component derived from the compound for polymer formation and polymerization initiator residue described later is set to 100%.

In the present invention, regarding the sequential polymerization polymer, the main chain of the polymer refers to a linear molecular chain in which all the molecular chains that constitute the polymer other than the main chain can be conceived as a branched chain or a pendant with respect to the main chain. Although it depends on the weight-average molecular weight of the molecular chain regarded as a branched chain or pendant chain, the longest chain among the molecular chains constituting the polymer is typically the main chain. However, the main chain does not include the terminal group of the polymer terminal (one terminal and/or both terminals). On the other hand, in the chain polymerization polymer, the main chain of the polymer refers to a molecular chain having a degree of polymerization of 2 or more, which is formed through a chain-reaction manner as the polymerization reaction of the monomer component is initiated, and a plurality of molecular chains may be present in one polymer molecule. In addition, side chains of the polymer refer to molecular chains other than the main chain and include a short molecular chain and a long molecular chain. The terminal group possessed by the polymer terminal corresponds to, for example, a polymerization initiator residue that is introduced into one terminal of the polymer, which will be described later.

Explaining the polymer S-9 described later as an example, all four molecular chains formed by the polymerization reaction of the tetradecyl acrylate correspond to the above-described "main chain" of the chain polymerization polymer.

In terms of the surface smoothness of the sheet for an all-solid state secondary battery and the ion conductivity of the all-solid state secondary battery, the vinyl polymer and the (meth)acrylic polymer have a polymerization initiator residue at the main chain terminal (generally, at one terminal) of the polymer, where the polymerization initiator residue preferably contains at least one polymerization initiator of an azo polymerization initiator, a chain transfer agent containing a sulfur atom, or a polymerization initiator of an organic peroxide, more preferably contains at least one polymerization initiator of a chain transfer agent containing a sulfur atom or a polymerization initiator of an organic peroxide, and still more preferably contains a chain transfer agent containing a sulfur atom. In a case where the valence of the polymerization initiator residue is a valence of 2 or more, the polymerization initiator residue becomes the core of the entire polymer and is bonded to each of the main chain terminals of the two or more polymers, thereby forming a polymer having a branched structure.

The residue of the polymerization initiator (the polymerization initiator residue) refers to, for example, a partial structure formed by bonding a radical portion generated by cleavage of the polymerization initiator used in the polymerization (manufacturing) of the polymer that forms the polymer binder (B) to the terminal of the polymer (which is a group but not a radical), and it is not included in the main chain of the polymer. Therefore, the polymerization initiator

residue has a partial structure (a moiety) of the polymerization initiator and does not have a polymerization initiating action. In addition, the polymerization initiator residue exhibits an adhesiveness improving effect through the interaction with solid particles such as an inorganic solid electrolyte and an active material.

The polymerization initiator residue of the polymer may be one kind or two or more kinds, and in a case where it is two or more kinds, they may be different from each other.

The polymerization initiator residue is preferably a residue represented by any of Formulae (S1) to (S3), and more preferably a residue represented by Formula (S3).

$R^4$-$L^4$-S- * Formula (S1)

In the formula, $L^4$ represents a carbonyl group, an ether bond, or an alkylene group, or a group in which these are combined. $L^4$ is preferably an alkylene group or an "ether bond-carbonyl group-alkylene group (bonded to a sulfur atom through an alkylene group)".

The alkylene group may have a substituent, where this substituent is preferably a hydroxy group.

$R^4$ represents a hydrogen atom, a hydroxy group, or an aryl group.

The alkylene group may be chained, branched, or cyclic. The alkylene group preferably has 1 to 18 carbon atoms, more preferably 1 to 16 carbon atoms, and still more preferably 1 to 14 carbon atoms.

The aryl group is preferably an aryl group having 6 to 24 carbon atoms, and more preferably an aryl group having 6 to 10 carbon atoms.

* represents a bonding site to a polymer main chain. The same applies to the description of the polymerization initiator residue below.

$R^5$-$L^5$-O- * Formula (S2)

In the formula, $L^5$ represents a carbonyl group, an ether bond, or an alkylene group, or a group in which these are combined. $L^5$ is preferably an alkylene group, a carbonyl group, or an "alkylene group-carbonyl group (bonded to an oxygen atom through a carbonyl group)".

$R^5$ represents a hydrogen atom or an aryl group. However, the polymerization initiator residue represented by Formula (S2) does not have "-O-O-".

The alkylene group may be chained, branched, or cyclic. The alkylene group preferably has 1 to 18 carbon atoms, more preferably 1 to 16 carbon atoms, and still more preferably 1 to 14 carbon atoms.

The aryl group is preferably an aryl group having 6 to 24 carbon atoms, and more preferably an aryl group having 6 to 10 carbon atoms.

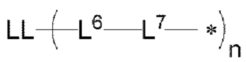 Formula (S3)

In the formula, n is an integer of 3 to 6,

LL represents an n-valent branched group,
$L^6$ represents a single bond or a divalent linking group, and
$L^7$ represents an oxygen atom or a sulfur atom.

In a case where n = 3, LL preferably represents an alkanetriyl group and a trivalent branched group in which an alkanetriyl group and an ether bond are combined. The alkanetriyl group preferably has 1 to 30 carbon atoms, more preferably 2 to 20 carbon atoms, and still more preferably 3 to 16 carbon atoms. The alkanetriyl group may have any form of a chain-like form or a cyclic form or a combination thereof.

In a case where n = 4, LL preferably represents an alkanetetrayl group and a tetravalent branched group in which an alkanetetrayl group and an ether bond are combined. The alkanetetrayl group preferably has 1 to 30 carbon atoms, more preferably 2 to 20 carbon atoms, and still more preferably 3 to 16 carbon atoms. The alkanetetrayl group may have any form of a chain-like form or a cyclic form or a combination thereof.

In a case where n = 5, LL preferably represents an alkanepentayl group and a pentavalent branched group in which an alkanepentayl group and an ether bond are combined. The alkanepentayl group preferably has 2 to 30 carbon atoms, more preferably 2 to 20 carbon atoms, and still more preferably 3 to 16 carbon atoms. The alkanepenatyl group may have any form of a chain-like form or a cyclic form or a combination thereof.

In a case where n = 6, LL preferably represents an alkanehexayl group, a hexavalent branched group in which an alkanehexayl group and an ether bond are combined, and a hexavalent branched group in which an alkanetetrayl

group and an ether bond are combined. As the alkanetetrayl group, for example, an alkanetetrayl group in the case of n = 4 can be adopted. The alkanehexayl group preferably has 2 to 30 carbon atoms, more preferably 2 to 20 carbon atoms, and still more preferably 3 to 16 carbon atoms. The alkanehexayl group may have any form of a chain-like form or a cyclic form or a combination thereof.

The divalent linking group that can be adopted as $L^6$ is preferably a carbonyl group, an alkylene group, or a group in which these are combined.

The alkylene group may be chained, branched, or cyclic. The alkylene group preferably has 1 to 10 carbon atoms, more preferably 1 to 7 carbon atoms, and still more preferably 1 to 4 carbon atoms.

The polymerization initiator residue represented by Formula (2) may have a substituent. Examples of such a substituent include a group selected from the above-described substituent Z, and specific examples thereof include an alkyl group.

The content of the polymerization initiator residue in the vinyl polymer and the (meth)acrylic polymer is not particularly limited. However, It is preferably 0.01% by mole or more and 10% by mole or less, more preferably 0.05% by mole or more and 5% by mole or less, still more preferably 0.1% by mole or more and 3% by mole or less, and even still more preferably 0.5% by mole or more and 3% by mole or less, in a case where the total molar quantity of the constitutional component derived from a monomer for polymer formation, and the polymerization initiator residue described later is set to 100%.

In a case where a polymer is formed using a polymerization initiator or chain transfer agent, the residues of the polymerization initiator and the chain transfer agent are generally introduced at one main chain terminal of the polymer to be synthesized. Therefore, in the present invention, the above content is calculated assuming that one residue is introduced into one molecule of the polymer even in a case where a plurality of residues that can be introduced into the main chain terminal are generated from one molecule of the polymerization initiator or the chain transfer agent. Further, since the residue that is introduced into the main chain terminal of one molecule of the polymer is generally one even in a case where the polymerization initiator and the chain transfer agent are used in combination, the above content is calculated as one residue even in a case of a combination in which the polymerization initiator and the chain transfer agent are combined to generate a plurality of residues.

Examples of the exemplary compound for introducing the polymerization initiator residue include the polymerization initiator used in Examples below and the following exemplary compounds; however, the present invention is not limited to these exemplary compounds. The polymerization initiator residue can be introduced into the polymer by a radical generated by the elimination of a hydrogen radical from the following exemplary compounds or a radical generated by cleavage of "-O-O-".

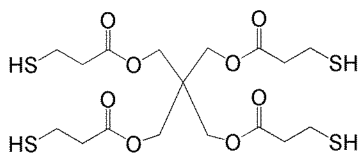

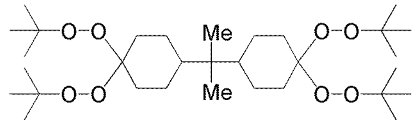

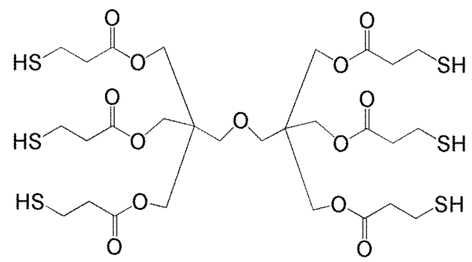

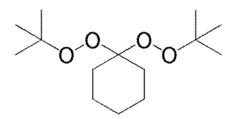

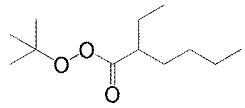

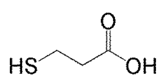

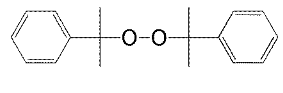

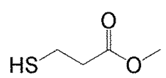

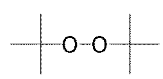

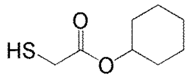

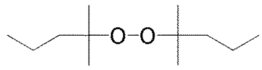

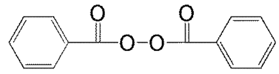

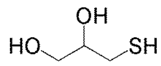

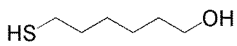

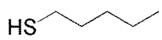

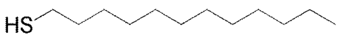

Each of the vinyl polymer and (meth)acrylic polymer (each constitutional component and raw material compound) which are used in the present invention may have a substituent. Preferred examples the substituent include a group selected from the substituent Z described above.

Each of the vinyl polymer and the (meth)acrylic polymer which are used in the present invention can be synthesized by selecting a raw material monomer compound and polymerizing the raw material monomer compound according to the known method.

Specific examples of the polyester, vinyl polymer, and (meth)acrylic polymer which are used in the present invention include the polymer synthesized in Examples below and the following polymers; however, the present invention is not limited thereto. The numbers in parentheses for the exemplary compounds below are in terms of the mole of each constitutional component. Further, the molar ratios of the polymerization initiator residue and the constitutional component derived from the monomer for polymer formation are additionally written below the exemplary compound.

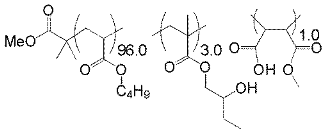

1.5:96.0:3.0:1.0

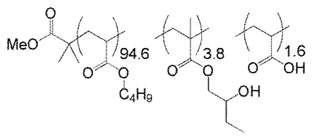

2.7:94.6:3.8:1.6

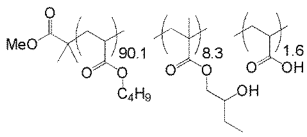

1.7:90.1:8.3:1.6

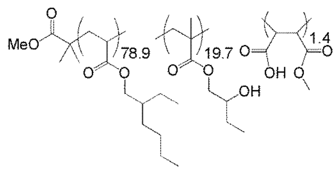

1.8:78.9:19.7:1.4

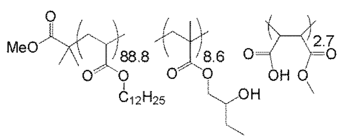

1.9:88.8:8.6:2.7

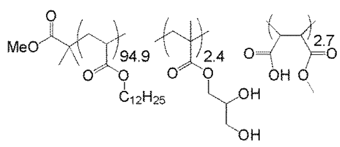

2.6:94.9:2.4:2.7

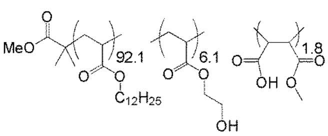

2.9:92.1:6.1:1.8

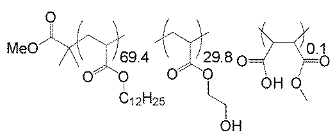

5.5:69.4:29.8:0.1

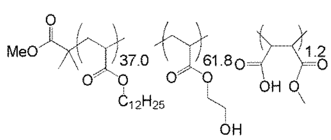

1.5:37.0:61.8:1.2

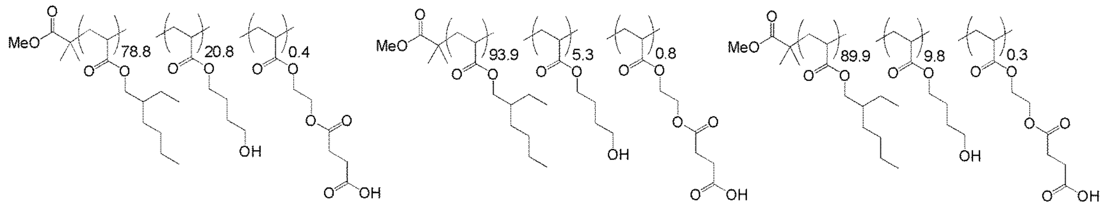

1.1:78.8:20.8:0.4

0.5:93.9:5.3:0.8

0.8:89.9:9.8:0.3

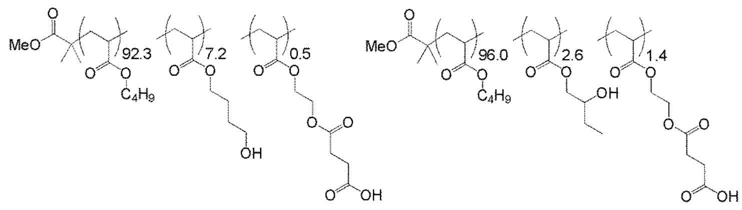

2.1:92.3:7.2:0.5

3.5:96.0:2.6:1.4

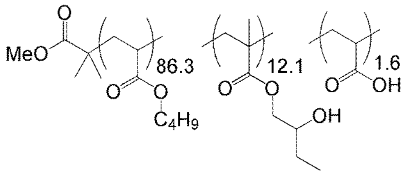

1.7:86.3:12.1:1.6

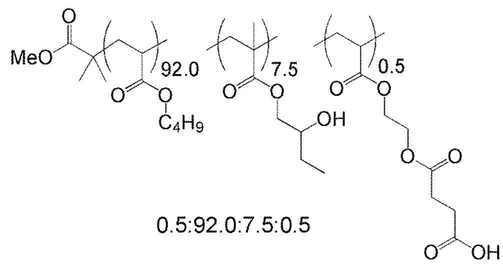

0.5:92.0:7.5:0.5

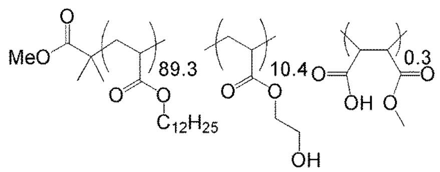

2.9:89.3:10.4:0.3

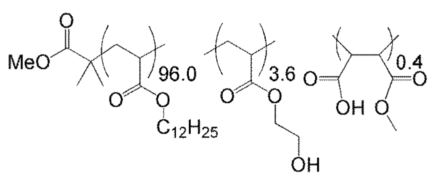

3.0:96.0:3.6:0.4

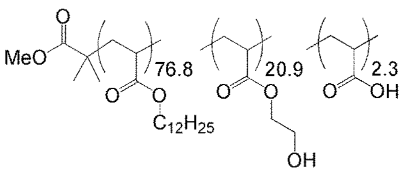

2.1:76.8:20.9:2.3

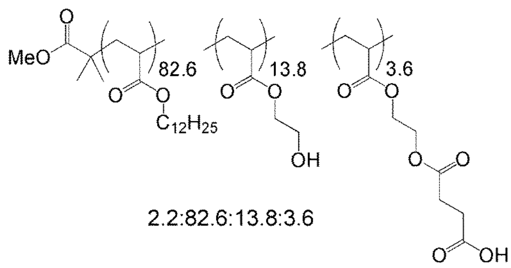

2.2:82.6:13.8:3.6

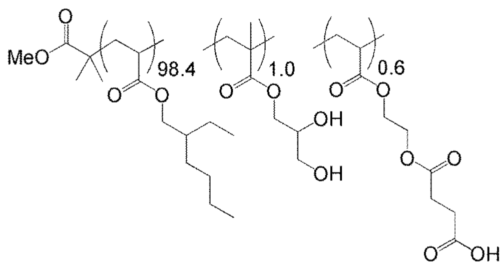

1.3:98.4:1.0:0.6

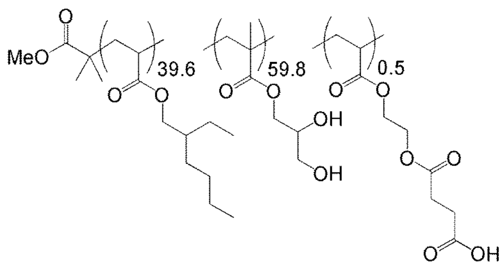

4.6:39.6:59.8:0.5

In a case where the inorganic solid electrolyte-containing composition contains a dispersion medium, the polymer binder (B) contains at least one dissolved-type polymer binder that is soluble in the dispersion medium (dissolved in the dispersion medium). In a case where the inorganic solid electrolyte-containing composition contains two or more kinds of polymer binders (B), it is preferable that all the polymer binders (B) are soluble.

In the present invention, the description that the polymer binder(B) is dissolved in a dispersion medium means that a binder is dissolved in a dispersion medium of the inorganic solid electrolyte-containing composition, and for example, it means that the solubility is 80% or more in the solubility measurement. The measuring method for solubility is as follows.

That is, a specified amount of a polymer binder (B) to be measured is weighed in a glass bottle, 100 g of the dispersion medium contained in the inorganic solid electrolyte-containing composition is added thereto, and stirring is carried out at a temperature of 25°C on a mix rotor at a rotation speed of 80 rpm for 24 hours. After stirring for 24 hours, the obtained mixed solution is subjected to the transmittance measurement under the following conditions. This test (the transmittance measurement) is carried out by changing the amount of the binder dissolved (the above-described specified amount), and the upper limit concentration X (% by mass) at which the transmittance is 99.8% is defined as the solubility of the binder in the above dispersion medium.

<Transmittance measurement conditions>

Dynamic light scattering (DLS) measurement
Device: DLS measuring device DLS-8000 manufactured by Otsuka Electronics Co., Ltd.
Laser wavelength, output: 488 nm/100 mW
Sample cell: NMR tube

- Measurement of molecular weight -

In the present invention, unless specified otherwise, the molecular weight of the polymer (polymerized chain) including the polymer binder (B) refers to a mass average molecular weight in terms of standard polystyrene conversion, determined by gel permeation chromatography (GPC). The measurement method thereof includes, basically, a method under Conditions 1 or Conditions 2 (preferential) described below. However, depending on the kind of polymer a suitable eluent may be appropriately selected and used. It is noted that the number average molecular weight of the polymer described in the present specification can be measured in the same manner.

(Conditions 1)

Column: Connect two TOSOH TSKgel Super AWM-H (product name, manufactured by Tosoh Corporation)
Carrier: 10 mM LiBr/N-methylpyrrolidone
Measurement temperature: 40°C
Carrier flow rate: 1.0 ml/min
Sample concentration: 0.1% by mass
Detector: refractive indicator (RI) detector

(Conditions 2)

Column: A column obtained by connecting TOSOH TSKgel Super HZM-H, TOSOH TSKgel Super HZ4000, and TOSOH TSKgel Super HZ2000 (all of which are product names, manufactured by Tosoh Corporation)
Carrier: tetrahydrofuran
Measurement temperature: 40°C
Carrier flow rate: 1.0 ml/min
Sample concentration: 0.1% by mass
Detector: refractive indicator (RI) detector

<Dispersion medium>

The inorganic solid electrolyte-containing composition according to the embodiment of the present invention preferably contains a dispersion medium for dispersing each component.

It suffices that the dispersion medium is an organic compound that is in a liquid state in the use environment, examples thereof include various organic solvents, and specific examples thereof include an alcohol compound, an ether compound, an amide compound, an amine compound, a ketone compound, an aromatic compound, an aliphatic compound, a nitrile compound, and an ester compound.

The dispersion medium may be a non-polar dispersion medium (a hydrophobic dispersion medium) or a polar dispersion medium (a hydrophilic dispersion medium); however, a non-polar dispersion medium is preferable from the viewpoint that excellent dispersibility can be exhibited. The non-polar dispersion medium generally refers to a dispersion medium having a property of a low affinity to water; however, in the present invention, examples thereof include an ester compound, a ketone compound, an ether compound, an aromatic compound, and an aliphatic compound.

Examples of the alcohol compound include methyl alcohol, ethyl alcohol, 1-propyl alcohol, 2-propyl alcohol, 2-butanol, ethylene glycol, propylene glycol, glycerin, 1,6-hexanediol, cyclohexanediol, sorbitol, xylitol, 2-methyl-2,4-pentanediol, 1,3-butanediol, and 1,4-butanediol.

Examples of the ether compound include an alkylene glycol (diethylene glycol, triethylene glycol, polyethylene glycol, dipropylene glycol, or the like), an alkylene glycol monoalkyl ether (ethylene glycol monomethyl ether, ethylene glycol monobutyl ether, diethylene glycol, dipropylene glycol, propylene glycol monomethyl ether, diethylene glycol monomethyl ether, propylene glycol monomethyl ether, tripropylene glycol monomethyl ether, diethylene glycol monobutyl ether, or the like), alkylene glycol dialkyl ether (ethylene glycol dimethyl ether or the like), a dialkyl ether (dimethyl ether, diethyl ether, diisopropyl ether, dibutyl ether, or the like), and a cyclic ether (tetrahydrofuran, dioxane (including 1,2-, 1,3- or 1,4-isomer), or the like).

Examples of the amide compound include N,N-dimethylformamide, N-methyl-2-pyrrolidone, 2-pyrrolidinone, 1,3-dimethyl-2-imidazolidinone, ε-caprolactam, formamide, N-methylformamide, acetamide, N-methylacetamide, N,N-dimethylacetamide, N-methylpropanamide, and hexamethylphosphoric amide.

Examples of the amine compound include triethylamine, diisopropylethylamine, and tributylamine.

Examples of the ketone compound include acetone, methyl ethyl ketone, methyl isobutyl ketone (MIBK), cyclopentanone, cyclohexanone, cycloheptanone, dipropyl ketone, dibutyl ketone, diisopropyl ketone, diisobutyl ketone (DIBK), isobutyl propyl ketone, sec-butyl propyl ketone, pentyl propyl ketone, and butyl propyl ketone.

Examples of the aromatic compound include benzene, toluene, and xylene.

Examples of the aliphatic compound include hexane, heptane, octane, decane, cyclohexane, methylcyclohexane, ethylcyclohexane, cyclooctane, decalin, paraffin, gasoline, naphtha, kerosene, and light oil.

Examples of the nitrile compound include acetonitrile, propionitrile, and isobutyronitrile.

Examples of the ester compound include ethyl acetate, butyl acetate, propyl acetate, propyl butyrate, isopropyl butyrate, butyl butyrate, isobutyl butyrate, butyl pentanoate, ethyl isobutyrate, propyl isobutyrate, isopropyl isobutyrate, isobutyl isobutyrate, propyl pivalate, isopropyl pivalate, butyl pivalate, and isobutyl pivalate.

In the present invention, among them, an ether compound, a ketone compound, an aromatic compound, an aliphatic compound, or an ester compound is preferable, and an ester compound, a ketone compound, or an ether compound is more preferable.

The number of carbon atoms of the compound that constitutes the dispersion medium is not particularly limited, and it is preferably 2 to 30, more preferably 4 to 20, still more preferably 6 to 15, and particularly preferably 7 to 12.

The dispersion medium preferably has a boiling point of 50°C or higher and more preferably 70°C or higher at normal pressure (1 atm). The upper limit thereof is preferably 250°C or lower and more preferably 220°C or lower.

It suffices that the inorganic solid electrolyte-containing composition according to the embodiment of the present invention contains at least one kind of dispersion medium, and it may contain two or more kinds thereof.

In the present invention, the content of the dispersion medium in the inorganic solid electrolyte-containing composition is not particularly limited and can be appropriately set. For example, in the inorganic solid electrolyte-containing composition, it is preferably 20% to 80% by mass, more preferably 30% to 70% by mass, and particularly preferably 40% to 60% by mass.

<Active material>

The inorganic solid electrolyte-containing composition according to the embodiment of the present invention can also contain an active material capable of intercalating and deintercalating an ion of a metal belonging to Group 1 or Group 2 of the periodic table. Examples of such active materials include a positive electrode active material and a negative electrode active material, which will be described later.

In the present invention, the inorganic solid electrolyte-containing composition containing an active material (a

positive electrode active material or a negative electrode active material) may be referred to as a composition for an electrode (a composition for a positive electrode or a composition for a negative electrode).

(Positive electrode active material)

The positive electrode active material is an active material capable of intercalating and deintercalating an ion of a metal belonging to Group 1 or Group 2 of the periodic table, and it is preferably one capable of reversibly intercalating and deintercalating a lithium ion. The above-described material is not particularly limited as long as the material has the above-described characteristics and may be a transition metal oxide, an organic substance, or an element, which is capable of being complexed with Li, such as sulfur or the like by disassembling the battery.

Among the above, as the positive electrode active material, transition metal oxides are preferably used, and transition metal oxides having a transition metal element $M^a$ (one or more elements selected from Co, Ni, Fe, Mn, Cu, and V) are more preferable. In addition, an element $M^b$ (an element of Group 1 (Ia) of the metal periodic table other than lithium, an element of Group 2 (IIa), or an element such as Al, Ga, In, Ge, Sn, Pb, Sb, Bi, Si, P, or B) may be mixed into this transition metal oxide. The mixing amount thereof is preferably 0% to 30% by mole of the amount (100% by mole) of the transition metal element $M^a$. It is more preferable that the transition metal oxide is synthesized by mixing the above components such that a molar ratio $Li/M^a$ is 0.3 to 2.2.

Specific examples of the transition metal oxides include transition metal oxides having a bedded salt-type structure (MA), transition metal oxides having a spinel-type structure (MB), lithium-containing transition metal phosphoric acid compounds (MC), lithium-containing transition metal halogenated phosphoric acid compounds (MD), and lithium-containing transition metal silicate compounds (ME).

Specific examples of the transition metal oxides having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickel ate).

Specific examples of the transition metal oxides having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$, iron pyrophosphates such as $LiFeP_2O_7$, and cobalt phosphates such as $LiCoPO_4$, and a monoclinic NASICON type vanadium phosphate salt such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, cobalt fluorophosphates such as $Li_2CoPO_4F$.

Examples of the lithium-containing transition metal silicate compounds (ME) include $Li_2FeSiO_4$, $Li_2MnSiO_4$, and $Li_2CoSiO_4$.

In the present invention, the transition metal oxide having a bedded salt-type structure (MA) is preferable, and LCO or NMC is more preferable.

The shape of the positive electrode active material is not particularly limited but is preferably a particle shape. The particle diameter (the volume average particle diameter) of the positive electrode active material is not particularly limited. For example, it can be set to 0.1 to 50 $\mu$m. The particle diameter of the positive electrode active material particle can be measured using the same method as that of the particle diameter of the inorganic solid electrolyte. In order to allow the positive electrode active material to have a predetermined particle diameter, an general pulverizer or classifier is used. For example, a mortar, a ball mill, a sand mill, a vibration ball mill, a satellite ball mill, a planetary ball mill, a swirling air flow jet mill, or a sieve is preferably used. During pulverization, it is also possible to carry out wet-type pulverization in which water or a dispersion medium such as methanol is made to be present together. In order to provide the desired particle diameter, classification is preferably carried out. The classification is not particularly limited and can be carried out using a sieve, a wind power classifier, or the like. Both the dry-type classification and the wet-type classification can be carried out.

A positive electrode active material obtained using a baking method may be used after being washed with water, an acidic aqueous solution, an alkaline aqueous solution, or an organic solvent.

The positive electrode active material may be used singly, or two or more thereof may be used in combination.

In a case of forming a positive electrode active material layer, the mass (mg) (mass per unit area) of the positive electrode active material per unit area ($cm^2$) of the positive electrode active material layer is not particularly limited. It can be appropriately determined according to the designed battery capacity and can be set to, for example, 1 to 100 $mg/cm^2$.

The content of the positive electrode active material in the inorganic solid electrolyte-containing composition is not particularly limited; however, it is preferably 10% to 97% by mass, more preferably 30% to 95% by mass, still more

preferably 40 to 93 mass, and particularly preferably 50% to 90% by mass, in the solid content of 100% by mass.

(Negative electrode active material)

The negative electrode active material is an active material capable of intercalating and deintercalating an ion of a metal belonging to Group 1 or Group 2 of the periodic table, and it is preferably one capable of reversibly intercalating and deintercalating a lithium ion. The material is not particularly limited as long as it has the above-described characteristics, and examples thereof include a carbonaceous material, a metal oxide, a metal composite oxide, a lithium single body, a lithium alloy, and a negative electrode active material that is capable of an alloy (capable of being alloyed) with lithium. Among the above, a carbonaceous material, a metal composite oxide, or a lithium single body is preferably used from the viewpoint of reliability.

The carbonaceous material that is used as the negative electrode active material is a material substantially consisting of carbon. Examples thereof include petroleum pitch, carbon black such as acetylene black (AB), graphite (natural graphite, artificial graphite such as vapor-grown graphite), and carbonaceous material obtained by baking a variety of synthetic resins such as polyacrylonitrile (PAN)-based resins or furfuryl alcohol resins. Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, vitreous carbon fibers, and activated carbon fibers, mesophase microspheres, graphite whisker, and tabular graphite.

These carbonaceous materials can be classified into non-graphitizable carbonaceous materials (also referred to as "hard carbon") and graphitizable carbonaceous materials based on the graphitization degree. In addition, it is preferable that the carbonaceous material has the lattice spacing, density, and crystallite size described in JP1987-22066A (JP-S62-22066A), JP1990-6856A (JP-H2-6856A), and JP1991-45473A (JP-H3-45473A). The carbonaceous material is not necessarily a single material and, for example, may be a mixture of natural graphite and artificial graphite described in JP1993-90844A (JP-H5-90844A) or graphite having a coating layer described in JP1994-4516A (JP-H6-4516A).

As the carbonaceous material, hard carbon or graphite is preferably used, and graphite is more preferably used.

The oxide of a metal or a metalloid element that can be used as the negative electrode active material is not particularly limited as long as it is an oxide capable of intercalating and deintercalating lithium, and examples thereof include an oxide of a metal element (metal oxide), a composite oxide of a metal element or a composite oxide of a metal element and a metalloid element (collectively referred to as "metal composite oxide), and an oxide of a metalloid element (a metalloid oxide). The oxides are more preferably noncrystalline oxides, and preferred examples thereof include chalcogenides which are reaction products between metal elements and elements in Group 16 of the periodic table). In the present invention, the metalloid element refers to an element having intermediate properties between those of a metal element and a non-metal element. Typically, the metalloid elements include six elements including boron, silicon, germanium, arsenic, antimony, and tellurium, and further include three elements including selenium, polonium, and astatine. In addition, "noncrystalline" represents an oxide having a broad scattering band with an apex in a range of 20° to 40° in terms of 2$\theta$ value in case of being measured by an X-ray diffraction method using CuK$\alpha$ rays, and the oxide may have a crystalline diffraction line. The highest intensity in a crystalline diffraction line observed in a range of 40° to 70° is preferably 100 times or less and more preferably 5 times or less with respect to the intensity of a diffraction line at the apex in a broad scattering band observed in a range of 20° to 40° in terms of 2$\theta$ value, and it is still more preferable that the oxide does not have a crystalline diffraction line.

In the compound group consisting of the noncrystalline oxides and the chalcogenides, noncrystalline oxides of metalloid elements and chalcogenides are more preferable, and (composite) oxides consisting of one element or a combination of two or more elements selected from elements (for example, Al, Ga, Si, Sn, Ge, Pb, Sb, and Bi) belonging to Groups 13 (IIIB) to 15 (VB) in the periodic table or chalcogenides are more preferable. Specific examples of preferred noncrystalline oxides and chalcogenides include $Ga_2O_3$, GeO, PbO, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, GeS, PbS, $PbS_2$, $Sb_2S_3$, and $Sb_2S_5$.

Preferred examples of the negative electrode active material which can be used in combination with amorphous oxides containing Sn, Si, or Ge as a major component include a carbonaceous material capable of intercalating and/or deintercalating lithium ions or lithium metal, a lithium single body, a lithium alloy, and a negative electrode active material that is capable of being alloyed with lithium.

It is preferable that an oxide of a metal or a metalloid element, in particular, a metal (composite) oxide and the chalcogenide contain at least one of titanium or lithium as the constitutional component from the viewpoint of high current density charging and discharging characteristics. Examples of the metal composite oxide (lithium composite metal oxide) including lithium include a composite oxide of lithium oxide and the above metal (composite) oxide or the above chalcogenide, and specifically, $Li_2SnO_2$.

As the negative electrode active material, for example, a metal oxide (titanium oxide) having a titanium element

is also preferable. Specifically, $Li_4Ti_5O_{12}$ (lithium titanium oxide [LTO]) is preferable since the volume variation during the intercalation and deintercalation of lithium ions is small, and thus the high-speed charging and discharging characteristics are excellent, and the deterioration of electrodes is suppressed, whereby it becomes possible to improve the life of the lithium ion secondary battery.

The lithium alloy as the negative electrode active material is not particularly limited as long as it is typically used as a negative electrode active material for a secondary battery, and examples thereof include a lithium aluminum alloy.

The negative electrode active material capable of forming an alloy with lithium is not particularly limited as long as it is typically used as a negative electrode active material for a secondary battery. Examples of such an active material include a (negative electrode) active material (an alloy or the like) having a silicon element or a tin element and a metal such as Al or In, a negative electrode active material (a silicon element-containing active material) having a silicon element capable of exhibiting high battery capacity is preferable, and a silicon element-containing active material in which the content of the silicon element is 50% by mole or more with respect to all the constitutional elements is more preferable.

In general, a negative electrode including the negative electrode active material (for example, an Si negative electrode including a silicon element-containing active material or an Sn negative electrode containing an active material containing a tin element) can intercalate a larger amount of Li ions than a carbon negative electrode (for example, graphite or acetylene black). That is, the amount of Li ions intercalated per unit mass increases. Therefore, it is possible to increase the battery capacity. As a result, there is an advantage that the battery driving duration can be extended.

Examples of the silicon element-containing active material include a silicon-containing alloy (for example, $LaSi_2$, $VSi_2$, La-Si, Gd-Si, or Ni-Si) including a silicon material such as Si or SiOx ($0 < x \leq 1$) and titanium, vanadium, chromium, manganese, nickel, copper, lanthanum, or the like or a structured active material thereof (for example, $LaSi_2$/Si), and an active material such as $SnSiO_3$ or $SnSiS_3$ including silicon element and tin element. In addition, since SiOx itself can be used as a negative electrode active material (a metalloid oxide) and Si is produced along with the operation of an all-solid state secondary battery, SiOx can be used as a negative electrode active material (or a precursor material thereof) capable of being alloyed with lithium.

Examples of the negative electrode active material including tin element include Sn, SnO, $SnO_2$, SnS, $SnS_2$, and the above-described active material including silicon element and tin element. In addition, a composite oxide with lithium oxide, for example, $Li_2SnO_2$ can also be used.

In the present invention, the above-described negative electrode active material can be used without any particular limitation. From the viewpoint of battery capacity, a preferred aspect as the negative electrode active material is a negative electrode active material that is capable of being alloyed with lithium. Among them, the silicon material or the silicon-containing alloy (the alloy containing a silicon element) described above is more preferable, and it is more preferable to include a negative electrode active material containing silicon (Si) or a silicon-containing alloy.

The chemical formulae of the compounds obtained by the above baking method can be calculated using an inductively coupled plasma (ICP) emission spectroscopy as a measuring method from the mass difference of powder before and after baking as a convenient method.

The shape of the negative electrode active material is not particularly limited but is preferably a particle shape. The volume average particle diameter of the negative electrode active material is not particularly limited; however, it is preferably 0.1 to 60 μm. The volume average particle diameter of the negative electrode active material particles can be measured in the same manner as the average particle diameter of the inorganic solid electrolyte. In order to obtain the predetermined particle diameter, a typical pulverizer or classifier is used as in the case of the positive electrode active material.

The negative electrode active material may be used singly, or two or more negative electrode active materials may be used in combination.

In a case of forming a negative electrode active material layer, the mass (mg) (mass per unit area) of the negative electrode active material per unit area ($cm^2$) in the negative electrode active material layer is not particularly limited. It can be appropriately determined according to the designed battery capacity and can be set to, for example, 1 to 100 $mg/cm^2$.

The content of the negative electrode active material in the inorganic solid electrolyte-containing composition is not particularly limited, and it is preferably 10% to 90% by mass, more preferably 20% to 85% by mass, still more preferably 30% to 80% by mass, and even still more preferably 40% by mass to 75% by mass, in the solid content of 100% by mass.

In the present invention, in a case where a negative electrode active material layer is formed by charging a secondary battery, ions of a metal belonging to Group 1 or Group 2 in the periodic table, generated in the all-solid state secondary battery, can be used instead of the negative electrode active material. By bonding the ions to electrons and precipitating a metal, a negative electrode active material layer can be formed.

(Coating of active material)

The surfaces of the positive electrode active material and the negative electrode active material may be subjected to surface coating with another metal oxide. Examples of the surface coating agent include metal oxides and the like containing Ti, Nb, Ta, W, Zr, Al, Si, or Li. Specific examples thereof include titanium oxide spinel, tantalum-based oxides, niobium-based oxides, and lithium niobate-based compounds, and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, and $B_2O_3$.

In addition, the surface of the electrode containing the positive electrode active material or negative electrode active material may be subjected to a surface treatment with sulfur or phosphorous.

Further, the particle surface of the positive electrode active material or negative electrode active material may be subjected to a surface treatment with an active light ray or an active gas (plasma or the like) before and after the surface coating.

<Conductive auxiliary agent>

The inorganic solid electrolyte-containing composition according to the embodiment of the present invention preferably contains a conductive auxiliary agent, and for example, it is preferable that the silicon atom-containing active material as the negative electrode active material is used in combination with a conductive auxiliary agent.

The conductive auxiliary agent is not particularly limited, and conductive auxiliary agents that are known as ordinary conductive auxiliary agents can be used. It may be, for example, graphite such as natural graphite and artificial graphite, carbon black such as acetylene black, Ketjen black, and furnace black, amorphous carbon such as needle cokes, carbon fibers such as a vapor-grown carbon fiber and a carbon nanotube, or a carbonaceous material such as graphene or fullerene, which are electron-conductive materials, and it may be also a metal powder or metal fiber of copper, nickel, or the like. A conductive polymer such as polyaniline, polypyrrole, polythiophene, polyacetylene, or a polyphenylene derivative may also be used.

In the present invention, in a case where the active material is used in combination with the conductive auxiliary agent, among the above-described conductive auxiliary agents, a conductive auxiliary agent that does not intercalate and deintercalate ions (preferably Li ions) of a metal belonging to Group 1 or Group 2 in the periodic table and does not function as an active material at the time of charging and discharging of the battery is classified as the conductive auxiliary agent. Therefore, among the conductive auxiliary agents, a conductive auxiliary agent that can function as the active material in the active material layer at the time of charging and discharging of the battery is classified as an active material but not as a conductive auxiliary agent. Whether or not the conductive auxiliary agent functions as the active material at the time of charging and discharging of a battery is not unambiguously determined but is determined by the combination with the active material.

One kind of conductive auxiliary agent may be contained, or two or more kinds thereof may be contained.

The shape of the conductive auxiliary agent is not particularly limited but is preferably a particle shape.

In a case where the inorganic solid electrolyte-containing composition according to the embodiment of the present invention contains a conductive auxiliary agent, the content of the conductive auxiliary agent in the inorganic solid electrolyte-containing composition is preferably 0% to 10% by mass in the solid content of 100% by mass.

<Lithium salt>

The inorganic solid electrolyte-containing composition according to the embodiment of the present invention preferably contains a lithium salt (a supporting electrolyte) as well.

Generally, the lithium salt is preferably a lithium salt that is used for this kind of product and is not particularly limited. For example, lithium salts described in paragraphs 0082 to 0085 of JP2015-088486A are preferable.

In a case where the inorganic solid electrolyte-containing composition according to the embodiment of the present invention contains a lithium salt, the content of the lithium salt is preferably 0.1 part by mass or more and more preferably 5 parts by mass or more with respect to 100 parts by mass of the solid electrolyte. The upper limit thereof is preferably 50 parts by mass or less and more preferably 20 parts by mass or less.

<Dispersing agent>

The inorganic solid electrolyte-containing composition of the embodiment of the present invention may contain a dispersing agent. As the dispersing agent, a dispersing agent that is generally used for an all-solid state secondary battery can be appropriately selected and used. Generally, a compound intended for particle adsorption and steric repulsion and/or electrostatic repulsion is suitably used.

<Other additives>

As components other than the respective components described above, the inorganic solid electrolyte-containing composition according to the embodiment of the present invention may appropriately contain an ionic liquid, a thickener, a crosslinking agent (an agent causing a crosslinking reaction by radical polymerization, condensation polymerization, or ring-opening polymerization), a polymerization initiator (an agent that generates an acid or a radical by heat or light), an antifoaming agent, a leveling agent, a dehydrating agent, or an antioxidant. The ionic liquid is contained in order to further improve the ion conductivity, and the known one in the related art can be used without particular limitation. In addition, a polymer other than the polymer that forms the above-described polymer binder, a typically used binder, or the like may be contained.

(Preparation of inorganic solid electrolyte-containing composition)

The inorganic solid electrolyte-containing composition according to the embodiment of the present invention can be prepared by mixing an inorganic solid electrolyte, a polymer binder, a dispersion medium, preferably a dispersion medium, a conductive auxiliary agent, and further appropriately a lithium salt, and any other optionally constitutional components, as a mixture and preferably as a slurry by using, for example, various mixers that are used generally. In a case of a composition for an electrode, an active material is further mixed.

The mixing method is not particularly limited, and the components may be mixed at once or sequentially. A mixing environment is not particularly limited; however, examples thereof include a dry air environment and an inert gas environment.

[Sheet for an all-solid state secondary battery]

A sheet for an all-solid state secondary battery according to the aspect of the present invention is a sheet-shaped molded body with which a constitutional layer of an all-solid state secondary battery can be formed, and it includes various aspects depending on use applications thereof. Examples of thereof include a sheet that is preferably used in a solid electrolyte layer (also referred to as a solid electrolyte sheet for an all-solid state secondary battery), and a sheet that is preferably used in an electrode or a laminate of an electrode and a solid electrolyte layer (an electrode sheet for an all-solid state secondary battery). In the present invention, the variety of sheets described above will be collectively referred to as a sheet for an all-solid state secondary battery.

It suffices that the solid electrolyte sheet for an all-solid state secondary battery according to the embodiment of the present invention is a sheet having a solid electrolyte layer, and it may be a sheet in which a solid electrolyte layer is formed on a substrate or may be a sheet that is formed of a solid electrolyte layer without including a substrate. The solid electrolyte sheet for an all-solid state secondary battery may include another layer in addition to the solid electrolyte layer. Examples of the other layer include a protective layer (a stripping sheet), a collector, and a coating layer.

Examples of the solid electrolyte sheet for an all-solid state secondary battery according to the embodiment of the present invention include a sheet including a layer formed of the inorganic solid electrolyte-containing composition according to the embodiment of the present invention, a typical solid electrolyte layer, and a protective layer on a substrate in this order. The solid electrolyte layer included in the solid electrolyte sheet for an all-solid state secondary battery is preferably formed of the inorganic solid electrolyte-containing composition according to the embodiment of the present invention. The contents of the respective components in the solid electrolyte layer are not particularly limited; however, the contents are preferably the same as the contents of the respective components with respect to the solid content of the inorganic solid electrolyte-containing composition according to the embodiment of the present invention. The layer thickness of each layer that constitutes the solid electrolyte sheet for an all-solid state secondary battery is the same as the layer thickness of each layer described later in the all-solid state secondary battery.

The substrate is not particularly limited as long as it can support the solid electrolyte layer, and examples thereof include a sheet body (plate-shaped body) formed of materials described below regarding the collector, an organic material, an inorganic material, or the like. Examples of the organic materials include various polymers, and specific examples thereof include polyethylene terephthalate, polypropylene, polyethylene, and cellulose. Examples of the inorganic materials include glass and ceramic.

It suffices that an electrode sheet for an all-solid state secondary battery according to the embodiment of the present invention (simply also referred to as an "electrode sheet") is an electrode sheet including an active material layer, and it may be a sheet in which an active material layer is formed on a substrate (collector) or may be a sheet that is formed of an active material layer without including a substrate. The electrode sheet is typically a sheet including the collector and the active material layer, and examples of an aspect thereof include an aspect including the collector, the active material layer, and the solid electrolyte layer in this order and an aspect including the collector, the active material layer, the solid electrolyte layer, and the active material layer in this order. The solid electrolyte layer and the active

material layer included in the electrode sheet are preferably formed of the inorganic solid electrolyte-containing composition according to the embodiment of the present invention. The contents of the respective components in this solid electrolyte layer or active material layer are not particularly limited; however, the contents are preferably the same as the contents of the respective components with respect to the solid content of the inorganic solid electrolyte-containing composition (the composition for an electrode) according to the embodiment of the present invention. The thickness of each of the layers forming the electrode sheet according to the embodiment of the present invention is the same as the layer thickness of each of the layers described below regarding the all-solid state secondary battery. The electrode sheet according to the embodiment of the present invention may include the above-described other layer.

In the sheet for an all-solid state secondary battery according to the embodiment of the present invention, at least one layer of the solid electrolyte layer or the active material layer is formed of the inorganic solid electrolyte-containing composition according to the embodiment of the present invention, and a constitutional layer having excellent surface smoothness is included. As a result, the sheet for an all-solid state secondary battery according to the embodiment of the present invention is difficult to cause poor adhesion between layers, cracking and breakage due to concentration of stress, and the like during lamination and pressing in the battery manufacturing process. Further, the sheet for an all-solid state secondary battery according to the embodiment of the present invention can realize low resistance (high conductivity) of the all-solid state secondary battery from low temperature to normal temperature. As a result, the sheet for an all-solid state secondary battery according to the embodiment of the present invention is suitably used as a sheet with which a constitutional layer of an all-solid state secondary battery can be formed.

[Manufacturing method for sheet for all-solid state secondary battery]

The manufacturing method for a sheet for an all-solid state secondary battery according to the embodiment of the present invention is not particularly limited, and the sheet can be manufactured by forming each of the above layers using the inorganic solid electrolyte-containing composition according to the embodiment of the present invention. Examples thereof include a method in which the film formation (the coating and drying) is carried out preferably on a substrate or a collector (another layer may be interposed) to form a layer (a coated and dried layer) consisting of an inorganic solid electrolyte-containing composition. This method makes it possible to produce a sheet for an all-solid state secondary battery having a substrate or a collector and having a coated and dried layer. Here, the coated and dried layer refers to a layer formed by carrying out coating with the inorganic solid electrolyte-containing composition according to the embodiment of the present invention and drying the dispersion medium (that is, a layer formed using the inorganic solid electrolyte-containing composition according to the embodiment of the present invention and consisting of a composition obtained by removing the dispersion medium from the inorganic solid electrolyte-containing composition according to the embodiment of the present invention). In the active material layer and the coated and dried layer, the dispersion medium may remain within a range where the effects of the present invention do not deteriorate, and the residual amount thereof, for example, in each of the layers may be 3% by mass or lower.

In the manufacturing method for a sheet for an all-solid state secondary battery according to the embodiment of the present invention, each of the steps such as coating and drying will be described in the following manufacturing method for an all-solid state secondary battery.

In the manufacturing method for a sheet for an all-solid state secondary battery according to the embodiment of the present invention, the coated and dried layer obtained as described above can be pressurized. The pressurizing condition and the like will be described later in the section of the manufacturing method for an all-solid state secondary battery.

In addition, in the manufacturing method for a sheet for an all-solid state secondary battery according to the embodiment of the present invention, the substrate, the protective layer (particularly stripping sheet), or the like can also be stripped.

[All-solid state secondary battery]

The all-solid state secondary battery according to the embodiment of the present invention includes a positive electrode active material layer, a negative electrode active material layer facing the positive electrode active material layer, and a solid electrolyte layer disposed between the positive electrode active material layer and the negative electrode active material layer. The positive electrode active material layer is preferably formed on a positive electrode collector to configure a positive electrode. The negative electrode active material layer is preferably formed on a negative electrode collector to configure a negative electrode.

At least one layer of the negative electrode active material layer, the positive electrode active material layer, or the solid electrolyte layer is formed of the inorganic solid electrolyte-containing composition according to the embodiment of the present invention, and at least one of the solid electrolyte layer, the negative electrode active material layer, or the positive electrode active material layer is preferably formed of the inorganic solid electrolyte-containing composition

according to the embodiment of the present invention. An aspect in which all of the layers are formed of the inorganic solid electrolyte-containing composition according to the aspect of the present invention is also one of the preferred aspects. In the active material layer or the solid electrolyte layer formed of the inorganic solid electrolyte-containing composition according to the embodiment of the present invention, the kinds of components to be contained and the content ratios thereof are preferably the same as the solid content of the inorganic solid electrolyte-containing composition according to the embodiment of the present invention. In a case where the active material layer or the solid electrolyte layer is not formed of the inorganic solid electrolyte-containing composition according to the embodiment of the present invention, a known material in the related art can be used.

The thickness of each of the negative electrode active material layer, the solid electrolyte layer, and the positive electrode active material layer is not particularly limited. In case of taking a dimension of a general all-solid state secondary battery into account, the thickness of each of the layers is preferably 10 to 1,000 μm and more preferably 20 μm or more and less than 500 μm. In the all-solid state secondary battery according to the embodiment of the present invention, the thickness of at least one layer of the positive electrode active material layer or the negative electrode active material layer is still more preferably 50 μm or more and less than 500 μm.

Each of the positive electrode active material layer and the negative electrode active material layer may include a collector on the side opposite to the solid electrolyte layer.

<Housing>

Depending on the use application, the all-solid state secondary battery according to the embodiment of the present invention may be used as the all-solid state secondary battery having the above-described structure as it is but is preferably sealed in an appropriate housing to be used in the form of a dry cell. The housing may be a metallic housing or a resin (plastic) housing. In a case where a metallic housing is used, examples thereof include an aluminum alloy housing and a stainless steel housing. It is preferable that the metallic housing is classified into a positive electrode-side housing and a negative electrode-side housing and that the positive electrode-side housing and the negative electrode-side housing are electrically connected to the positive electrode collector and the negative electrode collector, respectively. The positive electrode-side housing and the negative electrode-side housing are preferably integrated by being joined together through a gasket for short circuit prevention.

Hereinafter, the all-solid state secondary battery of the preferred embodiments of the present invention will be described with reference to Fig. 1; however, the present invention is not limited thereto.

Fig. 1 is a cross-sectional view schematically illustrating an all-solid state secondary battery (a lithium ion secondary battery) according to a preferred embodiment of the present invention. In the case of being seen from the negative electrode side, an all-solid state secondary battery 10 of the present embodiment includes a negative electrode collector 1, a negative electrode active material layer 2, a solid electrolyte layer 3, a positive electrode active material layer 4, and a positive electrode collector 5 in this order. The respective layers are in contact with each other, and thus structures thereof are adjacent. In a case in which the above-described structure is employed, during charging, electrons ($e^-$) are supplied to the negative electrode side, and lithium ions ($Li^+$) are accumulated on the negative electrode side. On the other hand, during discharging, the lithium ions ($Li^+$) accumulated in the negative electrode side return to the positive electrode, and electrons are supplied to an operation portion 6. In an example illustrated in the drawing, an electric bulb is employed as a model at the operation portion 6 and is lit by discharging.

In a case where the all-solid state secondary battery having a layer configuration illustrated in Fig. 1 is put into a 2032-type coin case, the all-solid state secondary battery will be referred to as the "laminate for an all-solid state secondary battery", and a battery prepared by putting this laminate for an all-solid state secondary battery into a 2032-type coin case will be referred to as "all-solid state secondary battery", thereby referring to both batteries distinctively in some cases.

(Positive electrode active material layer, solid electrolyte layer, and negative electrode active material layer)

In the all-solid state secondary battery 10, all of the positive electrode active material layer, the solid electrolyte layer, and the negative electrode active material layer are formed of the inorganic solid electrolyte-containing composition of the embodiment of the present invention. This all-solid state secondary battery 10 exhibits excellent battery performance. The kinds of the inorganic solid electrolyte and the polymer binder which are contained in the positive electrode active material layer 4, the solid electrolyte layer 3, and the negative electrode active material layer 2 may be identical to or different from each other.

In the present invention, any one of the positive electrode active material layer and the negative electrode active material layer, or collectively both of them may be simply referred to as an active material layer or an electrode active material layer. In addition, in the present invention, any one of the positive electrode active material and the negative electrode active material, or collectively both of them may be simply referred to as an active material or an electrode

active material.

In the present invention, in a case where the constitutional layer is formed of the inorganic solid electrolyte-containing composition according to the embodiment of the present invention, it is possible to realize an all-solid state secondary battery having excellent cycle characteristics as well as an all-solid state secondary battery having low resistance.

In the all-solid state secondary battery 10, the negative electrode active material layer can be a lithium metal layer. Examples of the lithium metal layer include a layer formed by depositing or molding a lithium metal powder, a lithium foil, and a lithium vapor deposition film. The thickness of the lithium metal layer can be, for example, 1 to 500 μm regardless of the above thickness of the above negative electrode active material layer.

The positive electrode collector 5 and the negative electrode collector 1 are preferably an electron conductor.

In the present invention, either or both of the positive electrode collector and the negative electrode collector will also be simply referred to as the collector.

As a material that forms the positive electrode collector, not only aluminum, an aluminum alloy, stainless steel, nickel, or titanium but also a material (a material on which a thin film has been formed) obtained by treating the surface of aluminum or stainless steel with carbon, nickel, titanium, or silver is preferable. Among these, aluminum or an aluminum alloy is more preferable.

As a material that forms the negative electrode collector, aluminum, copper, a copper alloy, stainless steel, nickel, titanium, or the like, and further, a material obtained by treating the surface of aluminum, copper, a copper alloy, or stainless steel with carbon, nickel, titanium, or silver is preferable, and aluminum, copper, a copper alloy, or stainless steel is more preferable.

Regarding the shape of the collector, a film sheet shape is typically used; however, it is also possible to use shapes such as a net shape, a punched shape, a lath body, a porous body, a foaming body, and a molded body of a fiber group.

The thickness of the collector is not particularly limited; however, it is preferably 1 to 500 μm. In addition, protrusions and recesses are preferably provided on the surface of the collector by carrying out a surface treatment.

In the all-solid state secondary battery 10, a layer formed of a known constitutional layer forming material can be applied to the positive electrode active material layer.

In the present invention, a functional layer, a functional member, or the like may be appropriately interposed or disposed between each layer of the negative electrode collector, the negative electrode active material layer, the solid electrolyte layer, the positive electrode active material layer, and the positive electrode collector or on the outside thereof. In addition, each layer may be constituted of a single layer or multiple layers.

[Manufacture of all-solid state secondary battery]

The all-solid state secondary battery can be manufactured by a conventional method. Specifically, the all-solid state secondary battery can be manufactured by forming each of the layers described above using the inorganic solid electrolyte-containing composition of the embodiment of the present invention or the like. Hereinafter, the manufacturing method therefor will be described in detail.

The all-solid state secondary battery according to the embodiment of the present invention can be manufactured, for example, by carrying out a method (a manufacturing method for a sheet for an all-solid state secondary battery according to the embodiment of the present invention) which includes (is carried out through) a step of coating an appropriate substrate (for example, a metal foil which serves as a collector) with the inorganic solid electrolyte-containing composition according to the embodiment of the present invention, including a dispersion medium, and forming a coating film (forming a film).

For example, an inorganic solid electrolyte-containing composition containing a positive electrode active material is applied as a material for a positive electrode (a composition for a positive electrode) onto a metal foil which is a positive electrode collector, to form a positive electrode active material layer, thereby producing a positive electrode sheet for an all-solid state secondary battery. Next, the inorganic solid electrolyte-containing composition for forming a solid electrolyte layer is applied onto the positive electrode active material layer to form the solid electrolyte layer. Furthermore, an inorganic solid electrolyte-containing composition containing a negative electrode active material is applied as a material for a negative electrode (a composition for a negative electrode) onto the solid electrolyte layer, to form a negative electrode active material layer. A negative electrode collector (a metal foil) is overlaid on the negative electrode active material layer, whereby it is possible to obtain an all-solid state secondary battery having a structure in which the solid electrolyte layer is sandwiched between the positive electrode active material layer and the negative electrode active material layer. A desired all-solid state secondary battery can also be manufactured by enclosing the all-solid state secondary battery in a housing.

In addition, it is also possible to manufacture an all-solid state secondary battery by carrying out the forming method for each layer in reverse order to form a negative electrode active material layer, a solid electrolyte layer, and

a positive electrode active material layer on a negative electrode collector and overlaying a positive electrode collector thereon.

As another method, the following method can be exemplified. That is, the positive electrode sheet for an all-solid state secondary battery is produced as described above. In addition, an inorganic solid electrolyte-containing composition containing a negative electrode active material is applied as a material for a negative electrode (a composition for a negative electrode) onto a metal foil which is a negative electrode collector, to form a negative electrode active material layer, thereby producing a negative electrode sheet for an all-solid state secondary battery. Next, a solid electrolyte layer is formed on the active material layer in any one of these sheets as described above. Furthermore, the other one of the positive electrode sheet for an all-solid state secondary battery and the negative electrode sheet for an all-solid state secondary battery is laminated on the solid electrolyte layer such that the solid electrolyte layer and the active material layer come into contact with each other. In this manner, an all-solid state secondary battery can be manufactured.

As still another method, for example, the following method can be used. That is, a positive electrode sheet for an all-solid state secondary battery and a negative electrode sheet for an all-solid state secondary battery are produced as described above. In addition, separately from the positive electrode sheet for an all-solid state secondary battery and the negative electrode sheet for an all-solid state secondary battery, an inorganic solid electrolyte-containing composition is applied onto a substrate, thereby producing a solid electrolyte sheet for an all-solid state secondary battery consisting of a solid electrolyte layer. Furthermore, the positive electrode sheet for an all-solid state secondary battery and the negative electrode sheet for an all-solid state secondary battery are laminated with each other to sandwich the solid electrolyte layer that has been peeled off from the substrate. In this manner, an all-solid state secondary battery can be manufactured.

The solid electrolyte layer or the like can also be formed by, for example, forming an inorganic solid electrolyte-containing composition or the like on a substrate or an active material layer by pressurization molding under pressurizing conditions described later.

In the above production method, it suffices that the inorganic solid electrolyte-containing composition according to the embodiment of the present invention is used in any one of the composition for a positive electrode, the inorganic solid electrolyte-containing composition, or the composition for a negative electrode. The inorganic solid electrolyte-containing composition according to the embodiment of the present invention is preferably used in the inorganic solid electrolyte-containing composition, and the inorganic solid electrolyte-containing composition according to the embodiment of the present invention can be used in any of the compositions.

<Formation of individual layer (film formation)>

The method of applying the inorganic solid electrolyte-containing composition is not particularly limited and can be appropriately selected. Examples thereof include coating (preferably wet-type coating), spray coating, spin coating, dip coating, slit coating, stripe coating, and bar coating.

In this case, the inorganic solid electrolyte-containing composition may be dried after being applied each time or may be dried after being applied multiple times. The drying temperature is not particularly limited. The lower limit is preferably 30°C or higher, more preferably 60°C or higher, and still more preferably 80°C or higher. The upper limit thereof is preferably 300°C or lower, more preferably 250°C or lower, and still more preferably 200°C or lower. In a case where the solid electrolyte composition is heated in the above-described temperature range, the dispersion medium can be removed to make the composition enter a solid state (coated and dried layer). This temperature range is preferable since the temperature is not excessively increased and each member of the all-solid state secondary battery is not impaired. As a result, excellent overall performance is exhibited in the all-solid state secondary battery, and it is possible to obtain a good binding property and a good ion conductivity even without pressurization.

In a case where the inorganic solid electrolyte-containing composition according to the embodiment of the present invention is applied and dried as described above, it is possible to suppress the variation in the contact state and bind solid particles, and furthermore, it is possible to form a coated and dried layer having a flat surface.

After applying the inorganic solid electrolyte-containing composition, it is preferable to pressurize each layer or the all-solid state secondary battery after superimposing the constitutional layers or producing the all-solid state secondary battery. In addition, each of the layers is also preferably pressurized together in a state of being laminated. Examples of the pressurizing methods include a method using a hydraulic cylinder press machine. The pressurizing force is not particularly limited; however, it is generally preferably in a range of 5 to 1,500 MPa.

In addition, the applied inorganic solid electrolyte-containing composition may be heated at the same time with the pressurization. The heating temperature is not particularly limited but is generally in a range of 30°C to 300°C. The press can also be applied at a temperature higher than the glass transition temperature of the inorganic solid electrolyte. It is also possible to carry out press at a temperature higher than the glass transition temperature of the polymer contained in the polymer binder. However, in general, the temperature does not exceed the melting point of this polymer.

The pressurization may be carried out in a state where the coating solvent or dispersion medium has been

dried in advance or in a state where the solvent or the dispersion medium remains.

The respective compositions may be applied at the same time, and the application, the drying, and the pressing may be carried out simultaneously and/or sequentially. Each of the compositions may be applied onto each of the separate substrates and then laminated by carrying out transfer.

The atmosphere during the manufacturing process, for example, during coating, heating, or pressurization, is not particularly limited and may be any atmosphere such as an atmosphere of atmospheric air, an atmosphere of dried air (the dew point: -20°C or lower), or an atmosphere of an inert gas (for example, an argon gas, a helium gas, or a nitrogen gas).

The pressurization time may be a short time (for example, within several hours) under the application of a high pressure or a long time (one day or longer) under the application of an intermediate pressure. In case of members other than the sheet for an all-solid state secondary battery, for example, the all-solid state secondary battery, it is also possible to use a restraining device (screw fastening pressure or the like) of the all-solid state secondary battery in order to continuously apply an intermediate pressure.

The pressing pressure may be a pressure that is constant or varies with respect to a portion under pressure such as a sheet surface.

The pressing pressure may be variable depending on the area or the film thickness of the portion under pressure. In addition, the pressure may also be variable stepwise for the same portion.

A pressing surface may be flat or roughened.

<Initialization>

The all-solid state secondary battery manufactured as described above is preferably initialized after the manufacturing or before use. The initialization is not particularly limited, and it is possible to initialize the all-solid state secondary battery by, for example, carrying out initial charging and discharging in a state where the pressing pressure is increased and then releasing the pressure up to a pressure at which the all-solid state secondary battery is ordinarily used.

[Usages of all-solid state secondary battery]

The all-solid state secondary battery according to the embodiment of the present invention can be applied to a variety of usages. The application aspect thereof is not particularly limited, and in a case of being mounted in an electronic apparatus, examples thereof include a notebook computer, a pen-based input personal computer, a mobile personal computer, an e-book player, a mobile phone, a cordless phone handset, a pager, a handy terminal, a portable fax, a mobile copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, and a backup power supply. Additionally, examples of the consumer usage thereof include an automobile, an electric vehicle, a motor, a lighting instrument, a toy, a game device, a road conditioner, a watch, a strobe, a camera, and a medical device (a pacemaker, a hearing aid, a shoulder massage device, and the like). Furthermore, the all-solid state secondary battery can be used for a variety of military usages and universe usages. In addition, the all-solid state secondary battery can also be combined with a solar battery.

Examples

Hereinafter, the present invention will be described in more detail based on Examples; however, the present invention is not limited thereto to be interpreted. "Parts" and "%" that represent compositions in the following Examples are mass-based unless particularly otherwise described. In the present invention, "room temperature" means 25°C.

1. Polymer synthesis and preparation of binder solution

Polymers shown in the following chemical formulae and Table 1 were synthesized as follows.

[Synthesis Example 1: Synthesis of polymer S-1 and preparation of binder solution S-1]

To a 300 mL three-necked flask, 60.0 g of NISSO-PB GI1000 (product name, manufactured by NIPPON SODA Co., Ltd.) and 8.77 g of dimethyl sebacate were added and stirred at 180°C to be uniformly dissolved. To the obtained solution, 270 mg of tetrabutyl orthotitanate was added and stirred at 180°C for 6 hours. Then, 68.8 g of butyl butyrate was added to the solution cooled to 100°C or lower and stirred to obtain a binder solution S-1 (polymer concentration: 50% by mass) consisting of the polymer S-1 (polyester).

[Synthesis Example 2: Synthesis of polymer S-2 (preparation of binder solution S-2)]

To a 100 mL graduated cylinder, 36.0 of lauryl acrylate and 0.36 g of a polymerization initiator V-601 (product name, manufactured by FUJIFILM Wako Pure Chemical Corporation) were added and dissolved in 36 g of butyl butyrate to prepare a monomer solution. To a 300 mL three-necked flask, 18 g of butyl butyrate was added and stirred at 80°C, and then the above monomer solution was added dropwise thereto over 2 hours. After completion of the dropwise addition, the temperature was raised to 90°C, and stirring was carried out for 2 hours to synthesize a polymer S-2 (a (meth)acrylic polymer), whereby a binder solution S-2 (concentration of polymer: 40% by mass) consisting of the polymer S-2 was obtained.

[Synthesis Examples 3 to 6: Synthesis of polymers S-3 to S-6 (preparation of binder solutions S-3 to S-6)]

Polymers S-3 to S-5 ((meth)acrylic polymers) and a polymer S-6 (a vinyl polymer) were synthesized in the same manner as in Synthesis Example 2, and binder solutions S-3 to S-6 consisting of the polymer S-3 to S-6 were obtained except that in Synthesis Example 2, a compound from which each constitutional component is derived was used so that the polymers S-3 to S-6 had the composition (the kind and the content of the constitutional component) shown in Table 1. The concentration of each of the polymers of the binder solutions S-3 to S-6 was 40% by mass.

[Synthesis Example 7: Synthesis of polymer S-7 (preparation of binder solution S-7)]

To a 100 mL graduated cylinder, 36 g of tetradecyl acrylate, 0.36 g of a chain transfer agent dodecanethiol, and 0.24 g of a polymerization initiator V-601 (product name, manufactured by FUJIFILM Wako Pure Chemical Corporation) were added and dissolved in 36 g of butyl butyrate to prepare a monomer solution. To a 300 mL three-necked flask, 18 g of butyl butyrate was added and stirred at 80°C, and then the above monomer solution was added dropwise thereto over 2 hours. After completion of the dropwise addition, the temperature was raised to 90°C, and stirring was carried out for 2 hours to synthesize a polymer S-7, whereby a binder solution S-7 (concentration of polymer: 40% by mass) consisting of the polymer S-7 was obtained.

[Synthesis Example 8: Synthesis of polymer S-8 (preparation of binder solution S-8)]

To a 100 mL graduated cylinder, 36 g of docosyl acrylate and 0.36 g of a polymerization initiator PERCUMYL D (product name, manufactured by NOF Corporation) were added and dissolved in 36 g of butyl butyrate to prepare a monomer solution. To a 300 mL three-necked flask, 18 g of butyl butyrate was added and stirred at 80°C, and then the above monomer solution was added dropwise thereto over 2 hours. After completion of the dropwise addition, the temperature was raised to 90°C, and stirring was carried out for 2 hours to synthesize a polymer S-8 (a (meth)acrylic polymer), whereby a binder solution S-8 (concentration of polymer: 40% by mass) consisting of the polymer S-8 was obtained.

[Synthesis Example 9: Synthesis of polymer S-9 (preparation of binder solution S-9)]

A branched polymer S-9 (a (meth)acrylic polymer) was synthesized in the same manner as in Synthesis Example 7, and a binder solution S-9 (concentration of polymer: 40% by mass) consisting of the polymer S-9 was obtained except that in Synthesis Example 7, a compound from which each constitutional component is derived was used so that the polymer S-9 had the composition (the kind and the content of the constitutional component) shown in Table 1.

[Synthesis Example 10: Synthesis of polymer S-10 (preparation of binder solution S-10)]

A branched polymer S-10 (a (meth)acrylic polymer) was synthesized in the same manner as in Synthesis Example 8, and a binder solution S-10 (concentration of polymer: 40% by mass) consisting of the polymer S-10 was obtained except that in Synthesis Example 8, a compound from which each constitutional component is derived was used so that the polymer S-10 had the composition (the kind and the content of the constitutional component) shown in Table 1.

[Synthesis Examples 11 to 15: Synthesis of polymers S-11 to S-15 (preparation of binder solutions S-11 to S-15)]

Polymers S-11 to S-15 ((meth)acrylic polymers) were synthesized in the same manner as in Synthesis Example 2, and binder solutions S-11 to S-15 consisting of the polymer S-11 to S-15 were obtained except that in Synthesis Example 2, a compound from which each constitutional component is derived was used so that the polymers S-11 to

S-15 had the composition (the kind and the content of the constitutional component) shown in Table 1, and except that the polymerization concentration was changed. The concentration of each of the polymers of the binder solutions S-11 to S-15 was 40% by mass.

[Synthesis Examples 16 and 17: Synthesis of polymers S-16 and S-17 (preparation of binder solutions S-16 and S-17]

Polymers S-16 and S-17 ((meth)acrylic polymers) were synthesized in the same manner as in Synthesis Example 2, and binder solutions S-16 and S-17 consisting of the polymer S-16 and S-17 were obtained except that in Synthesis Example 2, a compound from which each constitutional component is derived was used so that the polymers S-16 and S-17 had the composition (the kind and the content of the constitutional component) shown in Table 1, and except that the polymerization concentration was changed. The concentration of each of the polymers of the binder solutions S-16 and S-17 was 40% by mass.

[Synthesis Examples 18 and 19: Synthesis of polymers 18 and 19 (preparation of binder solutions S-18 and S-19]

Polymers S-18 and S-19 ((meth)acrylic polymers) were synthesized in the same manner as in Synthesis Example 2, and binder solutions S-18 and S-19 consisting of the polymer S-18 and S-19 were obtained except that in Synthesis Example 2, a compound from which each constitutional component is derived was used so that the polymers S-18 and S-19 had the composition (the kind and the content of the constitutional component) shown in Table 1, and except that the polymerization concentration was changed. The concentration of each of the polymers of the binder solutions S-18 and S-19 was 40% by mass.

[Synthesis Examples 20 to 22: Synthesis of polymers T-1 to T-3 (preparation of binder solutions T-1 to T-3)]

Polymers T-1 to T-3 ((meth)acrylic polymers) were synthesized in the same manner as in Synthesis Example 2, and binder solutions T-1 to T-3 consisting of the polymer T-1 to T-3 were obtained except that in Synthesis Example 2, a compound from which each constitutional component is derived was used so that the polymers T-1 to T-3 had the composition (the kind and the content of the constitutional component) shown in Table 1 and except that the polymerization concentration was changed. The concentration of each of the polymers of the binder solutions T-1 to T-3 was 40% by mass.

[Synthesis Example 23: Synthesis of polymer T-4 (preparation of binder solution T-4)]

100 parts by mass of ion exchange water, 55 parts by mass of vinylidene fluoride, 20 parts by mass of hexafluoropropene, and 25 parts by mass of tetrafluoroethylene were added to an autoclave, and 2 parts by mass of a polymerization initiator PEROYL IPP (product name, chemical name: diisopropyl peroxydicarbonate, manufactured by NOF CORPORATION) was further added thereto and stirred at 40°C for 24 hours. After stirring, the precipitate was filtered and dried at 100°C for 10 hours. 40 parts by mass of butyl butyrate was added to 10 parts by mass of the obtained polymer and dissolved to synthesize a polymer T-4 (a vinylidene fluoride-hexafluoropropylene-tetrafluoropropylene ternary copolymer), whereby a binder solution T-4 (polymer concentration: 20% by mass) consisting of the polymer T-4 was obtained.

[Synthesis Example 24: Synthesis of polymer T-5 (preparation of binder solution T-5)]

To a 300 mL three-necked flask, 46.1 g of EPOL (product name, manufactured by NIPPON SODA Co., Ltd.) was added and dissolved in 76.0 g of butyl butyrate. To this solution, 4.99 g of dicyclohexylmethane-4,4'-diisocyanate was added and stirred at 80°C to be homogeneously dissolved. To the obtained solution, 100 mg of Neostan U-600 (product name, manufactured by Nitto Kasei Co., Ltd.) was added and stirred at 80°C for 10 hours to synthesize a polymer T-5 (polyurethane), and a binder solution T-5 (concentration of polymer: 40% by mass) consisting of the polymer T-5 was obtained.

The structure of each of the synthesized polymers is shown below. The content of each constitutional component is as shown in Table 1. It is noted that since the polymers S-11 to S-15 and T-1 to T-3 are polymers having the same chemical structure as the polymer S-3 but differing in Mw, the description of the chemical structure is omitted. Further, since S-17 is a polymer having the same constitutional components as S-16 but differing in the content and Mw of each constitutional component, the description of the chemical structure is omitted. Further, since S-19 is a polymer having the same constitutional components as S-18 but differing in the content and Mw of each constitutional component, the description of the chemical structure is omitted. In addition, "Me" indicates a methyl group.

S-1 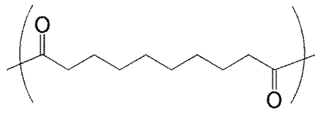 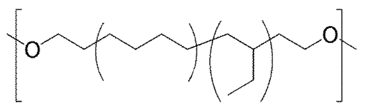

S-2 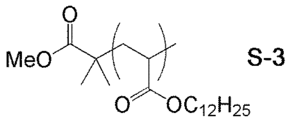 S-3 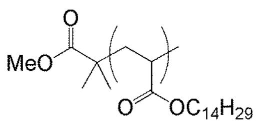 S-4 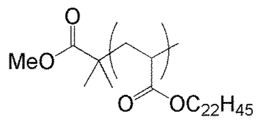

S-5 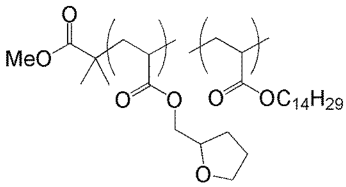 S-6 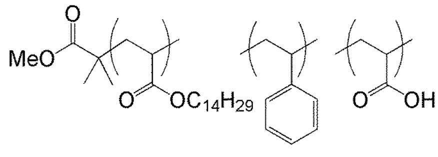

S-7 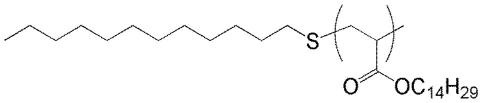 S-8 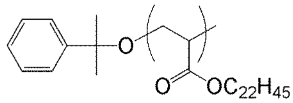

S-9 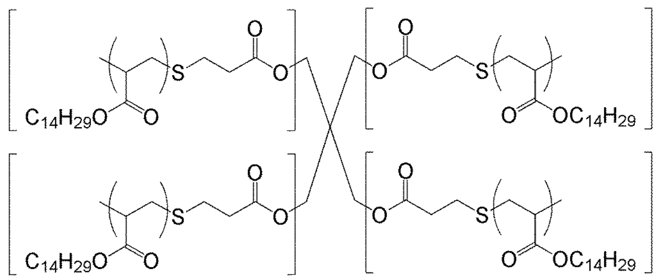

S-10 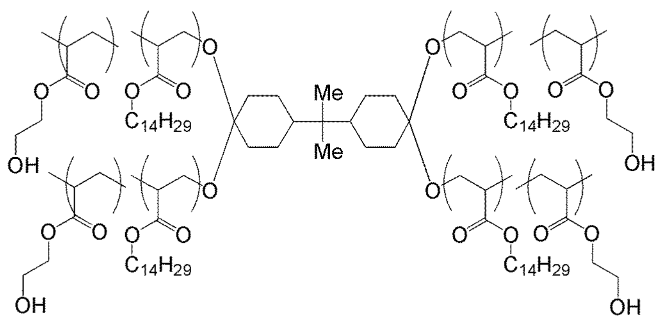

S-16 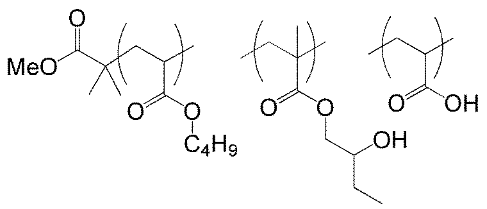

**S-18**

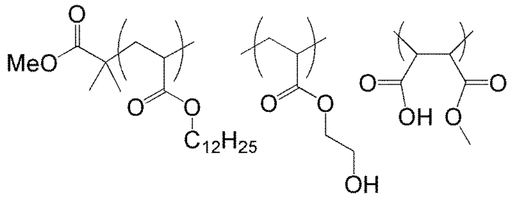

T-4

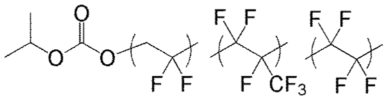

T-5

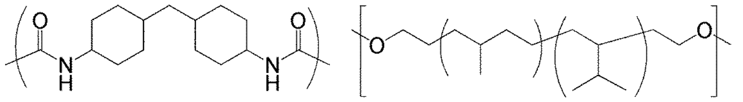

[Table 1]

| No. | Constitutional component M1 | | Constitutional component M2 | | Constitutional component M3 | | Constitutional component M4 | | Mw |
|---|---|---|---|---|---|---|---|---|---|
| | | Content (% by mole) | | Content (% by mole) | | Content (% by mole) | | Content (% by mole) | |
| S-1 | Dimethyl sebacate | 50 | NISSO-PB G11000 | 50 | - | - | - | - | 24000 |
| S-2 | LA | 99 | - | - | - | - | V-601 | 1 | 26000 |
| S-3 | TdA | 99 | - | - | - | - | V-601 | 1 | 29000 |
| S-4 | DoA | 99 | - | - | - | - | V-601 | 1 | 89000 |
| S-5 | TdA | 79 | THFA | 20 | - | - | V-601 | 1 | 43000 |
| S-6 | TdA | 18 | Styrene | 80 | AA | 1 | V-601 | 1 | 72000 |
| S-7 | TdA | 98.4 | - | - | - | - | V-601 Dodecanethiol | 0.6/1.0 | 11000 |
| S-8 | TdA | 99 | - | - | - | - | PERCUMYL D | 1 | 45000 |
| S-9 | TdA | 99 | - | - | - | - | PTMP | 1 | 76000 |
| S-10 | TdA | 95 | HEA | 4.0 | - | - | PERTETRA A | 1 | 94000 |
| S-11 | TdA | 99 | - | - | - | - | V-601 | 1 | 12000 |
| S-12 | TdA | 99 | - | - | - | - | V-601 | 1 | 140000 |
| S-13 | TdA | 99 | - | - | - | - | V-601 | 1 | 250000 |
| S-14 | TdA | 99 | - | - | - | - | V-601 | 1 | 75000 |
| S-15 | TdA | 99 | - | - | - | - | V-601 | 1 | 2400 |
| S-16 | BA | 88.6 | 2-HBMA | 8.1 | AA | 1.6 | V-601 | 1.7 | 42000 |
| S-17 | BA | 84.8 | 2-HBMA | 11.9 | AA | 1.6 | V-601 | 1.7 | 25000 |

(continued)

| No. | Constitutional component M1 | | Constitutional component M2 | | Constitutional component M3 | | Constitutional component M4 | | Mw |
|---|---|---|---|---|---|---|---|---|---|
| | | Content (% by mole) | | Content (% by mole) | | Content (% by mole) | | Content (% by mole) | |
| S-18 | LA | 86.6 | HEA | 101 | MA | 0.4 | V-601 | 2.9 | 25000 |
| S-19 | LA | 93 | HEA | 3.5 | MA | 0.5 | V-601 | 3.0 | 34000 |
| T-1 | TdA | 99 | - | - | - | - | V-601 | 1 | 1400 |
| T-2 | TdA | 99 | - | - | - | - | V-601 | 1 | 230000 |
| T-3 | TdA | 99 | - | - | - | - | V-601 | 1 | 670000 |
| T-4 | VDF | 54 | HFP | 200 | TFE | 25.0 | PEROYL IPP | 1 | 150000 |
| T-5 | H12MDI | 50 | EPOL | 500 | - | - | - | - | 66000 |

<Abbreviations in table>

In the table, "-" in the column of the constitutional component indicates that the constitutional component does not have a corresponding constitutional component.

The constitutional components M1 to M3 are constitutional components derived from the compounds listed in the table.

- Constitutional component M1 -

LA: Lauryl (meth)acrylate.
TdA: Tetradecyl acrylate
DoA: Docosyl acrylate
VDF: Vinylidene difluoride
H12MDI: Dicyclohexylmethane 4,4'-diisocyanate
BA: Butyl acrylate

- Constitutional component M2 -

NISSO-PB GI1000: Liquid-state hydrogenated polybutadiene diol (product name, number average molecular weight: 1,400, manufactured by NIPPON SODA Co., Ltd.)
THFA: Tetrahydrofurfuryl acrylate
HEA: 2-hydroxyethyl acrylate
2-HBMA: 2-hydroxybutyl methacrylate
HFP: Hexafluoropropylene
EPOL (registered trademark): Hydroxy-terminated liquid polyolefin manufactured by Idemitsu Kosan Co., Ltd.

- Constitutional component M3 -

MA: Monomethyl maleate
AA: Acrylic acid
TFE: Tetrafluoroethylene

- Constitutional component 4 -

The constitutional component 4 indicates the residue of the following polymerization initiator.

Dodecanethiol
V-601 (product name, chemical name: dimethyl 2,2'-azobis (2-methylpropionate) manufactured by FUJIFII,M Wako Pure Chemical Corporation)
PERCUMYL D: (product name, chemical name: dicumyl peroxide, manufactured by NOF CORPORATION)
PTMP: Pentaerythritol tetra(3-mercaptopropionate)
PERTETRA A: (Product name, chemical name: 2,2-bis (4,4-di-t-butylperoxycyclohexyl)propane, manufactured by NOF CORPORATION)
PEROYL IPP (product name, chemical name: diisopropyl peroxydicarbonate, manufactured by NOF CORPORATION)

The "% by mole" in the table is a value calculated from the using amount in a case where the total of molar quantity of all the raw material compounds is set to 100% by mole.

2. Synthesis of sulfide-based inorganic solid electrolyte

[Synthesis Example A]

A sulfide-based inorganic solid electrolyte was synthesized with reference to a non-patent document of T. Ohtomo, A. Hayashi, M. Tatsumisago, Y. Tsuchida, S. Hama, K. Kawamoto, Journal of Power Sources, 233, (2013), pp. 231 to 235 and A. Hayashi, S. Hama, H. Morimoto, M. Tatsumisago, T. Minami, Chem. Lett., (2001), pp. 872 and 873.
Specifically, in a globe box under an argon atmosphere (dew point: -70°C), lithium sulfide ($Li_2S$, manufactured by Sigma-Aldrich Co., LLC Co., LLC Co., LLC, purity: > 99.98%) (2.42 g) and diphosphorus pentasulfide ($P_2S_5$, manufactured by Sigma-Aldrich Co., LLC Co., LLC Co., LLC, purity: > 99%) (3.90 g) each were weighed, put into an agate mortar, and mixed using an agate muddler for five minutes. The mixing ratio between $Li_2S$ and $P_2S_5$ ($Li_2S$:$P_2S_5$) was set to 75:25 in terms of molar ratio.
Next, 66 g of zirconia beads having a diameter of 5 mm were put into a 45 mL container made of zirconia (manufactured by FRITSCH), the entire amount of the mixture of the above lithium sulfide and the diphosphorus pentasulfide was put thereinto, and the container was completely sealed in an argon atmosphere. The container was set in a planetary ball mill P-7 (product name) manufactured by FRITSCH, and mechanical milling was carried out at a temperature of 25°C and a rotation speed of 510 rpm for 20 hours, thereby obtaining a yellow powder (6.20 g) of a sulfide-based inorganic solid electrolyte (Li-P-S-based glass, hereinafter, may be denoted as LPS). The particle diameter of the Li-P-S-based glass was 15 μm.

[Example 1]

Each of the compositions shown in Tables 2-1 to 2-4 (collectively may be referred to as Table 2) was prepared as follows.

<Preparation of inorganic solid electrolyte-containing composition K-1>

60 g of zirconia beads having a diameter of 5 mm was put into a 45 mL container (manufactured by FRITSCH), and the LPS synthesized in the above Synthesis Example A, the polymer binder solution shown in Table 2-1, and 13.5 g of a dispersion medium (butyl acetate) were put thereinto. LPS and a polymer binder solution were added at a mass proportion satisfying the solid content content shown in Table 2-1 so that the total mass of the solid content was 9 g. Then, this container was set in a planetary ball mill P-7 (product name) manufactured by FRITSCH. Mixing was carried out at a temperature of 25°C and a rotation speed of 150 rpm for 10 minutes to prepare an inorganic solid electrolyte-containing composition (slurry) K-1.
Each of inorganic solid electrolyte-containing compositions (slurries) K-2 to K-24 and Kc11 to Kc20 were prepared in the same manner as the inorganic solid electrolyte-containing composition K-1, except that in the preparation of the inorganic solid electrolyte-containing composition K-1, the compositions of the inorganic solid electrolyte-containing compositions K-2 to K-24 and Kc11 to Kc20 shown in Table 2 below were adopted instead of the composition of the inorganic solid electrolyte-containing composition K-1 shown in Table 2 below.

<Preparation of composition for positive electrode PK-1>

60 g of zirconia beads having a diameter of 5 mm were put into a 45 mL container made of zirconia (manufactured by FRITSCH), and then the LPS synthesized in Synthesis Example A, and 12.6 g of a dispersion medium (butyl butyrate) were put thereinto. The container was set in a planetary ball mill P-7 (product name, manufactured by FRITSCH) and the components were stirred for 30 minutes at 25°C and a rotation speed of 200 pm. Then, NMC (manufactured by Sigma-Aldrich Co., LLC) as the positive electrode active material, a conductive auxiliary agent (acetylene black (AB)), and the polymer binder solution shown in Table 2 were put into this container, and the container was set in the planetary ball mill P-7, mixing was continued for 30 minutes at a temperature of 25°C and a rotation speed of 200 rpm to prepare a positive electrode composition (a slurry) PK-1. LPS, NMC, AB, and a polymer binder solution were added at a mass proportion satisfying the solid content content shown in Table 2-2 so that the total mass of the solid content was 36 g.
Each of compositions (slurries) for a positive electrode PK-2 to PK-18 was prepared in the same manner as the positive electrode composition PK-1 except that in the preparation of the positive electrode composition PK-1, the compositions of the positive electrode compositions PK-2 to PK-18 shown in Table 2 below were adopted instead of the composition of the positive electrode composition PK-1 shown in Table 2 below.

<Preparation of composition for negative electrode NK-1>

60 g of zirconia beads having a diameter of 5 mm was put into a 45 mL container (manufactured by FRITSCH), and the LPS synthesized in the above Synthesis Example A, the polymer binder solution, and 36.0 g of a dispersion medium (butyl acetate) were put thereinto. The container was set in a planetary ball mill P-7 (product name, manufactured by FRITSCH) and the components were mixed for 60 minutes at a temperature of 25°C and a rotation speed of 300 pm. Then, silicon (Si, manufactured by Sigma-Aldrich Co., LLC) as the negative electrode active material and VGCF (manufactured by Showa Denko K.K.) as the conductive auxiliary agent were put into the container. Similarly, the container was subsequently set in a planetary ball mill P-7, and mixing was carried out at 25°C for 10 minutes at a rotation speed of 100 rpm to prepare a composition (a slurry) NK-1 for a negative electrode. LPS, Si, VGCF, and a polymer binder solution were added at a mass proportion satisfying the solid content content shown in Table 2-3 so that the total mass of the solid content was 36 g.

Each of compositions (slurries) for a negative electrode NK-2 to NK-19 and NKc21 to Nkc30 was prepared in the same manner as the negative electrode composition NK-1 except that in the preparation of the negative electrode composition NK-1, the compositions of the negative electrode compositions NK-2 to NK-19 and NKc21 to NKc30 shown in Table 2 below were adopted instead of the composition of the negative electrode composition NK-1 shown in Table 2 below.

[Table 2-1]

| | No. | Inorganic solid electrolyte | | | Binder solution | | | | | Dispersion medium | | Note |
|---|---|---|---|---|---|---|---|---|---|---|---|---|
| | | | Composition content | Solid content | | Mw | Composition content | Solid content | Mw x α | | Composition content | |
| Inorganic solid electrolyte-containing composition | K-1 | LPS | 39.8 | 99.5 | S-1 | 24000 | 0.2 | 0.5 | 12000 | Butyl butyrate | 60.0 | Present invention |
| | K-2 | LPS | 39.8 | 99.5 | S-2 | 26000 | 0.2 | 0.5 | 13000 | Butyl butyrate | 60.0 | Present invention |
| | K-3 | LPS | 39.8 | 99.5 | S-3 | 29000 | 0.2 | 0.5 | 14500 | Butyl butyrate | 60.0 | Present invention |
| | K-4 | LPS | 39.8 | 99.5 | S-4 | 89000 | 0.2 | 0.5 | 44500 | Butyl butyrate | 60.0 | Present invention |
| | K-5 | LPS | 39.8 | 99.5 | S-5 | 43000 | 0.2 | 0.5 | 21500 | Butyl butyrate | 60.0 | Present invention |
| | K-6 | LPS | 39.8 | 99.5 | S-6 | 72000 | 0.2 | 0.5 | 36000 | Butyl butyrate | 60.0 | Present invention |
| | K-7 | LPS | 39.8 | 99.5 | S-7 | 11000 | 0.2 | 0.5 | 5500 | Butyl butyrate | 60.0 | Present invention |
| | K-8 | LPS | 39.8 | 99.5 | S-8 | 45000 | 0.2 | 0.5 | 22500 | Butyl butyrate | 60.0 | Present invention |
| | K-9 | LPS | 39.8 | 99.5 | S-9 | 76000 | 0.2 | 0.5 | 38000 | Butyl butyrate | 60.0 | Present invention |
| | K-10 | LPS | 39.8 | 99.5 | S-10 | 94000 | 0.2 | 0.5 | 47000 | Butyl butyrate | 60.0 | Present invention |
| | K-11 | LPS | 39.8 | 99.5 | S-11 | 12000 | 0.2 | 0.5 | 6000 | Butyl butyrate | 60.0 | Present invention |
| | K-12 | LPS | 39.8 | 99.5 | S-12 | 140000 | 0.2 | 0.5 | 70000 | Butyl butyrate | 60.0 | Present invention |
| | K-13 | LPS | 39.9 | 99.8 | S-13 | 250000 | 0.1 | 0.2 | 50000 | Butyl butyrate | 60.0 | Present invention |
| | K-14 | LPS | 39.9 | 99.8 | S-11 | 12000 | 0.1 | 0.2 | 2400 | Butyl butyrate | 60.0 | Present invention |
| | K-15 | LPS | 39.7 | 99.3 | S-14 | 75000 | 0.3 | 0.7 | 52500 | Butyl butyrate | 60.0 | Present invention |
| | K-16 | LPS | 39.7 | 99.3 | S-3 | 29000 | 0.3 | 0.7 | 20300 | Butyl butyrate | 60.0 | Present invention |
| | K-17 | LPS | 39.7 | 99.3 | S-15 | 2400 | 0.3 | 0.7 | 1680 | Butyl butyrate | 60.0 | Present invention |
| | K-18 | LPS | 39.8 | 99.5 | S-15 | 2400 | 0.2 | 0.5 | 1200 | Butyl butyrate | 60.0 | Present invention |
| | K-19 | LPS | 39.9 | 99.8 | S-15 | 2400 | 0.1 | 0.2 | 480 | Butyl butyrate | 60.0 | Present invention |
| | K-20 | LLT | 39.8 | 99.5 | S-1 | 24000 | 0.2 | 0.5 | 12000 | Butyl butyrate | 60.0 | Present invention |
| | K-21 | LPS | 39.8 | 99.5 | S-16 | 42000 | 0.2 | 0.5 | 21000 | Butyl butyrate | 60.0 | Present invention |
| | K-22 | LPS | 39.8 | 99.5 | S-17 | 25000 | 0.2 | 0.5 | 12500 | Butyl butyrate | 60.0 | Present invention |
| | K-23 | LPS | 39.8 | 99.5 | S-18 | 25000 | 0.2 | 0.5 | 12500 | Butyl butyrate | 60.0 | Present invention |
| | K-24 | LPS | 39.8 | 99.5 | S-19 | 34000 | 0.2 | 0.5 | 17000 | Butyl butyrate | 60.0 | Present invention |

[Table 2-2]

| | No. | Inorganic solid electrolyte | | | Binder solution | | | | | Dispersion medium | | Active material | | | Conductive auxiliary agent | | | Note |
|---|---|---|---|---|---|---|---|---|---|---|---|---|---|---|---|---|---|---|
| | | | Composition content | Solid content | | Mw | Composition content | Solid content | Mw x α | | Composition content | | Composition content | Solid content | | Composition content | Solid content | |
| Composition for positive electrode | PK-1 | LPS | 20.4 | 27.5 | S-1 | 24000 | 0.4 | 0.5 | 12000 | Butyl butyrate | 26.0 | NMC | 51.8 | 70.0 | AB | 1.5 | 2.0 | Present invention |
| | PK-2 | LPS | 20.4 | 27.5 | S-3 | 29000 | 0.4 | 0.5 | 14500 | Butyl butyrate | 26.0 | NMC | 51.8 | 70.0 | AB | 1.5 | 2.0 | Present invention |
| | PK-3 | LPS | 20.4 | 27.5 | S-6 | 72000 | 0.4 | 0.5 | 36000 | Butyl butyrate | 26.0 | NMC | 51.8 | 70.0 | AB | 1.5 | 2.0 | Present invention |
| | PK-4 | LPS | 20.4 | 27.5 | S-7 | 11000 | 0.4 | 0.5 | 5500 | Butyl butyrate | 26.0 | NMC | 51.8 | 70.0 | AB | 1.5 | 2.0 | Present invention |
| | PK-5 | LPS | 20.4 | 27.5 | S-9 | 76000 | 0.4 | 0.5 | 38000 | Butyl butyrate | 26.0 | NMC | 51.8 | 70.0 | AB | 1.5 | 2.0 | Present invention |
| | PK-6 | LPS | 20.4 | 27.5 | S-11 | 12000 | 0.4 | 0.5 | 6000 | Butyl butyrate | 26.0 | NMC | 51.8 | 70.0 | AB | 1.5 | 2.0 | Present invention |
| | PK-7 | LPS | 20.4 | 27.5 | S-12 | 140000 | 0.4 | 0.5 | 70000 | Butyl butyrate | 26.0 | NMC | 51.8 | 70.0 | AB | 1.5 | 2.0 | Present invention |
| | PK-8 | LPS | 20.6 | 27.8 | S-13 | 250000 | 0.1 | 0.2 | 50000 | Butyl butyrate | 26.0 | NMC | 51.8 | 70.0 | AB | 1.5 | 2.0 | Present invention |
| | PK-9 | LPS | 20.6 | 27.8 | S-11 | 12000 | 0.1 | 0.2 | 2400 | Butyl butyrate | 26.0 | NMC | 51.8 | 70.0 | AB | 1.5 | 2.0 | Present invention |
| | PK-10 | LPS | 20.2 | 27.3 | S-14 | 75000 | 0.5 | 0.7 | 52500 | Butyl butyrate | 26.0 | NMC | 51.8 | 70.0 | AB | 1.5 | 2.0 | Present invention |
| | PK-11 | LPS | 20.2 | 27.3 | S-3 | 29000 | 0.5 | 0.7 | 20300 | Butyl butyrate | 26.0 | NMC | 51.8 | 70.0 | AB | 1.5 | 2.0 | Present invention |
| | PK-12 | LPS | 20.2 | 27.3 | S-15 | 2400 | 0.5 | 0.7 | 1680 | Butyl butyrate | 26.0 | NMC | 51.8 | 70.0 | AB | 1.5 | 2.0 | Present invention |
| | PK-13 | LPS | 20.4 | 27.5 | S-15 | 2400 | 0.4 | 0.5 | 1200 | Butyl butyrate | 26.0 | NMC | 51.8 | 70.0 | AB | 1.5 | 2.0 | Present invention |
| | PK-14 | LPS | 20.6 | 27.8 | S-15 | 2400 | 0.1 | 0.2 | 480 | Butyl butyrate | 26.0 | NMC | 51.8 | 70.0 | AB | 1.5 | 2.0 | Present invention |
| | PK-15 | LPS | 20.4 | 27.5 | S-16 | 42000 | 0.4 | 0.5 | 21000 | Butyl butyrate | 26.0 | NMC | 51.8 | 70.0 | AB | 1.5 | 2.0 | Present invention |
| | PK-16 | LPS | 20.4 | 27.5 | S-17 | 25000 | 0.4 | 0.5 | 12500 | Butyl butyrate | 26.0 | NMC | 51.8 | 70.0 | AB | 1.5 | 2.0 | Present invention |
| | PK-17 | LPS | 20.4 | 27.5 | S-18 | 25000 | 0.4 | 0.5 | 12500 | Butyl butyrate | 26.0 | NMC | 51.8 | 70.0 | AB | 1.5 | 2.0 | Present invention |
| | PK-18 | LPS | 20.4 | 27.5 | S-19 | 34000 | 0.4 | 0.5 | 17000 | Butyl butyrate | 26.0 | NMC | 51.8 | 70.0 | AB | 1.5 | 2.0 | Present invention |

[Table 2-3]

| | No. | Inorganic solid electrolyte | | | Binder solution | | | | | Dispersion medium | | Active material | | | Conductive auxiliary agent | | | Note |
|---|---|---|---|---|---|---|---|---|---|---|---|---|---|---|---|---|---|---|
| | | | Composition content | Solid content | | Mw | Composition content | Solid content | Mw x α | | Composition content | | Composition content | Solid content | | Composition content | Solid content | |
| Composition for negative electrode | NK-1 | LPS | 22.8 | 45.5 | S-1 | 24000 | 0.3 | 0.5 | 12000 | Butyl butyrate | 50.0 | Si | 25.0 | 50.0 | VGCF | 2.0 | 4.0 | Present invention |
| | NK-2 | LPS | 22.8 | 45.5 | S-3 | 29000 | 0.3 | 0.5 | 14500 | Butyl butyrate | 50.0 | Si | 25.0 | 50.0 | VGCF | 2.0 | 4.0 | Present invention |
| | NK-3 | LPS | 22.8 | 45.5 | S-6 | 72000 | 0.3 | 0.5 | 36000 | Butyl butyrate | 50.0 | Si | 25.0 | 50.0 | VGCF | 2.0 | 4.0 | Present invention |
| | NK-4 | LPS | 22.8 | 45.5 | S-7 | 11000 | 0.3 | 0.5 | 5500 | Butyl butyrate | 50.0 | Si | 25.0 | 50.0 | VGCF | 2.0 | 4.0 | Present invention |
| | NK-5 | LPS | 22.8 | 45.5 | S-9 | 76000 | 0.3 | 0.5 | 38000 | Butyl butyrate | 50.0 | Si | 25.0 | 50.0 | VGCF | 2.0 | 4.0 | Present invention |
| | NK-6 | LPS | 22.8 | 45.5 | S-11 | 12000 | 0.3 | 0.5 | 6000 | Butyl butyrate | 50.0 | Si | 25.0 | 50.0 | VGCF | 2.0 | 4.0 | Present invention |
| | NK-7 | LPS | 22.8 | 45.5 | S-12 | 140000 | 0.3 | 0.5 | 70000 | Butyl butyrate | 50.0 | Si | 25.0 | 50.0 | VGCF | 2.0 | 4.0 | Present invention |
| | NK-8 | LPS | 22.9 | 45.8 | S-13 | 250000 | 0.1 | 0.2 | 50000 | Butyl butyrate | 50.0 | Si | 25.0 | 50.0 | VGCF | 2.0 | 4.0 | Present invention |
| | NK-9 | LPS | 22.9 | 45.8 | S-11 | 12000 | 0.1 | 0.2 | 2400 | Butyl butyrate | 50.0 | Si | 25.0 | 50.0 | VGCF | 2.0 | 4.0 | Present invention |
| | NK-10 | LPS | 22.7 | 45.3 | S-14 | 75000 | 0.4 | 0.7 | 52500 | Butyl butyrate | 50.0 | Si | 25.0 | 50.0 | VGCF | 2.0 | 4.0 | Present invention |
| | NK-11 | LPS | 22.7 | 45.3 | S-3 | 29000 | 0.4 | 0.7 | 20300 | Butyl butyrate | 50.0 | Si | 25.0 | 50.0 | VGCF | 2.0 | 4.0 | Present invention |
| | NK-12 | LPS | 22.7 | 45.3 | S-15 | 2400 | 0.4 | 0.7 | 1680 | Butyl butyrate | 50.0 | Si | 25.0 | 50.0 | VGCF | 2.0 | 4.0 | Present invention |
| | NK-13 | LPS | 22.8 | 45.5 | S-15 | 2400 | 0.3 | 0.5 | 1200 | Butyl butyrate | 50.0 | Si | 25.0 | 50.0 | VGCF | 2.0 | 4.0 | Present invention |
| | NK-14 | LPS | 22.9 | 45.8 | S-15 | 2400 | 0.1 | 0.2 | 480 | Butyl butyrate | 50.0 | Si | 25.0 | 50.0 | VGCF | 2.0 | 4.0 | Present invention |
| | NK-15 | LLT | 22.8 | 45.5 | S-1 | 24000 | 0.3 | 0.5 | 12000 | Butyl butyrate | 50.0 | Si | 25.0 | 50.0 | VGCF | 2.0 | 4.0 | Present invention |
| | NK-16 | LPS | 22.8 | 45.5 | S-16 | 42000 | 0.3 | 0.5 | 21000 | Butyl butyrate | 50.0 | Si | 25.0 | 50.0 | VGCF | 2.0 | 4.0 | Present invention |
| | NK-17 | LPS | 22.8 | 45.5 | S-17 | 25000 | 0.3 | 0.5 | 12500 | Butyl butyrate | 50.0 | Si | 25.0 | 50.0 | VGCF | 2.0 | 4.0 | Present invention |
| | NK-18 | LPS | 22.8 | 45.5 | S-18 | 25000 | 0.3 | 0.5 | 12500 | Butyl butyrate | 50.0 | Si | 25.0 | 50.0 | VGCF | 2.0 | 4.0 | Present invention |
| | NK-19 | LPS | 22.8 | 45.5 | S-19 | 34000 | 0.3 | 0.5 | 17000 | Butyl butyrate | 50.0 | Si | 25.0 | 50.0 | VGCF | 2.0 | 4.0 | Present invention |

[Table 2-4]

| | No. | Inorganic solid electrolyte | | | Binder solution | | | | | Dispersion medium | | Active material | | | Conductive auxiliary agent | | | Note |
|---|---|---|---|---|---|---|---|---|---|---|---|---|---|---|---|---|---|---|
| | | | Composition content | Solid content | | Mw | Composition content | Solid content | Mw x α | | Composition content | | Composition content | Solid content | | Composition content | Solid content | |
| Solid electrolyte-containing composition | Kc11 | LPS | 39.9 | 99.8 | T-1 | 1400 | 0.1 | 0.2 | 280 | Butyl butyrate | 60.0 | - | - | - | - | - | - | Comparative Example |
| | Kc12 | LPS | 39.8 | 99.5 | T-2 | 230000 | 0.2 | 0.5 | 115000 | Butyl butyrate | 60.0 | - | - | - | - | - | - | Comparative Example |
| | Kc13 | LPS | 39.6 | 99.1 | S-3 | 29000 | 0.4 | 0.9 | 26100 | Butyl butyrate | 60.0 | - | - | - | - | - | - | Comparative Example |
| | Kc14 | LPS | 39.9 | 99.8 | T-3 | 670000 | 0.1 | 0.2 | 134000 | Butyl butyrate | 60.0 | - | - | - | - | - | - | Comparative Example |
| | Kc15 | LPS | 39.6 | 99.1 | S-14 | 75000 | 0.4 | 0.9 | 67500 | Butyl butyrate | 60.0 | - | - | - | - | - | - | Comparative Example |
| | Kc16 | LPS | 39.6 | 99.1 | S-15 | 2400 | 0.4 | 0.9 | 2160 | Butyl butyrate | 60.0 | - | - | - | - | - | - | Comparative Example |
| | Kc17 | LPS | 39.8 | 99.5 | T-1 | 1400 | 0.2 | 0.5 | 700 | Butyl butyrate | 60.0 | - | - | - | - | - | - | Comparative Example |
| | Kc18 | LPS | 39.8 | 99.5 | T-4 | 150000 | 0.2 | 0.5 | 75000 | Butyl butyrate | 60.0 | - | - | - | - | - | - | Comparative Example |
| | Kc19 | LPS | 39.8 | 99.5 | T-5 | 66000 | 0.2 | 0.5 | 33000 | Butyl butyrate | 60.0 | - | - | - | - | - | - | Comparative Example |
| | Kc20 | LPS | 40.0 | 100.0 | - | - | - | - | - | Butyl butyrate | 60.0 | - | - | - | - | - | - | Comparative Example |
| Composition for negative electrode | NKc21 | LPS | 22.9 | 45.8 | T-1 | 1400 | 0.1 | 0.2 | 280 | Butyl butyrate | 50.0 | Si | 25.0 | 50.0 | VGCF | 2.0 | 4.0 | Comparative Example |
| | NKc22 | LPS | 22.8 | 45.5 | T-2 | 230000 | 0.3 | 0.5 | 115000 | Butyl butyrate | 50.0 | Si | 25.0 | 50.0 | VGCF | 2.0 | 4.0 | Comparative Example |
| | NKc23 | LPS | 22.6 | 45.1 | S-3 | 29000 | 0.5 | 0.9 | 26100 | Butyl butyrate | 50.0 | Si | 25.0 | 50.0 | VGCF | 2.0 | 4.0 | Comparative Example |
| | NKc24 | LPS | 22.9 | 45.8 | T-3 | 670000 | 0.1 | 0.2 | 134000 | Butyl butyrate | 50.0 | Si | 25.0 | 50.0 | VGCF | 2.0 | 4.0 | Comparative Example |
| | NKc25 | LPS | 22.6 | 45.1 | S-14 | 75000 | 0.5 | 0.9 | 67500 | Butyl butyrate | 50.0 | Si | 25.0 | 50.0 | VGCF | 2.0 | 4.0 | Comparative Example |
| | NKc26 | LPS | 22.6 | 45.1 | S-15 | 2400 | 0.5 | 0.9 | 2160 | Butyl butyrate | 50.0 | Si | 25.0 | 50.0 | VGCF | 2.0 | 4.0 | Comparative Example |
| | NKc27 | LPS | 22.8 | 45.5 | T-1 | 1400 | 0.3 | 0.5 | 700 | Butyl butyrate | 50.0 | Si | 25.0 | 50.0 | VGCF | 2.0 | 4.0 | Comparative Example |
| | NKc28 | LPS | 22.8 | 45.5 | T-4 | 150000 | 0.3 | 0.5 | 75000 | Butyl butyrate | 50.0 | Si | 25.0 | 50.0 | VGCF | 2.0 | 4.0 | Comparative Example |
| | NKc29 | LPS | 22.8 | 45.5 | T-5 | 66000 | 0.3 | 0.5 | 33000 | Butyl butyrate | 50.0 | Si | 25.0 | 50.0 | VGCF | 2.0 | 4.0 | Comparative Example |
| | NKc30 | LPS | 23.0 | 46.0 | - | - | - | - | - | Butyl butyrate | 50.0 | Si | 25.0 | 50.0 | VGCF | 2.0 | 4.0 | Comparative Example |

<Note for table>

In Table 2, the composition content is the content (% by mass) with respect to the total mass of the composition, and the solid content is the content (% by mass) with respect to 100% by mass of the solid content of the composition. The unit is omitted in the table.

In Table 2-4, the "inorganic solid electrolyte-containing composition" is described as "Solid electrolyte-containing

composition".

<Abbreviations in table>

LPS: LPS synthesized in Synthesis Example A
LLT: $Li_{0.33}La_{0.55}TiO_3$ (average particle diameter: 3.25 μm
NMC: $LiNi_{1/3}Co_{1/3}Mn_{1/3}O_2$
Si: Silicon
AB: Acetylene black
VGCF: Carbon nanotube

<Production of solid electrolyte sheet for all-solid state secondary battery>

Each of the inorganic solid electrolyte-containing compositions shown in Table 3-1 and Table 3-2 (collectively may be referred to as Table 3) obtained as described above was applied onto an aluminum foil having a thickness of 20 μm using a baker type applicator (product name: SA-201, manufactured by Tester Sangyo Co., Ltd.) and heated at 80°C for 2 hours to dry (to remove the dispersion medium) the inorganic solid electrolyte-containing composition. Then, using a heat press machine, the inorganic solid electrolyte-containing composition dried at a temperature of 120°C and a pressure of 40 MPa for 10 seconds was heated and pressurized to produce each of solid electrolyte sheets 101 to 124 and c11 to c19 for an all-solid state secondary battery (in Table 3, it is written as "Solid electrolyte sheet"). The film thickness of the solid electrolyte layer was 50 μm.

<Production of positive electrode sheet for all-solid state secondary battery>

Each of the compositions for a positive electrode obtained as described above, which is shown in the column of "Composition for electrode" in Table 3, was applied onto an aluminum foil having a thickness of 20 μm by using a baker type applicator (product name: SA-201), heating was carried out at 80°C for 1 hour, and then heating was further carried out at 110°C for 1 hour to dry (to remove the dispersion medium) the composition for a positive electrode. Then, using a heat press machine, the dried composition for a positive electrode was pressurized (10 MPa, 1 minute) at 25°C to produce each of positive electrode sheets 125 to 142 for an all-solid state secondary battery, having a positive electrode active material layer having a film thickness of 80 μm (in Table 3-1, it is written as "Positive electrode sheet").

<Production of negative electrode sheet for all-solid state secondary battery>

Each of the compositions for a negative electrode obtained as described above, which is shown in the column of "Composition for electrode" in Table 3, was applied onto a copper foil having a thickness of 20 μm by using a baker type applicator (product name: SA-201), heating was carried out at 80°C for 1 hour, and then heating was further carried out at 110°C for 1 hour to dry (to remove the dispersion medium) the composition for a negative electrode. Then, using a heat press machine, the dried composition for a negative electrode was pressurized (10 MPa, 1 minute) at 25°C to produce each of negative electrode sheets 143 to 161 and c21 to c29 for an all-solid state secondary battery, having a negative electrode active material layer having a film thickness of 70 μm (in Table 3-2, it is written as "Negative electrode sheet").

<Evaluation 1: Surface smoothness test>

The constitutional layers of each solid electrolyte sheet for an all-solid state secondary battery, each positive electrode sheet for an all-solid state secondary battery, and each negative electrode sheet for an all-solid state secondary battery were peeled off from the support (the aluminum foil or the copper foil), and test pieces having a length of 20 mm and a width of 20 mm were cut out from this constituent layer. Using a constant pressure thickness measuring device (manufactured by TECLOCK Co., Ltd.), the thicknesses at 5 points of this test piece was measured, and the arithmetic mean value of the thicknesses was calculated.
From each measured value and the arithmetic mean value thereof, the large deviation value (the maximum deviation value) among the deviation values (%) obtained according to Expression (a) or (b) below was applied to the following evaluation standard to evaluate surface smoothness. "D" or higher is the pass level of this test (in a case of "D" or higher, the surface smoothness of the solid electrolyte layer, the positive electrode active material layer, and the negative electrode active material layer is high, and the pressurization during battery manufacturing (for example, 600

MPa) hardly causes cracking and breakage in each layer).

Expression (a) 100 × (the maximum value among the thicknesses at the 5 points - the arithmetic mean value)/(the arithmetic mean value)

Expression (b) 100 × (the minimum value among the thicknesses at the 5 points - the arithmetic mean value)/(the arithmetic mean value)

The measurement points are the intersection A of the virtual lines x1 and y1, the intersection B of the virtual lines x1 and y3, the intersection C of the virtual lines x2 and y2, the intersection D of the virtual lines x3 and y1, and the intersection E of the virtual lines x3 and y3 (see Fig. 4).

- Evaluation standards -

A: Less than 1%
B: 1% or more and less than 3%
C: 3% or more and less than 5%
D: 5% or more and less than 10%
E: 10% or more and less than 20%
F: 20% or more

[Table 3-1]

| Sheet No. | Solid electrolyte-containing composition No. | Binder polymer No. | Composition for electrode No. | Binder polymer No. | Surface smoothness | Note 1 | Note 2 |
|---|---|---|---|---|---|---|---|
| 101 | K-1 | S-1 | - | - | D | | Present invention |
| 102 | K-2 | S-2 | - | - | C | | Present invention |
| 103 | K-3 | S-3 | - | - | B | | Present invention |
| 104 | K-4 | S-4 | - | - | B | | Present invention |
| 105 | K-5 | S-5 | - | - | B | | Present invention |
| 106 | K-6 | S-6 | - | - | B | | Present invention |
| 107 | K-7 | S-7 | - | - | A | | Present invention |
| 108 | K-8 | S-8 | - | - | A | | Present invention |
| 109 | K-9 | S-9 | - | - | A | | Present invention |
| 110 | K-10 | S-10 | - | - | A | | Present invention |

(continued)

| Sheet No. | Solid electrolyte-containing composition No. | Binder polymer No. | Composition for electrode No. | Binder polymer No. | Surface smoothness | Note 1 | Note 2 |
|---|---|---|---|---|---|---|---|
| 111 | K-11 | S-11 | - | - | B | Solid electrolyte sheet | Present invention |
| 112 | K-12 | S-12 | - | - | B | | Present invention |
| 113 | K-13 | S-13 | - | - | B | | Present invention |
| 114 | K-14 | S-11 | - | - | B | | Present invention |
| 115 | K-15 | S-14 | - | - | B | | Present invention |
| 116 | K-16 | S-3 | - | - | B | | Present invention |
| 117 | K-17 | S-15 | - | - | B | | Present invention |
| 118 | K-18 | S-15 | - | - | B | | Present invention |
| 119 | K-19 | S-15 | - | - | B | | Present invention |
| 120 | K-20 | S-1 | - | - | D | | Present invention |
| 121 | K-21 | S-16 | - | - | C | | Present invention |
| 122 | K-22 | S-17 | - | - | C | | Present invention |
| 123 | K-23 | S-18 | - | - | C | | Present invention |
| 124 | K-24 | S-19 | - | - | C | | Present invention |
| 125 | - | - | PK-1 | S-1 | D | | Present invention |
| 126 | - | - | PK-2 | S-3 | B | | Present invention |
| 127 | - | - | PK-3 | S-6 | B | | Present invention |
| 128 | - | - | PK-4 | S-7 | A | | Present invention |
| 129 | - | - | PK-5 | S-9 | A | | Present invention |
| 130 | - | - | PK-6 | S-11 | B | | Present invention |
| 131 | - | - | PK-7 | S-12 | B | | Present invention |

(continued)

| Sheet No. | Solid electrolyte-containing composition No. | Binder polymer No. | Composition for electrode No. | Binder polymer No. | Surface smoothness | Note 1 | Note 2 |
|---|---|---|---|---|---|---|---|
| 132 | - | - | PK-8 | S-13 | B | Positive electrode sheet | Present invention |
| 133 | - | - | PK-9 | S-11 | B | | Present invention |
| 134 | - | - | PK-10 | S-14 | B | | Present invention |
| 135 | - | - | PK-11 | S-13 | B | | Present invention |
| 136 | - | - | PK-12 | S-15 | B | | Present invention |
| 137 | - | - | PK-13 | S-15 | B | | Present invention |
| 138 | - | - | PK-14 | S-15 | B | | Present invention |
| 139 | - | - | PK-15 | S-16 | C | | Present invention |
| 140 | - | - | PK-16 | S-17 | C | | Present invention |
| 141 | - | - | PK-17 | S-18 | C | | Present invention |
| 142 | - | - | PK-18 | S-19 | C | | Present invention |

[Table 3-2]

| Sheet No. | Solid electrolyte-containi ng composition No. | Binder polymer No. | Composition for electrode No. | Binder polymer No. | Surface smoothness | Note 1 | Note 2 |
|---|---|---|---|---|---|---|---|
| 143 | - | - | NK-1 | S-1 | D | Negative electrode sheet | Present invention |
| 144 | - | - | NK-2 | S-3 | B | | Present invention |
| 145 | - | - | NK-3 | S-6 | B | | Present invention |
| 146 | - | - | NK-4 | S-7 | A | | Present invention |
| 147 | - | - | NK-5 | S-9 | A | | Present invention |
| 148 | - | - | NK-6 | S-11 | B | | Present invention |
| 149 | - | - | NK-7 | S-12 | B | | Present invention |
| 150 | - | - | NK-8 | S-13 | B | | Present invention |
| 151 | - | - | NK-9 | S-11 | B | | Present invention |
| 152 | - | - | NK-10 | S-14 | B | | Present invention |
| 153 | - | - | NK-11 | S-3 | B | | Present invention |
| 154 | - | - | NK-12 | S-15 | B | | Present invention |
| 155 | - | - | NK-13 | S-15 | B | | Present invention |
| 156 | - | - | NK-14 | S-15 | B | | Present invention |
| 157 | - | - | NK-15 | S-1 | D | | Present invention |
| 158 | - | - | NK-16 | S-16 | C | | Present invention |
| 159 | - | - | NK-17 | S-17 | C | | Present invention |
| 160 | - | - | NK-18 | S-18 | C | | Present invention |
| 161 | - | - | NK-19 | S-19 | C | | Present invention |

(continued)

| Sheet No. | Solid electrolyte-containi ng composition No. | Binder polymer No. | Composition for electrode No. | Binder polymer No. | Surface smoothness | Note 1 | Note 2 |
|---|---|---|---|---|---|---|---|
| c11 | Kc11 | T-1 | - | - | F | Solid electrolyte sheet | Comparative Example |
| c12 | Kc12 | T-2 | - | - | F | | Comparative Example |
| c13 | Kc13 | S-3 | - | - | F | | Comparative Example |
| c14 | Kc14 | T-3 | - | - | F | | Comparative Example |
| c15 | Kc15 | S-14 | - | - | F | | Comparative Example |
| c16 | Kc16 | S-15 | - | - | F | | Comparative Example |
| c17 | Kc17 | T-1 | - | - | F | | Comparative Example |
| c18 | Kc18 | T-4 | - | - | F | | Comparative Example |
| c19 | Kc19 | T-5 | - | - | F | | Comparative Example |
| c21 | - | - | NKc21 | T-1 | F | Negative electrode sheet | Comparative Example |
| c22 | - | - | NKc22 | T-2 | F | | Comparative Example |
| c23 | - | - | NKc23 | S-3 | F | | Comparative Example |
| c24 | - | - | NKc24 | T-3 | F | | Comparative Example |
| c25 | - | - | NKc25 | S-14 | F | | Comparative Example |
| c26 | - | - | NKc26 | S-15 | F | | Comparative Example |
| c27 | - | - | NKc27 | T-1 | F | | Comparative Example |
| c28 | - | - | NKc28 | T-4 | F | | Comparative Example |
| c29 | - | - | NKc29 | T-5 | F | | Comparative Example |

As revealed from Table 3, Inorganic solid electrolyte-containing compositions that do not satisfy any of Expressions (1) to (3) defined in the present invention or the sheets for all-solid state secondary batteries of Nos. c11 to c19 and Nos. c21 to c29, which are prepared from an inorganic solid electrolyte-containing composition prepared using a polymer binder other than the polyester, the vinyl polymer, and the (meth)acrylic polymer are inferior in surface smoothness although they satisfy Expressions (1) to (3).

On the other hand, all of Nos. 101 to 161 of the sheets for an all-solid state secondary battery, which are produced from the inorganic solid electrolyte-containing composition according to the embodiment of the present invention, have excellent surface smoothness. In particular, as shown in Nos. 107 to 110, 128, 129, 146, and 147, the surface smoothness is further improved in a case of using a (meth)acrylic polymer having, at the main chain terminal, a residue of at least one polymerization initiator of a chain transfer agent containing a sulfur atom or an organic peroxide polymerization initiator.

As described above, since the sheet for an all-solid state secondary battery according to the embodiment of the present invention has a constitutional layer having excellent surface smoothness, it is possible to suppress the occurrence of defects such as cracking, breakage, and the like in the constitutional layer in the manufacturing process of the all-solid state secondary battery, and it is possible to enhance the interlaminar adhesion. As a result, in a case of using the sheet for an all-solid state secondary battery according to the embodiment of the present invention for manufacturing an all-solid state secondary battery, the sheet for an all-solid state secondary battery according to the embodiment of the present invention contributes to the improvement of battery performance such as ion conductivity, which will be described later.

<Production of positive electrode sheet for all-solid state secondary battery, which has solid electrolyte layer>

Next, the solid electrolyte sheet shown in the column of "Solid electrolyte layer" of Table 4, prepared as described above, was overlaid on the positive electrode active material layer of each of the positive electrode sheets for an all-solid state secondary battery shown in the column of "Electrode active material layer" of Table 4 so that it came into contact with the positive electrode active material layer, transferred (laminated) by being pressurized at 50 MPa and 25°C using a press machine, and then pressurized at 600 MPa and at 25°C, whereby each of positive electrode sheets 125 to 142 for an all-solid state secondary battery having a thickness of 30 μm (thickness of positive electrode active material layer: 60 μm) was produced.

<Production of negative electrode sheet for all-solid state secondary battery, which has solid electrolyte layer>

Next, the solid electrolyte sheet shown in the column of "Solid electrolyte layer" of Table 4, prepared as described above, was overlaid on the negative electrode active material layer of each of the negative electrode sheets for an all-solid state secondary battery shown in the column of "Electrode active material layer" of Table 4 so that it came into contact with the negative electrode active material layer, transferred (laminated) by being pressurized at 50 MPa and 25°C using a press machine, and then pressurized at 600 MPa and at 25°C, whereby each of negative electrode sheets 143 to 161 and c21 to c29 for an all-solid state secondary battery having a thickness of 30 μm (thickness of negative electrode active material layer: 50 μm) was produced.

<Manufacturing of all-solid state secondary battery>

An all-solid state secondary battery (No. 101) having a layer configuration illustrated in Fig. 1 was manufactured as follows.

The positive electrode sheet No. 125 for an all-solid state secondary battery (the aluminum foil of the solid electrolyte-containing sheet had been peeled off), which has the solid electrolyte layer obtained above, was cut out into a disk shape having a diameter of 14.5 mm and placed, as illustrated in Fig. 2, in a stainless 2032-type coin case 11 into which a spacer and a washer (not illustrated in Fig. 2) had been incorporated. Next, a lithium foil cut out in a disk shape having a diameter of 15 mm was overlaid on the solid electrolyte layer. After further overlaying a stainless steel foil thereon, the 2032-type coin case 11 was crimped to manufacture an all-solid state secondary battery 13 (No. 101), illustrated in Fig. 2.

The all-solid state secondary battery manufactured in this manner has a layer configuration illustrated in Fig. 1 (however, the lithium foil corresponds to a negative electrode active material layer 2 and a negative electrode collector 1).

Each of all-solid state secondary batteries (Nos. 102 to 118) was manufactured in the same manner as in the manufacturing of the all-solid state secondary battery (No. 101), except that in the manufacturing of the all-solid state secondary battery (No. 101), a positive electrode sheet for an all-solid state secondary battery, which has a solid electrolyte layer and is indicated by No. shown in the column of "Electrode active material layer" of Table 4 was used instead of the positive electrode No. 125 for a secondary battery, which has a solid electrolyte layer.

An all-solid state secondary battery (No. 119) having a layer configuration illustrated in Fig. 1 was manufactured as follows.

The negative electrode sheet No. 143 for an all-solid state secondary battery (the aluminum foil of the solid electrolyte-containing sheet had been peeled off), which has the solid electrolyte layer obtained above, was cut out into a disk shape having a diameter of 14.5 mm and placed, as illustrated in Fig. 2, in a stainless 2032-type coin case 11 into which a spacer and a washer (not illustrated in Fig. 2) had been incorporated. Next, a positive electrode sheet (a positive electrode active material layer) punched out from the positive electrode sheet for an all-solid state secondary

battery produced below into a disk shape having a diameter of 14.0 mm was overlaid on the solid electrolyte layer. A stainless steel foil (a positive electrode collector) was further layered thereon to form a laminate 12 for an all-solid state secondary battery (a laminate consisting of stainless steel foil - aluminum foil - positive electrode active material layer - solid electrolyte layer - negative electrode active material layer - copper foil). Then, the 2032-type coin case 11 was crimped to manufacture an all-solid state secondary battery No. 119 illustrated in Fig. 2.

A positive electrode sheet for a solid-state secondary battery to be used in the manufacturing of the all-solid state secondary battery (No. 119) was prepared as follows.

(Preparation of composition for positive electrode)

180 beads of zirconia beads having a diameter of 5 mm were put into a 45 mL container made of zirconia (manufactured by FRITSCH), 2.7 g of the LPS synthesized in the above Synthesis Example A, and 0.3 g of KYNAR FLEX 2500-20 (product name, PVdF-HFP: polyvinylidene fluoride - hexafluoropropylene copolymer, manufactured by Arkema S.A.) in terms of a solid content mass and 22 g of butyl butyrate were put into the above container. The container was set in a planetary ball mill P-7 (product name, manufactured by FRITSCH) and the components were stirred for 60 minutes at 25°C and a rotation speed of 300 rpm. Then, 7.0 g of $LiNi_{1/3}Co_{1/3}Mn_{1/3}O_2$ (NMC) was put into the container as the positive electrode active material, and similarly, the container was set in a planetary ball mill P-7, mixing was continued at 25°C and a rotation speed of 100 rpm for 5 minutes to prepare a composition for a positive electrode.

(Production of positive electrode sheet for solid state secondary battery)

Each of the compositions for a positive electrode obtained as described above was applied onto an aluminum foil (a positive electrode collector) having a thickness of 20 μm with a baker type applicator (product name: SA-201, manufactured by Tester Sangyo Co., Ltd.), heating was carried out at 100°C for 2 hours to dry (to remove the dispersion medium) the composition for a positive electrode. Then, using a heat press machine, the dried composition for a positive electrode was pressurized (10 MPa, 1 minute) at 25°C to produce each of positive electrode sheets for an all-solid state secondary battery, having a positive electrode active material layer having a film thickness of 80 μm.

Each of all-solid state secondary batteries (Nos. 120 to 137 and c101 to c109) was manufactured in the same manner as in the manufacturing of the all-solid state secondary battery (No. 119), except that in the manufacturing of the all-solid state secondary battery (No. 119), a negative electrode sheet for an all-solid state secondary battery, which has a solid electrolyte layer and is indicated by No. shown in the column of "Electrode active material layer" of Table 4 was used instead of the negative electrode sheet No. 143 for a secondary battery, which has a solid electrolyte layer.

<Evaluation 2: Low temperature ion conductivity measurement>

The ion conductivity of each of the manufactured all-solid state secondary batteries was measured. Specifically, the alternating-current impedance of each of the all-solid state secondary batteries was measured in a constant-temperature tank (0°C) using a 1255B FREQUENCY RESPONSE ANALYZER (product name, manufactured by SOLARTRON Analytical) at a voltage magnitude of 5 mV and a frequency of 1 MHz to 1 Hz. From the measurement result, the resistance of the sample for measuring ion conductivity in the layer thickness direction was determined, and the ion conductivity was determined by the calculation according to Expression (1).

$$\text{Expression (1): Ion conductivity } \sigma \text{ (mS/cm)} = 1{,}000 \times \text{sample layer thickness (cm)}/[\text{resistance } (\Omega) \times \text{sample area (cm}^2)]$$

In Expression (1), the sample layer thickness is a value obtained by measuring the thickness before placing the laminate 12 in the 2032-type coin case 11 and subtracting the thickness of the collector (the total layer thickness of the solid electrolyte layer and the electrode active material layer). The sample area is the area of the disk-shaped sheet having a diameter of 14.5 mm.

It was determined where the obtained ion conductivity σ was included in any of the following evaluation standards.

In this test, in a case where the evaluation standard is "E" or higher, the ion conductivity σ is the pass level.

- Evaluation standards -

A: 0.70 ≤ σ

B: 0.60 ≤ σ < 0.70

C: 0.50 ≤ σ < 0.60

D: 0.40 ≤ σ < 0.50

E: 0.30 ≤ σ < 0.40

F: 0.20 ≤ σ < 0.30

G: σ < 0.20

Further, as a result of carrying out a test in the same manner except that in <Evaluation 2: Low temperature ion conductivity measurement>, the temperature was changed from 0°C to 25°C, and the ion conductivity of all Examples was 0.50 mS/cm or more.

[Table 4]

| No. | Layer configuration | | Ion conductivity | Note |
|---|---|---|---|---|
| | Electrode active material layer (Sheet No.) | Solid electrolyte layer (Sheet No.) | | |
| 101 | 125 | 101 | E | Present invention |
| 102 | 126 | 103 | C | Present invention |
| 103 | 127 | 106 | C | Present invention |
| 104 | 128 | 107 | B | Present invention |
| 105 | 129 | 109 | A | Present invention |
| 106 | 130 | 111 | C | Present invention |
| 107 | 131 | 112 | C | Present invention |
| 108 | 132 | 113 | B | Present invention |
| 109 | 133 | 114 | B | Present invention |
| 110 | 134 | 115 | D | Present invention |
| 111 | 135 | 116 | D | Present invention |
| 112 | 136 | 117 | D | Present invention |
| 113 | 137 | 118 | C | Present invention |
| 114 | 138 | 119 | B | Present invention |
| 115 | 139 | 121 | C | Present invention |
| 116 | 140 | 122 | C | Present invention |
| 117 | 141 | 123 | C | Present invention |
| 118 | 142 | 124 | C | Present invention |
| 119 | 143 | 101 | E | Present invention |
| 120 | 144 | 103 | C | Present invention |
| 121 | 145 | 106 | C | Present invention |
| 122 | 146 | 107 | B | Present invention |
| 123 | 147 | 109 | A | Present invention |
| 124 | 148 | 111 | C | Present invention |

(continued)

| No. | Layer configuration | | Ion conductivity | Note |
|---|---|---|---|---|
| | Electrode active material layer (Sheet No.) | Solid electrolyte layer (Sheet No.) | | |
| 125 | 149 | 112 | C | Present invention |
| 126 | 150 | 113 | B | Present invention |
| 127 | 151 | 114 | B | Present invention |
| 128 | 152 | 115 | D | Present invention |
| 129 | 153 | 116 | D | Present invention |
| 130 | 154 | 117 | D | Present invention |
| 131 | 155 | 118 | C | Present invention |
| 132 | 156 | 119 | B | Present invention |
| 133 | 157 | 120 | E | Present invention |
| 134 | 158 | 121 | C | Present invention |
| 135 | 159 | 122 | C | Present invention |
| 136 | 160 | 123 | C | Present invention |
| 137 | 161 | 124 | C | Present invention |
| c101 | c21 | c11 | F | Comparative Example |
| c102 | c22 | c12 | F | Comparative Example |
| c103 | c23 | c13 | G | Comparative Example |
| c104 | c24 | c14 | F | Comparative Example |
| c105 | c25 | c15 | F | Comparative Example |
| c106 | c26 | c16 | G | Comparative Example |
| c107 | c27 | c17 | F | Comparative Example |
| c108 | c28 | c18 | F | Comparative Example |
| c109 | c29 | c19 | G | Comparative Example |

As revealed from Table 4, inorganic solid electrolyte-containing compositions that do not satisfy any of Expressions (1) to (3) defined in the present invention or the all-solid state secondary batteries of Nos. c101 to c109, which are prepared by using an inorganic solid electrolyte-containing composition prepared using a polymer binder other than the polyester, the vinyl polymer, and the (meth)acrylic polymer are inferior in ion conductivity at low temperature although they satisfy Expressions (1) to (3).

On the other hand, all the all-solid state secondary batteries of Nos. 101 to 137, which are produced by using the inorganic solid electrolyte-containing composition according to the embodiment of the present invention, have excellent ion conductivity in the normal temperature range of 25°C but also excellent ion conductivity in the low temperature range. In particular, as shown in Nos. 104, 105, 108, 109, 114, 122, 123, 126, 127, and 132, the ion conductivity at the low temperature range is further improved in a case of using a (meth)acrylic polymer having, at the main chain terminal,

a residue of at least one polymerization initiator of a chain transfer agent containing a sulfur atom or an organic peroxide polymerization initiator. Among the above, as shown Nos. 105 and 123, the ion conductivity in the low temperature range is further improved in a case of using a (meth)acrylic polymer having a branched structure.

In addition, as shown in Nos. 108, 109, 114, 126, 127, and 132, the ion conductivity in the low temperature range is further improved in a case of decreasing $\alpha$.

The present invention has been described together with the aspects of the present invention. However, the inventors of the present invention do not intend to limit the present invention in any part of the details of the description unless otherwise designated, and it is conceived that the present invention should be broadly construed without departing from the spirit and scope of the invention shown in the attached "WHAT IS CLAIMED IS".

This application claims priority based on JP2020-59085 filed in Japan on March 27, 2020, and JP2020-171567 filed in Japan on October 9, 2020, which are incorporated herein by reference as a part of the description of the present specification.

Explanation of References

1: negative electrode collector
2: negative electrode active material layer
3: solid electrolyte layer
4: positive electrode active material layer
5: positive electrode collector
6: operation portion
10: all-solid state secondary battery
11: 2032-type coin case
12: laminate for all-solid state secondary battery
13: coin-type all-solid state secondary battery
14; point corresponding to No. K-13 in Table 2-1
15; point corresponding to No. K-12 in Table 2-1
16; point corresponding to No. Kc14 in Table 2-4
17; point corresponding to No. Kc12 in Table 2-4
TP; test piece

## Claims

**1.** An inorganic solid electrolyte-containing composition comprising:

an inorganic solid electrolyte (A) having an ion conductivity of a metal belonging to Group 1 or Group 2 in the periodic table; and
a polymer binder (B),
wherein the polymer binder (B) contains at least one of polyester, a vinyl polymer, or a (meth)acrylic polymer, and a weight-average molecular weight and a content of the polymer binder (B) satisfy all relationships represented by the following Expressions (1) to (3),

$$\text{Expression (1) } 0.01 \leq \alpha \leq 0.8$$

$$\text{Expression (2) } Mw \geq 2{,}000$$

$$\text{Expression (3) } Mw \times \alpha \leq 9.3 \times 10^4$$

in the expressions, $\alpha$ represents a proportion (% by mass) of the content of the polymer binder (B) in 100% by mass of a total solid content contained in the inorganic solid electrolyte-containing composition, and Mw represents a weight-average molecular weight of the polymer binder (B).

**2.** The inorganic solid electrolyte-containing composition according to claim 1, wherein the polymer binder (B) contains at least one of a vinyl polymer or a (meth)acrylic polymer.

**3.** The inorganic solid electrolyte-containing composition according to claim 1 or 2, wherein a polymer that forms the polymer binder (B) contains a constitutional component having a hydrocarbon group having 14 or more carbon atoms, in a side chain.

**4.** The inorganic solid electrolyte-containing composition according to any one of claims 1 to 3, wherein the vinyl polymer and the (meth)acrylic polymer have a residue of at least one polymerization initiator of a chain transfer agent containing a sulfur atom or an organic peroxide polymerization initiator, at a main chain terminal of the polymer.

**5.** The inorganic solid electrolyte-containing composition according to any one of claims 1 to 4,

wherein the vinyl polymer and the (meth)acrylic polymer have a structure represented by Formula (S3) at a main chain terminal of a polymer,

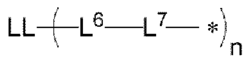

Formula (S3)

in the formula, n is an integer of 3 to 6,

LL represents an n-valent branched group,
$L^6$ represents a single bond or a divalent linking group,
$L^7$ represents an oxygen atom or a sulfur atom, and
* represents a bonding site to a polymer main chain.

**6.** The inorganic solid electrolyte-containing composition according to any one of claims 1 to 5, wherein the inorganic solid electrolyte (A) is a sulfide-based inorganic solid electrolyte.

**7.** The inorganic solid electrolyte-containing composition according to any one of claims 1 to 6, further comprising an active material (E).

**8.** A sheet for an all-solid state secondary battery, comprising a layer formed of the inorganic solid electrolyte-containing composition according to any one of claims 1 to 7.

**9.** An all-solid state secondary battery comprising:

a positive electrode active material layer;
a negative electrode active material layer; and
a solid electrolyte layer that is interposed between the positive electrode active material layer and the negative electrode active material layer,
wherein at least one layer of the positive electrode active material layer, the negative electrode active material layer, or the solid electrolyte layer is a layer formed of the inorganic solid electrolyte-containing composition according to any one of claims 1 to 7.

**10.** A manufacturing method for a sheet for an all-solid state secondary battery, the manufacturing method comprising carrying out coating with the inorganic solid electrolyte-containing composition according to any one of claims 1 to 7.

**11.** A manufacturing method for an all-solid state secondary battery, the manufacturing method comprising manufacturing an all-solid state secondary battery through the manufacturing method according to claim 10.

FIG. 1

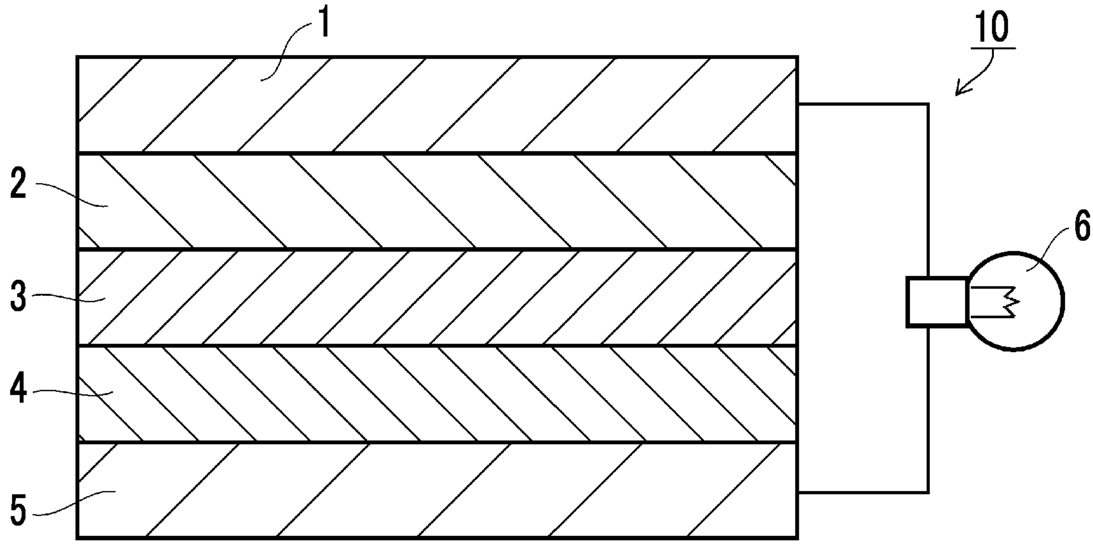


FIG. 2

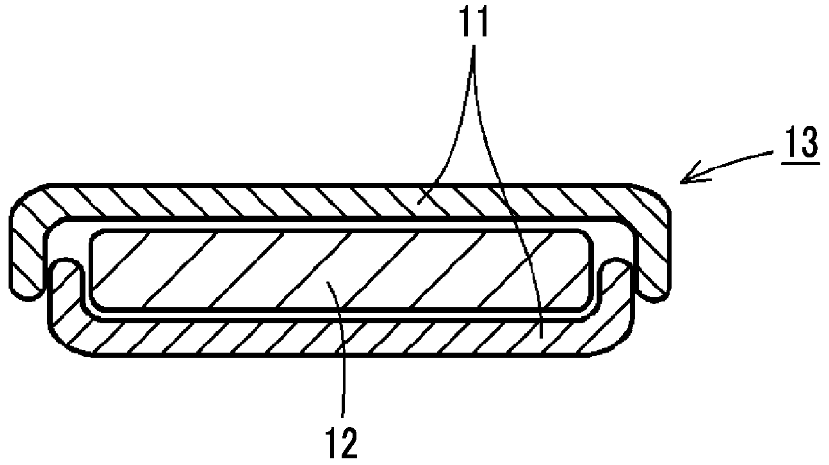

FIG. 3

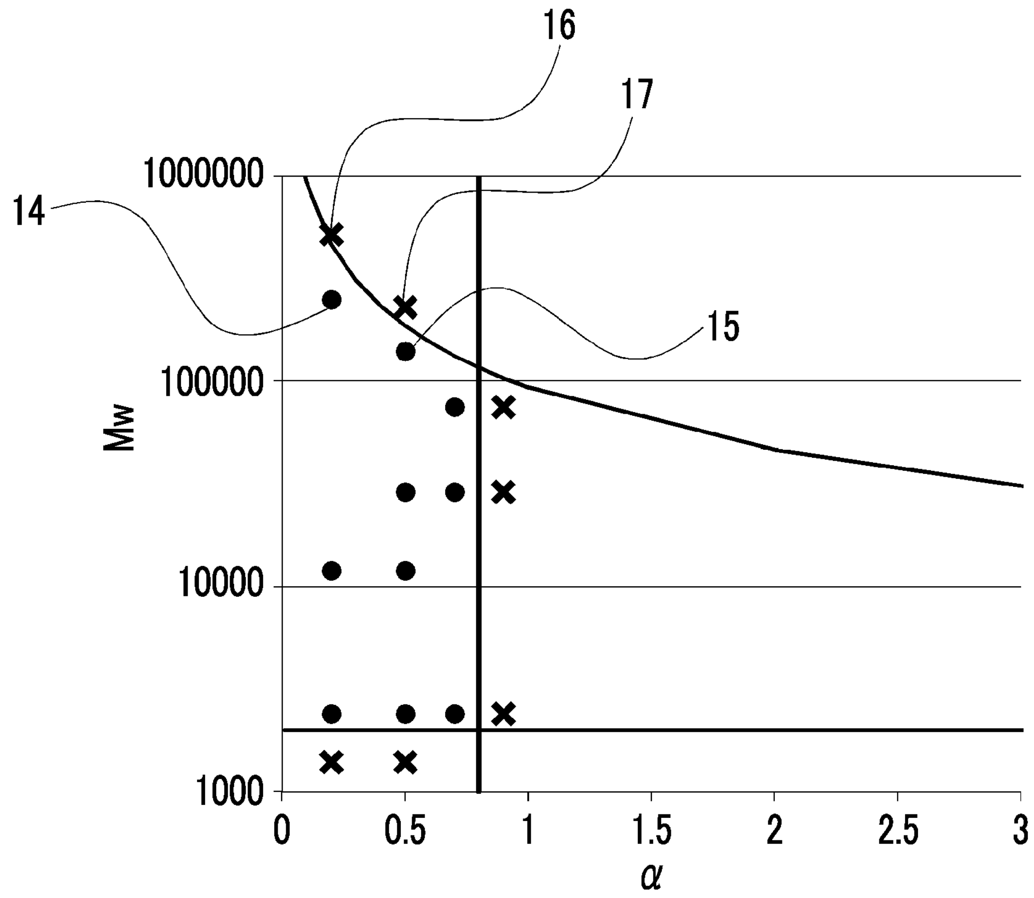
16
17
14
15
1000000
100000
10000
1000
Mw
0
0.5
1
1.5
2
2.5
3
α

FIG. 4

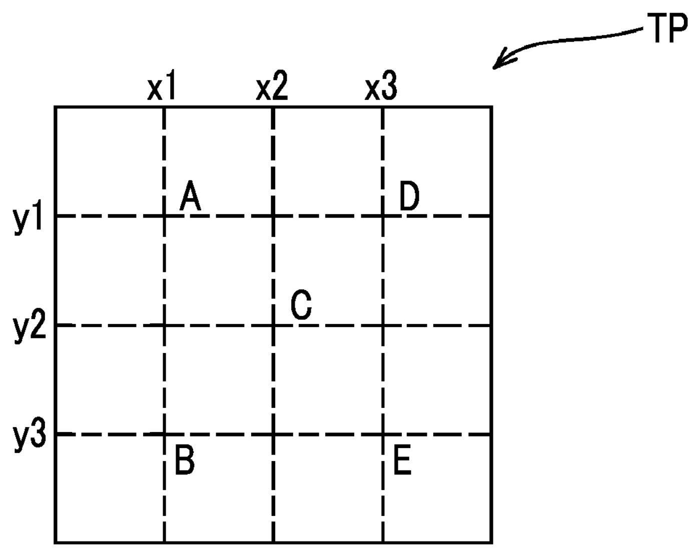
TP
x1
x2
x3
y1
y2
y3
A
D
C
B
E

**INTERNATIONAL SEARCH REPORT**

International application No. PCT/JP2021/012541

A. CLASSIFICATION OF SUBJECT MATTER

H01M 4/13(2010.01)i; H01M 4/139(2010.01)i; H01M 4/62(2006.01)i; H01M 10/052(2010.01)i; H01M 10/0562(2010.01)i; H01M 10/0585(2010.01)i; H01B 1/06(2006.01)i; H01B 1/10(2006.01)i

FI: H01M10/0562; H01M4/13; H01M4/62 Z; H01M4/139; H01M10/0585; H01M10/052; H01B1/06 A; H01B1/10

According to International Patent Classification (IPC) or to both national classification and IPC

B. FIELDS SEARCHED

Minimum documentation searched (classification system followed by classification symbols)

H01M4/13; H01M4/139; H01M4/62; H01M10/052; H01M10/0562; H01M10/0585; H01B1/06; H01B1/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2019/054191 A1 (FUJIFILM CORPORATION) 21 March 2019 (2019-03-21) | 1-11 |
| A | WO 2019/074074 A1 (FUJIFILM CORPORATION) 18 April 2019 (2019-04-18) | 1-11 |
| P, A | WO 2020/203882 A1 (TEIJIN LTD.) 08 October 2020 (2020-10-08) | 1-11 |

☐ Further documents are listed in the continuation of Box C.

☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 04 June 2021 (04.06.2021) | 15 June 2021 (15.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application no.
PCT/JP2021/012541

| Patent Documents referred in the Report | Publication Date | Patent Family | Publication Date |
|---|---|---|---|
| WO 2019/054191 A1 | 21 Mar. 2019 | US 2020/0212482 A1<br>KR 10-2020-0036918 A<br>CN 111066189 A | |
| WO 2019/074074 A1 | 18 Apr. 2019 | CN 111194492 A | |
| WO 2020/203882 A1 | 08 Oct. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019067523 A
- WO 2017018456 A
- WO 2018020827 A
- WO 2018151118 A
- JP 2015088486 A
- JP 62022066 A
- JP S6222066 A
- JP 2006856 A
- JP H26856 A
- JP 3045473 A
- JP H345473 A
- JP 5090844 A
- JP H590844 A
- JP 6004516 A
- JP H64516 A
- JP 2020059085 A
- JP 2020171567 A


### Non-patent literature cited in the description


- **T. OHTOMO ; A. HAYASHI ; M. TATSUMISAGO ; Y. TSUCHIDA ; S. HAMA ; K. KAWAMOTO.** *Journal of Power Source,* 2013, vol. 233, 231-235
- **A. HAYASHI ; S. HAMA ; H. MORIMOTO ; M. TATSUMISAGO ; T. MINAMI.** *Chem. Lett,* 2001, 872, , 873